(19) Europäisches Patentamt
European Patent Office
Office européen des brevets

(11) EP 2 051 249 A1

(12) EUROPEAN PATENT APPLICATION

(43) Date of publication:
**22.04.2009 Bulletin 2009/17**

(21) Application number: **08018183.7**

(22) Date of filing: **16.10.2008**

(51) Int Cl.:
***G11B 7/125*** *(2006.01)* ***G11B 7/135*** *(2006.01)*
***G11B 7/007*** *(2006.01)* *G11B 7/08 (2006.01)*

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **18.10.2007 JP 2007271769**

(71) Applicant: **Fujifilm Corporation**
**Tokyo 106-8620 (JP)**

(72) Inventors:
- **Yoshihisa, Usami**
**Kaisei-Machi**
**Ashigarakami-gun**
**Kanagawa (JP)**
- **Hiroshi Arai**
**577 Ushijima**
**Kaisei-Machi**
**Ashigarakami-gun**
**Kangawa (JP)**

(74) Representative: **HOFFMANN EITLE**
**Patent- und Rechtsanwälte**
**Arabellastrasse 4**
**81925 München (DE)**

# (54) Holgraphic recording and reading method and holographic recording and reading apparatus

(57) A method of holographically recording and reading information is disclosed. The method includes: recording information in a holographic recording medium by irradiating the holographic recording medium with a laser beam, wherein a transverse sectional area of the laser beam is divided into a central area for a signal beam and a ring-shaped area for a reference beam, the ring-shaped area surrounding the central area with a predetermined gap; and reading out the information from the holographic recording medium by irradiating the holographic recording medium with a ring-shaped readout beam having an area greater than that of the reference beam in at least one of directions inward of an inner diameter thereof and outward of an outer diameter thereof.

FIG. 2

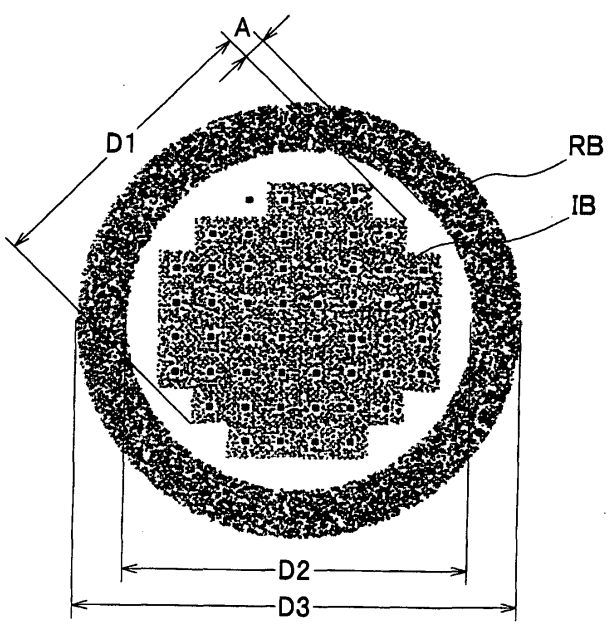


EP 2 051 249 A1

## Description

### BACKGROUND OF THE INVENTION

The present invention relates to a method of and an apparatus for holographically recording and reading information.

In recent years, an optical information recording apparatus using holographic technology (i.e., holographic recording apparatus) has been developed for recording information with high recording density. Holographic recording is carried out by intersecting a signal beam into which information is imprinted and a reference beam having the same wavelength with that of the signal beam in a recording layer of a recording medium, and storing a generated interference pattern in the recording medium. To read out the information recorded in the recording medium, the subject interference pattern is illuminated with a readout beam having the same wavelength and the same angle with those of the reference beam that is illuminated at the time of recording, so that a reconstructed signal beam that is identical with the signal beam is obtained from the interference pattern.

Unlike an optical recording method using a conventional bit recording such as on a compact disc (CD) and digital versatile disc (DVD), a holographic recording apparatus permits a large amount of information per recording spot, and therefore it is expected to increase reading/writing speeds. Further, due to delicate and sensitive positioning/angle selectivity of a hologram, a large amount of different information can be recorded in the same recording region by changing angles or positions of the beams irradiated by the recording apparatus so as to perform multiple recording. The storage capacity can be increased to a large extent by utilizing such characteristics of the hologram.

A so-called collinear method is generally known as a method of holographically recording information. In this collinear method, a signal beam and a reference beam travel on the same optical path; as seen in a transverse section of a laser beam, a center area of the laser beam is defined as the signal beam whereas a ring-shaped area surrounding the signal beam is defined as the reference beam.

However, at the time of holographic recording, the recording material reacts as the multiple recording proceeds, resulting in a gradual shrinkage of the recording material. Therefore, as more information is recorded in the recording layer, directions of the recorded interference patterns change, and hence, even if the readout beam is emitted with the same conditions as those of the reference beam at the time of recording, the quality of the reconstructed signal beam may deteriorate. In the case where information is holographically recorded by the collinear method, the deterioration of the reconstructed signal beam occurs at the edge of the reconstructed signal beam from the interference pattern.

In order to eliminate this drawback, it is conventionally necessary to restrict as low as possible a shrinkage of the recording material that is caused by illumination with a beam during the time of recording and fixing. For this reason, a proposal has been made to restrict the shrinkage ratio (shrinkage percentage) within 0.1 % by using a monomer with low polymerization shrinkage at recording and optimizing the additive amount of the monomer in the photopolymer. This is shown, for example, by "Collinear recording technology", Nikkei Electronics - Nikkei BP, Jan. 17, 2005, and also shown by Kimihiro Saito and Seiji Kobayashi, Analysis of Micro-Reflector 3-D optical disk recording, ODS2006-WA4.

In order to decrease the shrinkage ratio, for example, the amount of polymerizable monomer in the recording layer may be decreased. However, this is not preferable because the signal-to-noise ratio at the time of reading will deteriorate.

In view of the above disadvantage of the prior art, an object of the present invention is to decrease noise that occurs at the edge of the reconstructed signal beam, so as to improve the signal-to-noise ratio.

### SUMMARY OF THE INVENTION

According to one aspect of the present invention, there is provided a method of holographically recording and reading information. The method comprises the following steps: recording information in a holographic recording medium by irradiating the holographic recording medium with a laser beam, wherein a transverse sectional area of the laser beam is divided into a central area for a signal beam and a ring-shaped area for a reference beam, the ring-shaped area surrounding the central area with a predetermined gap; and reading out the information from the holographic recording medium by irradiating the holographic recording medium with a ring-shaped readout beam having an area greater than that of the reference beam in at least one of directions inward of an inner diameter thereof and outward of an outer diameter thereof.

In this so-called collinear-type holographic recording and reading method according to the present invention, at the time of reading out the information, the holographic recording medium is irradiated with the ring-shaped readout beam having an area greater than that of the reference beam in at least one of directions inward of an inner diameter thereof and outward of an outer diameter thereof.

Bragg condition on an interference pattern changes due to shrinkage of the recording layer, so that Bragg condition becomes different at the time recording information and at the time of reading out the information. Therefore,

when reading out the information, if the holographic recording medium is irradiated with a readout beam having the same inner and outer diameters as those of the reference beam, a noise will occur at the edge of a reconstructed signal beam. It is considered that the noise will occur because the amount of light that satisfies Bragg condition is insufficient to irradiate the interference pattern. According to the present invention, the lack of light that satisfies Bragg condition can be compensated by enlarging the ring-shaped area of the readout beam in directions inward of its inner diameter and/or outward of its outer diameter when compared with the reference beam. This can eliminate an occurrence of noise due to insufficient light irradiation.

In the aforementioned method, a width of the gap may be equal to or greater than 2% of the maximum diameter of the signal beam. Increasing the size of the gap between the signal beam and the reference beam at the time of recording enables the border between the signal beam and the reference beam to be more clearly defined. This can decrease noise at the edge of the reconstructed signal beam.

In the aforementioned method, a material used for the recording layer of the holographic recording medium may have a property such that an average refractive index lowers as irradiation with the signal beam and the reference beam continues.

Generally, the recording layer shrinks only in the direction of its thickness so that the direction (inclination) of the interference patterns changes. According to the present invention, the recording layer is formed by a material having a property such that the average refractive index lowers as irradiation with the signal beam and the reference beam continues. Therefore, even if the interference pattern is irradiated with a hologram readout beam at the time of reading out the information at the same angle as that of the reference beam, the readout beam can be considered optically as having the same conditions within the holographic recording medium as those of the reference beam emitted at the time of recording. This makes it possible to restrict deteriorated signal-to-noise ratio even if the readout beam is emitted at the same angle as the reference beam.

The term "average refractive index" does not indicate a local refractive index, but the average of the refractive indices over the whole system. Even if the refractive index is locally increased due to migration of a substance after irradiation with a beam, it may be said that the average refractive index lowers as long as the refractive index lowers as the average of the whole system.

The average refractive index of the recording layer may be measured by using a prism coupler or ellipsometry. The average refractive index can also be measured by arranging a recording material on one of optical paths of Michelson interferometer or Mach-Zehnder interferometer and irradiating the recording material with a beam of which the wavelength allows the recording material to be reacted, so that a physical shrinkage and a change in the average refractive index can be measured from a change in the length of the optical path.

In the aforementioned method, the readout beam may have a random dot pattern or a check pattern in its transverse section.

In the aforementioned method, a plural number of recordings may be performed in a superposed manner at an area of the holographic recording medium to record information in the holographic recording medium, and energy of the signal beam may be gradually increased at this superposed position as the number of recordings increases. Further, the energy of the signal beam used at a last-time recording may be more than one to ten times greater than that used at a first time recording.

In multiple recording where a plural number of recordings are performed in a superposed manner at an area of the recording layer, if the recording material in the recording layer has been reacted completely at an early stage of the multiple recording, the recording material becomes unable to be reacted at a later stage of the multiple recording. For this reason, the energy of the signal beam gradually increases as the number of recordings increases. According to the present invention, the energy of the signal beam is restricted at the last time recording to be not more than ten times as great as that at the first time recording. This makes it possible to keep the contrast ratio between the interference pattern to be recorded by the first time recording and other superposed interference patterns to be recorded by the subsequent recordings within an appropriate range, and thus to allow the information recorded by the first time recording to be read out from the holographic recording medium.

According to another aspect of the present invention, there is provided a holographic recording and reading apparatus, which records information in a recording layer of a holographic recording medium by irradiating the holographic recording medium with a signal beam and a reference beam, and reads out the information from the holographic recording medium by irradiating the holographic recording medium with a readout beam. The apparatus comprises: a laser device configured to emit a laser beam; an optical system configured to condense the laser beam in the recording layer; an information input device configured to form a pattern of light as information in a section of the laser beam; and a controller configured to control the laser device and the information input device. At a time of recording information in the holographic recording medium, the controller causes the information input device to form a pattern of light in a transverse sectional area of the laser beam such that the pattern of light is divided into a central area for a signal beam and a ring-shaped area for a reference beam. The ring-shaped area surrounds the central area with a predetermined gap. Further, at a time of reading out the information from the holographic recording medium, the controller causes the information input

device to form a pattern of light in a transverse sectional area of the laser beam such that the pattern of light consists of a ring-shaped readout beam having an area greater than that of the reference beam in at least one of directions inward of an inner diameter thereof and outward of an outer diameter thereof.

In this collinear-type holographic recording and reading apparatus according to the present invention, at the time of reading out the information, the holographic recording medium is irradiated with the ring-shaped readout beam of which, for example, an inner diameter is smaller than that of the reference beam.

Bragg condition on an interference pattern changes due to shrinkage of the recording layer, so that Bragg condition becomes different at the time recording information and at the time of reading the information. Therefore, when reading out the information, if the holographic recording medium is irradiated with a readout beam having the same inner diameter as that of the reference beam, a noise will occur at the edge of a reconstructed signal beam. It is considered that the noise will occur because the amount of light that satisfies Bragg condition is insufficient to irradiate the interference pattern. According to the present invention, the lack of light that satisfies Bragg condition can be compensated, for example, by reducing the inner diameter of the readout beam when compared with the reference beam. This can eliminate an occurrence of noise due to insufficient light irradiation.

In the aforementioned holographic recording and reading apparatus, a width of the gap may be equal to or greater than 2% of the maximum diameter of the signal beam.

In the aforementioned holographic recording and reading apparatus, the controller may cause the information input device to form the pattern of light for the readout beam as a random dot pattern or a check pattern.

Further, in the aforementioned holographic recording and reading apparatus, the controller may control the laser device such that a plural number of recordings are performed in a superposed manner at an area of the holographic recording medium to record information in the holographic recording medium, and that energy of the signal beam is gradually increased at this superposed position as the number of recordings increases, and further that the energy of the signal beam used at a last-time recording is more than one to ten times greater than that used at a first time recording.

According to the above methods and apparatuses for holographically recording and reading information, the lack of light that satisfies Bragg condition for reading out the information (interference pattern) can be compensated by reducing the inner diameter of the readout beam and/or by increasing the outer diameter of the readout beam when compared with the reference beam. This can decrease noise at the edge of the reconstructed signal beam, thereby improving signal-to-noise ratio at the time of reading.

## BRIEF DESCRIPTION OF THE DRAWINGS

Other objects and aspects of the present invention will become more apparent by describing in detail illustrative, non-limiting embodiments thereof with reference to the accompanying drawings, in which:

FIG. 1 shows the configuration of a holographic recording and reading apparatus, and an operation thereof at the time of recording information;
FIG. 2 shows an example of areas of a signal beam and a reference beam;
FIG. 3 is similar to FIG. 1, but shows the operation of the apparatus at the time of reading the information;
FIG. 4 shows an example of an area of a readout beam;
FIG. 5 is an enlarged view of FIG. 1 showing a part of diffracted light in an emphasized manner at a region where a DMD chip reflects a laser beam as a reference beam;
FIG. 6A shows a holographic recording medium and an interference pattern before shrinkage of the recording medium;
FIG. 6B shows a holographic recording medium and an interference pattern after shrinkage of the recording medium;
FIG. 7 is an enlarged view of FIG. 3 showing a part of diffracted light in an emphasized manner at a region where the DMD chip reflects a laser beam as a readout beam;
FIG. 8A shows a reference beam with a check pattern;
FIG. 8B is an enlarged view of part B of FIG. 8A; and
FIG. 9 is a view showing a recording area of the holographic recording medium according to one example.

## DETAILED DESCRIPTION OF THE INVENTION

With reference to the attached drawings, a holographic recording and reading method and a holographic recording and reading apparatus according to the present invention will be described.

A holographic recording and reading apparatus 1 is configured to holographically record information in a holographic recording medium 10 by irradiating the holographic recording medium 10 with a signal beam and a reference beam.

The configuration of the holographic recording medium 10 will be briefly described below.

The holographic recording medium 10 has a resin-made substrate 11, on which is provided a recording layer 12. The recording layer 12 is then coated with a protect layer 13, which has an appropriate thickness and substantially allows a laser beam used for recording or reading information to pass therethrough. The configuration of the holographic recording medium 10 is not limited to this specific configuration as long as the holographic recording medium 10 has the recording layer 12. In addition to the above layers, other layers such as a reflective layer, a servo layer for tracking servo control, and a selective reflective layer for selectively transmitting or reflecting laser beams in accordance with wavelengths of the laser beams may be provided where necessary.

The recording layer 12 consists of an optical recording composition which contains dye having a polymerizable group; the recording layer 12 consists of a so-called polymerizable monomer which undergoes polymerization and becomes higher polymer through irradiation with light. As described later on, the optical recording composition used for the recording layer 12 has a property such that an average refractive index lowers as irradiation with light continues.

As seen in FIG. 1, the holographic recording and reading apparatus 1 generates a signal beam IB and a reference beam RB by reflecting a laser beam LB that is emitted from a laser device 21 using a DMD chip 24 as an example of an information input device, and records information as an interference pattern S by condensing the signal beam IB and the reference beam RB into the recording layer 12. Also, the holographic recording and reading apparatus 1 irradiates the interference pattern S with a readout beam OB (see FIG. 3) that is substantially the same as the reference beam RB so as to generate a reconstructed signal beam PB equivalent to the signal beam IB, and then reads the information from the reconstructed signal beam PB.

For this reason, the holographic recording and reading apparatus 1 includes: a laser device 21; a collimating lens 22, a mirror 23, and a first object lens 25 which constitute an example of an optical system configured to direct a condensed laser beam to the recording layer; a DMD chip 24 as an example of an information input device configured to form a pattern of light in a section of the laser beam; a second object lens 26; a photodetector 27; a stage 28; and a controller 50.

The laser device 21 may be any known laser beam-emitting device. To perform recording in the holographic recording medium 10 with high recording density, it is preferable to use a short-wavelength laser; for example, a blue-violet laser having a wavelength of 405 nm.

The collimating lens 22 is a lens for converting the laser beam LB into a parallel pencil.

The mirror 23 is arranged to change the direction of the laser beam LB having passed through the collimating lens 22 to direct the DMD chip 24; the optical path of the laser beam LB from the collimating lens 22 is changed by the mirror 23 to direct the DMD chip 24.

The DMD chip 24 includes a plurality of tiny mirrors 24a arranged in a matrix manner, and a plurality of adjusting devices 24b each of which adjusts or changes the angle of a corresponding mirror 24a. The DMD chip 24 generates a signal beam IB and a reference beam RB with the mirrors 24a reflecting the laser beam coming from the mirror 23. In this embodiment, part of the mirrors 24a arranged around the outer periphery of the DMD chip 24 are oriented toward the first object lens 25 with a predetermined pattern so that a ring-shaped beam reflected by these mirrors 24a is used as a reference beam. Meanwhile, directions of the mirrors 24a arranged inside these peripherally-arranged mirrors 24a are appropriately adjusted based on data input from the controller 50 such that some of the mirrors 24a are oriented toward the first object lens 25 and the others to other directions. The beam reflected by these mirrors 24a which are adjusted at random directions inside the peripherally-arranged mirrors 24a is used as a signal beam. In this manner, the DMD chip 24 imprints optical information in a matrix manner into the cross-section of the signal beam IB.

The transverse sectional areas of the signal beam IB and the reference beam RB are shown in FIG. 2. As seen in the figure, an outer ring-shaped area is defined as a reference beam RB, and a central area substantially having a circular shape arranged inside the reference beam RB with a predetermined gap is defined as a signal beam IB. In FIG. 2, parts indicated by black are pixels by which the light beam is directed to the first object lens 25; these parts shine in light as viewed from the first object lens 25. Meanwhile, parts indicated by white are pixels by which the light beam is not directed to the first object lens 25; these parts do not shine in the light as viewed from the first object lens 25. In this example, the reference beam RB has a random pattern in the ring-shaped area shown in FIG. 2. To be more specific, the controller 50 controls the reference beam RB such that pixels shine at a random pattern in the ring-shaped area.

The first object lens 25 is a lens for condensing the signal beam IB, the reference beam RB, and the readout beam (see FIG. 4) that have been reflected by the DMD chip 24 in the recording layer 12 of the holographic recording medium 10.

The second object lens 26 is positioned opposite to the first object lens 25 with the holographic recording medium 10 interposed therebetween. The second object lens 26 is a lens for converting light that has been diffracted at the interference pattern S and passed through the holographic recording medium 10 into a parallel pencil.

The photodetector 27 is arranged on the optical path of light having passed through the second object lens 26 so as to detect a reconstructed signal beam PB that has passed through the second object lens 26. To be more specific, the photodetector 27 has light detecting elements such as CCDs (Charge-coupled Devices) arranged in a matrix manner. The photodetector 27 converts intensity of light that is received by each light-receiving pixel into an electric signal and

output the same to the controller 50.

The stage 28 supports the holographic recording medium 10. The stage 28 is movable to allow a relative movement of the holographic recording medium 10 with respect to the recording beam (i.e., the signal beam IB and the reference beam RB). A chuck and an electric motor used for rotatably supporting a CD or a DVD may be employed as the stage 28.

The controller 50 includes a CPU, a ROM, a RAM, etc. The controller 50 controls the laser device 21 and the DMD chip 24. The controller 50 is connected to an instruction device (not shown) for instructing the holographic recording and reading apparatus 1 to record information in the holographic recording medium 10; the instruction device may be a personal computer and an image recorder. In accordance with instructions from the instruction device, the controller 50 controls the DMD chip 24 and the laser device 21 to record information in the holographic recording medium 10. To be more specific, the controller 50 encodes the information to be recorded in the holographic recording medium 10 as an arrangement of the pixels associated with the area of the signal beam IB, and controls directions of the mirrors 24a in accordance with this arrangement of the pixels.

The controller 50 is also connected to the photodetector 27 so that the information is decoded from the pattern of the reconstructed signal beam PB that is detected by the photodetector 27 and the decoded information is outputted to the personal computer and the image recorder. Further, the controller 50 drives the stage 28 to change the recording position or the readout position of the holographic recording medium 10. This makes it possible to record information in the whole area of the holographic recording medium 10 or to read out the information from the whole area of the holographic recording medium 10.

In this preferred embodiment, the controller 50 changes the areas of the reference beam RB and the readout beam OB at the time of recording information in the holographic recording medium 10 and at the time of reading the information from the holographic recording medium 10.

As best seen in FIG. 2, at the time of recording information, the maximum diameter D 1 of the signal beam IB is set smaller than the inner diameter D2 of the ring-shaped reference beam RB. A predetermined gap is formed between the reference beam RB and the signal beam IB. Further, the reference beam RB is sized such that its outer diameter D3 is set greater than its inner diameter D2. However, the difference between the outer diameter D3 and the inner diameter D2 is relatively small, so that the width of the ring of the reference beam RB becomes relatively small. Meanwhile, as best seen in FIG. 4, at the time of reading out the information, the inner diameter D2' of the readout beam OB is set smaller than the inner diameter D2 of the reference beam RB, and the outer diameter D3' of the readout beam OB is set greater than the outer diameter D3 of the reference beam RB. The ring-shaped area of the readout beam OB is enlarged in directions inward of the inner diameter thereof and outward of the outer diameter thereof, so that the width of the readout beam OB is greater than that of the reference beam RB.

In order to create the reference beam RB and the readout beam OB as described above, the controller 50 previously stores data about the areas of the reference beam RB and the readout beam OB. The controller 50 calculates the arrangement of bright pixels to be arranged at random within these areas, and drives the adjusting devices 24b based on this arrangement of the bright pixels to thereby create the reference beam RB and the readout beam OB.

Referring to FIG. 4, the signal beam IB is shown in order to facilitate understanding of the size of the readout beam OB. However, when reading out the information (see FIG. 3), the signal beam IB is not included in the light that is reflected by the DMD chip 24.

The width A of the gap formed between the reference beam RB and the signal beam IB is equal to or greater than 2% of the maximum diameter D1 of the signal beam IB. To be more specific, the controller 50 stores the shape of the gap as the areas of the reference beam RB and the signal beam IB such that the width A of the gap is not less than 2% of the maximum diameter D 1 of the signal beam IB.

As a preferable range of the reference beam RB, given that the maximum diameter D 1 of the signal beam IB is 1, the inner diameter D2 of the reference beam RB at the time of recording information is preferably not less than 1.08, more preferably not less than 1.09, and most preferably not less than 1.095. By setting the width A of the gap to a greater value, it is possible to sufficiently separate the signal beam IB and the reference beam RB, so that noise can be decreased at the time of reading out the information.

Given that the maximum diameter D1 of the signal beam IB is 1, the outer diameter D3 of the reference beam RB is preferably not less than 1.3, more preferably not less than 1.35, and most preferably not less than 1.4.

The inner diameter D2' of the readout beam OB at the time of reading out the information is smaller than the inner diameter D2 of the reference beam RB preferably by 0.01 or more, more preferably by 0.015 or more, and most preferably by 0.02 or more. Given that the inner diameter D2 of the reference beam RB is 1.08, in the case where the inner diameter D2' of the readout beam OB is small than the inner diameter D2 of the reference beam RB by 0.01, the inner diameter D2' can be calculated as follows by the equation: $1.08 - 1.08 \times 0.01 = 1.0692$.

As described above, enlarging the ring-shaped area of the readout beam OB in a direction inward of its inner diameter allows the lack of light that satisfies Bragg condition at the interference patter S to be compensated. This can improve the signal-to-noise ratio at the time of reading out the information.

Further, the outer diameter D3' of the readout beam OB at the time of reading out the information is greater than the outer diameter D3 of the reference beam RB preferably 0.02 or more, more preferably by 0.03 or more, and most preferably by 0.004 or more. Enlarging the ring-shaped area of the readout beam OB in a direction outward of its outer diameter allows the lack of light that satisfies Bragg condition at the interference pattern S to be compensated. This can improve the signal-to-noise ratio at the time of reading out the information.

When recording information in the holographic recording medium 10, the controller 50 performs a so-called multiple recording in a conventional manner; the controller 50 performs a plural number of recordings in a superposed manner at an area of the holographic recording medium 10. In other words, the controller 50 controls the stage 28, the laser device 21, and the DMD chip 24 such that when the recording position of the interference pattern S is changed using the stage 28, the recording position for the next (second) interference pattern S is moved within the area of the former (first) interference pattern S that has been already recorded, thereby partly superposing the second interference pattern S within the area of the first interference pattern S.

During the multiple recording, the controller 50 controls such that the energy of the signal beam IB is gradually increased at this superposed position as the number of recordings increases. The energy of the signal beam IB is changed by adjusting the output of the laser device 21. Therefore, the energy of the reference beam RB is also changed in accordance with the change in the energy of the signal beam IB. At an early stage of the multiple recording where a large amount of an optical recording material remains in the recording layer 12, a sufficient optical contrast can be obtained with a small amount of optical energy. On the contrary, even at a late stage of the multiple recording where a small amount of the optical recording material remains in the recording layer 12, a sufficient optical contrast can be obtained with an increased amount of optical energy. The controller 50 controls the energy of the signal beam IB used for the multiple recording such that the energy of the signal beam IB used at the last-time recording is more than one to ten times greater than that used at the first time recording. As described above, the energy of the signal beam IB is restricted at the last time recording to be not more than ten times as great as that at the first time recording. This makes it possible to keep the contrast ratio between the interference pattern S to be recorded by the first time recording and other superposed interference patterns S to be recorded by the subsequent recordings within an appropriate range. Therefore, even after the multiple recording is completed, the contrast of the interference pattern S recorded by the first time recording can be sufficiently left.

Description will be given of the recording operation and the reading operation of the holographic recording and reading apparatus 1 for holographically recording and reading information.

When recording information using the holographic recording and reading apparatus 1, the controller 50 drives the stage 28 to move the holographic recording medium 10 such that the recording beam strikes the recording position of the holographic recording medium 10. Thereafter, the controller 50 causes the laser device 21 to emit a laser beam while adjusting angles of the mirrors 24a of the DMD chip 24 via the adjusting devices 24b, thereby creating the signal beam IB and the reference beam RB.

As described above, the signal beam IB and the reference beam RB are formed to define the central area and the ring-shaped area surrounding this central area, which are shown in FIG. 2, respectively. To be more specific, the controller 50 controls to drive the adjusting devices 24b of the DMD chip 24 such that directions of the mirrors 24a corresponding to the black-dotted parts as shown in FIG. 2 are adjusted to cause the laser beam LB emitted from the laser device 21 to be directed to the first object lens 25. In this instance, the controller 50 determines patterns of the signal beam IB and the reference beam RB in accordance with the previously stored data about the areas of the signal beam IB and the reference beam RB. Therefore, the difference (size A) between the inner diameter D2 of the reference beam RB and the maximum diameter D 1 of the signal beam IB can be set equal to or greater than 2% of the maximum diameter D1.

An interference pattern S is recorded in the recording layer 12 by irradiating the recording layer 12 with the signal beam IB and the reference beam RB. As best seen in FIG. 5, after the laser beam LB is reflected by a mirror 24a of the DMD chip 24 to create the reference beam RB, the laser beam directly goes into the first object lens 25. However, a part of the laser beam becomes diffracted light and travels in different directions. In FIG. 5, a part of this diffracted light is shown by the reference character RB'.

The diffracted light RB' interferes with the signal beam IB, and such interference affects the recording of the interference pattern S within the recording layer 12. Referring to FIG. 5 and other drawings, the interference pattern S is schematically illustrated to be tilted by specific angles for the sake of convenience. However, the signal beam IB and the reference beam RB, which pass through the first object lens 25 and go into the recording layer 12, are incident in the recording layer 12 from many different directions due to condensation of light by the lens 25. Therefore, the interference pattern S is actually created with various fringe patterns from many different directions being overlapped including a fringe pattern from the direction illustrated in the drawings, to thereby create a complex interference pattern.

As seen in FIG. 6A, the interference pattern S also has a component which is tilted with respect to the plane direction of the recording layer 12 (vertical direction of FIG. 6A), other than a component which is perpendicular to the plane direction of the recording layer 12. As seen in FIG. 6B, if the recording layer 12 shrinks during the recording of

the interference pattern S, the interference pattern S which is tilted in the recording layer changes such that the extension direction of its fringes becomes closer to the plane direction of the recording layer 12. This shrinkage also results in reduced interval of the fringes of the interference pattern S. According to these changes in angle of the interference pattern S and interval of the fringes, even if a laser beam having the same wavelength at the time of recording is used for reading out the information, the angle of the laser beam (readout beam OB) that satisfies Bragg reflection condition at the interference pattern S is changed.

As described above, because of the changes in angle and interval of the interference pattern S, even if the interference pattern S is irradiated with the readout beam OB having the same condition as that of the reference beam RB (i.e., the same pattern as shown in FIG. 2), a sufficient amount of light that satisfies Bragg reflection condition is not supplied to the interference pattern S. Accordingly, a noise occurs at the edge of the reconstructed signal beam PB; as already known in the art, the reconstructed signal beam PB ideally has the same sectional pattern of light as that of the signal beam IB).

According to this preferred embodiment, in order to overcome the above disadvantage, the readout beam OB has a smaller inner diameter D2' and a larger outer diameter D3' when compared with the reference beam RB. Referring to FIG. 7 in which diffracted light RB' of the reference beam RB and diffracted light OB' of the readout beam OB are illustrated in a superposed manner, the diffracted light OB' of the readout beam OB covers the whole range of the diffracted light RB' of the reference beam RB. Namely, the diffracted light OB' of the readout beam OB has an enlarged sectional pattern, and the ring-shaped sectional area thereof is enlarged in directions inward of its inner diameter and outward of its outer diameter. Therefore, even if the direction of the interference pattern S is changed due to shrinkage of the recording layer 12 and hence the angle of the light that satisfies Bragg condition at the interference pattern S is also changed accordingly, the readout beam OB and its diffracted beam OB' are incident on the interference pattern S in an extended angle range that is greater than the angle range of the reference beam RB and its diffracted beam RB', so that the amount of light corresponding to this extended angle range can compensate the lack of light that satisfies Bragg condition at the interference pattern S. This leads to an occurrence of sufficient diffraction (reflection) at the interference pattern S. Therefore, it is possible to decrease a noise which would otherwise occur at the edge of the conventional reconstructed signal beam PB.

According to this embodiment, because the ring-shaped sectional area of the readout beam OB is enlarged in directions inward of its inner diameter and outward of its outer diameter when compared with the area of the reference beam RB, it is possible to restrict an occurrence of noise at the reconstructed signal beam PB due to shrinkage of the recording layer 12 and to obtain a high signal-to-noise ratio at the reconstructed signal beam PB. It is to be noted that the readout beam OB may have a ring-shaped sectional area which is enlarged in a direction at least either inward of its inner diameter or outward of its outer diameter when compared with the reference beam RB. Whether the ring-shaped sectional area of the readout beam OB should be enlarged in its inner diametrical direction or in its outer diametrical direction depends on a change in the position of the interference pattern S due to shrinkage of the recording layer 12, a change in the average refractive index of the optical recording material in the recording layer 12, etc, so that it is preferable to determine through experiments in accordance with a holographic recording medium 10 to be used.

According to the holographic recording and reading apparatus 1, a plural number of recordings are performed in a superposed manner at an area of the holographic recording medium 10 to perform a multiple recording of information, and the energy of the signal beam IB is gradually increased as the number of recordings increases. Further, the energy of the signal beam IB is less than ten times at the last-time recording than at the first time recording. Therefore, even after the multiple recording is completed, the contrast of the interference pattern S recorded by the first time recording can be sufficiently left, and a favorable signal-to-noise ratio of the reconstructed signal beam PB can be obtained at the time of reading out the information.

In the above preferred embodiment, reference has been made to the fact that the signal-to-noise ratio of the reconstructed signal beam PB can be improved irrespective of what kind of materials is used for the recording layer 12. However, if a material used for the recording layer 12 has a property such that the average refractive index lowers as irradiation with light continues, the signal-to-noise ratio of the reconstructed signal beam PB can be improved further. This is because use of such optical recording composition for the recording layer 12 can optically compensate the change in angle of the interference pattern S resulting from shrinkage of the recording layer 12.

In the case where the average refractive index lowers as irradiation with light continues, the condition which can cause Bragg reflection at the interference pattern S is changed due to this decreased average refractive index. This can compensate the changes in angle and interval of the interference pattern S at the time of reading out the information.

In order to realize an appropriate compensation, it is preferable that the holographic recording medium 10 has the recording layer 12 consisting of an optical recording composition, which satisfies the following conditions:

Optical compensation rate C that is defined by $C = (1 - (n2 / n1)) / \alpha$ satisfies the following formula:

$$0.8 \leq C \leq 1.0$$

where $\alpha$ is a rate of thickness change of the recording layer before and after recording, that is, a shrinkage ratio, n1 is an average refractive index before recording, and n2 is an average refractive index after recording.

It should be noted that the shrinkage ratio $\alpha$ is a value that is obtained by the formula: $\alpha = (t1-t2)/t1$, where t1 is the thickness of the recording layer before recording, and t2 is the thickness of the recording layer after recording. Further, the average refractive index does not indicate a local refractive index, but the average of the refractive index over the whole system.

OPTICAL RECORDING COMPOSITION FOR RECORDING LAYER 12

The optical recording composition used for the recording layer 12 will be described below. The recording layer 12 is appropriately prepared from the following compositions such that the optical compensation rate C satisfies $0.8 \leq C \leq 1.0$. Some examples for preparing the optical recording composition will be described later in EXAMPLES. In order to provide the optical recording composition with a property such that the average refractive index lowers as irradiation with light continues, there are two options:

(1) A material with a property such that the average refractive index lowers as irradiation with light continues is selected as a polymerizable monomer; and
(2) Other than the polymerizable monomer, a material of which an absorption spectrum changes (i.e., to be discolored or to develop color) through irradiation with light is added.

<Polymerizable Monomer>

The optical recording composition used for the recording layer 12 preferably contains at least one kind of dye having a polymerizable group. Herein, the dye in this preferred embodiment indicates a compound which absorbs any of ultraviolet light, visible light, and infrared light in the range of wavelengths from 300 to 2,000 nm, more preferably, ultraviolet light or visible light in the range of wavelengths from 330 to 700 nm, and most preferably, ultraviolet light or visible light in the range of wavelengths from 350 to 600 nm. In these instances, the molar absorptivity in any of the above wavelength areas is preferably not less than 5,000, more preferably not less than 10,000, and most preferably not less than 20,000.

In general, a dye shows a high refractive index at wavelengths around the absorption peak wavelength ($\lambda$max) or longer, particularly a very high refractive index at wavelengths in the range from $\lambda$max to the wavelength 200 nm longer than $\lambda$max. Some dyes even show a refractive index higher than 2 and higher than 2.5. Preferably in the absorption spectrum, the dye having a polymerizable group has $\lambda$max that is 10 to 200 nm shorter than the wavelength of the hologram-reconstructing beam, and more preferably, 30 to 130 nm shorter than the wavelength of the hologram-reconstructing beam, and molar absorptivity $\varepsilon$ thereof is not less than 10,000, and more preferably not less than 20,000.

Molar absorptivity $\varepsilon$ of the dye at the wavelength of the hologram-reconstructing beam is not more than 100, more preferably 10, and most preferably 0.

The dye having a polymerizable group is not limited to those having a specific polymerizable monomer, and any polymerizable group may be properly selected depending on application. Preferred examples of the polymerizable group include radical polymerizable monomers, cationic polymerizable monomers, and anionic polymerizable monomers. Preferably, the polymerizable group may be radical polymerizable monomers or cationic polymerizable monomers, and most preferably, the polymerizable group may be radical polymerizable monomers. The polymerizable group may be radical polymerizable monomers having an ethylene unsaturated bond such as an acrylic group, a methacrylic group, a styryl group, and a vinyl group. Of these, an acrylic group and a methacrylic group are more preferable. Further, the polymerizable group may be cationic polymerizable monomers or anionic polymerizable monomers having any of an oxirane ring, an oxetane ring, a vinyl ether group, and an N-vinylcarbazole. Of these, an oxirane ring or an oxetane ring are more preferable. These monomers may be monofunctional or polyfunctional. Optical crosslinking reaction may also be utilized for the polymerization.

As preferred examples of the dye having a polymerizable group, the dye preferably includes cyanine dyes, squarilium cyanine dyes, styryl dyes, pyrilium dyes, melocyanine dyes, arylidene dyes, oxonol dyes, azlenium dyes, coumarine dyes, ketocoumarine dyes, styrylcoumarine dyes, pyrane dyes, xanthene dyes, thioxanthene dyes, phenothiazine dyes, phenoxazine dyes, phenazine dyes, phthalocyanine dyes, azaporphyrin dyes, porphyrin dyes, condensed aromatic dyes, perylene dyes, azomethine dyes, anthraquinone dyes, metal complex dyes, and azo dyes. More preferably, the dye includes cyanine dyes, squarilium cyanine dyes, styryl dyes, melocyanine dyes, arylidene dyes, oxonol

dyes, coumarine dyes, xanthene dyes, phenothiazine dyes, condensed aromatic dyes, and azo dyes. Most preferably, the dye includes cyanine dyes, melocyanine dyes, arylidene dyes, oxonol dyes, coumarine dyes, xanthene dyes, and azo dyes.

In addition to these dyes, dyes and dyestuffs disclosed in Sinya Ogawara, "Shikiso Handobukku (Handbook of Dyes)", Kodansha, 1986, Shinya Ogawara, "Kinosei Shikiso no Kagaku (Chemistry of Functional Dyes)", CMC, 1981, and Tadasaburo Ikemori, "Tokushu Kino Zairyo (Specially Functional Materials)", CMC, 1986 may be used as the dye according to the invention.

Preferred examples of the dye having a polymerizable group are shown in the following general formulae from C-1 to C-6.

C-1
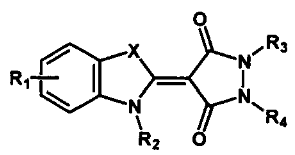

C-2
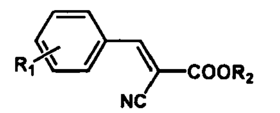

C-3
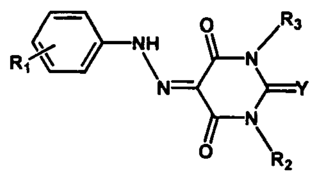

C-4
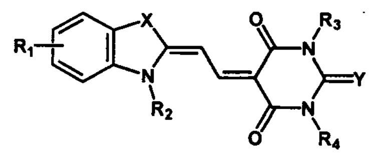

C-5
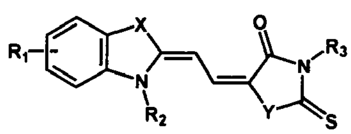

C-6
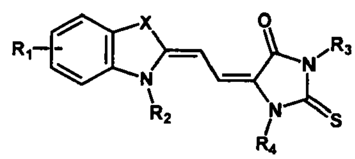

Wherein in the general formulae C-1 through C-6, $R_1$ represents any one of a hydrogen atom, a halogen atom, an alkyl group, an aryl group, a heterocyclic group, an alkoxy group, an aryloxy group, an alkoxycarbonyl group, an aryloxycarbonyl group, a carbamoyl group, a sulfamoyl group, an amino group, an acyloxy group, an acylamino group, a hydroxyl group, a carboxylic group, a sulfonic acid group. Of these groups, a hydrogen atom, a halogen atom, an alkyl group, an aryl group, a heterocyclic group, an alkoxy group, an aryloxy group, and an amino group are preferable. Further, a hydrogen atom, a halogen atom, an alkoxy group, an aryloxy group, and an amino group are more preferable, and a hydrogen atom, and a halogen atom are most preferable.

Wherein in the general formulae C-1 through C-6, $R_2$ to $R_4$ each represents any one of a hydrogen atom, an alkyl group, an aryl group, and a heterocyclic group. Of these, a hydrogen atom, an alkyl group, and an aryl group are preferable, and a hydrogen atom and an alkyl group are more preferable. An alkyl group, an aryl group, and a heterocyclic group represented by $R_1$ to $R_4$ may further have a substituent.

However, in the general formulae C-1, C-4, and C-6, at least one of $R_1$ to $R_4$ has a substituent having a polymerizable group. In the general formula C-2, at least one of $R_1$ and $R_2$ has a substituent having a polymerizable group. In the general formulae C-3 and C-5, at least one of $R_1$ to $R_3$ has a substituent having a polymerizable group.

X is a structure selected from O, S, Se, and $C(R_5)_2$, where $R_5$ is a hydrogen atom or an alkyl group, and specifically a methyl group is preferable. Y is selected from O, S, and Se.

An alkyl group represented by $R_1$ to $R_4$ preferably has 1-20 carbon atoms, more preferably 1-15 carbon atoms, and most preferably 1-10 carbon atoms. Examples of such an alkyl group include a methyl group, an ethyl group, an n-propyl group, an isopropyl group, an n-butyl group, an isobutyl group, a tert-butyl group, a pentyl group, a cyclopentyl group, a hexyl group, a cyclohexyl group, a heptyl group, an octyl group, a tert-octyl group, a 2-ethylhexyl group, a decyl group, a dodecyl group, and an octadecyl group. These groups may further have a substituent.

An aryl group represented by $R_1$ to $R_4$ preferably has 6-14 carbon atoms, more preferably 6-10 carbon atoms, and most preferably 6 carbon atoms. Examples of such an aryl group include a phenyl group, a naphtyl group, and an

anthranil group. These groups may further have a substituent.

A heterocyclic group represented by $R_1$ to $R_4$ preferably has 4-13 carbon atoms, more preferably 4-10 carbon atoms, and most preferably 4-5 carbon atoms. Examples of such a heterocyclic group include a pyridine group, a thiophene group, a pyrrole group, a pyrrolidine group, an imidazole group, an oxazole group, and a thiazole group. These groups may further have a substituent.

A halogen atom represented by $R_1$ includes, for example, an iodine atom, a bromine atom, a chlorine atom, and a fluorine atom. Of these atoms, an iodine atom and a bromine atom are preferable.

An alkoxy group represented by $R_1$ preferably has 1-20 carbon atoms, more preferably 1-10 carbon atoms, and most preferably 1-5 carbon atoms. Examples of such an alkoxy group include a methoxy group, an ethoxy group, a butoxy group, a propoxy group, a hexyloxy group, a cyclohexyloxy group, a heptyloxy group, an octyloxy group, a tert-octyloxy group, a 2-ethylhexyloxy group, a decyloxy group, a dodecyloxy group, and an octadecyloxy group. Such an alkoxy group may be substituted by a substituent.

An aryloxy group represented by $R_1$ preferably has 6-12 carbon atoms, and more preferably 6 carbon atoms. Examples of such an aryloxy group include a phenyloxy group, a naphthyloxy group, and an anthraniloxy group. Such an aryloxy group may be substituted by a substituent.

An alkoxycarbonyl group represented by $R_1$ preferably has 2-10 carbon atoms, more preferably 2-7 carbon atoms, and most preferably 2-5 carbon atoms. Examples of such an alkoxycarbonyl group include a methoxycarbonyl group, an ethoxycarbonyl group, a butoxycarbonyl group, a propoxycarbonyl group, a hexyloxycarbonyl group, a cyclohexyloxycarbonyl group, a heptyloxycarbonyl group, an octyloxycarbonyl group, a tert-octyloxycarbonyl group, and a 2-ethylhexyloxycarbonyl group. Such an alkoxycarbonyl group may be substituted by a substituent.

An aryloxycarbonyl group represented by $R_1$ preferably has 7-12 carbon atoms, and more preferably 7 carbon atoms. Examples of such an aryloxycarbonyl group include a phenyloxycarbonyl group, a naphthyloxycarbonyl group, and an anthraniloxycarbonyl group. Such an aryloxycarbonyl group may be substituted by a substituent.

A carbamoyl group represented by $R_1$ preferably has 1-12 carbon atoms, and more preferably 1-6 carbon atoms. Examples of such a carbamoyl group include a methylcarbamoyl group, an ethylcarbamoyl group, an n-propylcarbamoyl group, an isopropylcarbamoyl group, an n-butylcarbamoyl group, an isobutylcarbamoyl group, a tert-butylcarbamoyl group, and a phenylcarbamoyl group. Such a carbamoyl group may be substituted by a substituent.

A sulfamoyl group represented by $R_1$ preferably has 0-12 carbon atoms, and more preferably 1-6 carbon atoms. Examples of such a sulfamoyl group include a methylsulfamoyl group, an ethylsulfamoyl group, an n-propylsulfamoyl group, an isopropylsulfamoyl group, an n-butylsulfamoyl group, an isobutylsulfamoyl group, a tert-butylsulfamoyl group, and a phenylsulfamoyl group. Such a sulfamoyl group may be substituted by a substituent.

An amino group represented by $R_1$ preferably has 0-12 carbon atoms, and more preferably 1-6 carbon atoms. The amino group may be monosubstituted or disubstituted. Examples of such an amino group include a methylamino group, a dimethylamino group, an ethylamino group, a diethylamino group, an n-propylamino group, an isopropylamino group, an n-butylamino group, an isobutylamino group, a tert-butylamino group, a phenylamino group, and a diphenylamino group. Such an amino group may be substituted by a substituent.

An acyloxy group represented by $R_1$ preferably has 2-12 carbon atoms, and more preferably 2-6 carbon atoms. Examples of such an acyloxy group include a methylcarbonyloxy group, an ethylcarbonyloxy group, an n-propylcarbonyloxy group, an isopropylcarbonyloxy group, an n-butylcarbonyloxy group, an isobutylcarbonyloxy group, a tert-butylcarbonyloxy group, a phenylcarbonyloxy group, and an acryloyloxy group. Such an acyloxy group may be substituted by a substituent.

An acylamino group represented by $R_1$ preferably has 2-12 carbon atoms, and more preferably 2-6 carbon atoms. Examples of such an acylamino group include a methylcarbonylamino group, an ethylcarbonylamino group, an n-propylcarbonylamino group, an isopropylcarbonylamino group, an n-butylcarbonylamino group, an isobutylcarbonylamino group, a tert-butylcarbonylamino group, a phenylcarbonylamino group, and an acryloylamino group. Such an acylamino group may be substituted by a substituent.

Preferred examples of the substituent as described above include an alkyl group, a phenyl group, a halogen atom, an alkoxy group, an aryloxy group, an alkoxycarbonyl group, an aryloxycarbonyl group, an acyloxy group, an acylamino group, a carbamoyl group, a sulfamoyl group, a cyano group, a carboxylic acid group, a hydroxyl group, a sulfonic acid group, and heterocyclic group. Of these groups, a phenyl group, a halogen atom, an alkoxy group, an aryloxy group, an alkoxycarbonyl group, an aryloxycarbonyl group, an acyloxy group, an acylamino group, a carbamoyl group, a cyano group, and heterocyclic group are preferable, and a halogen atom, an alkoxy group, an aryloxy group, an alkoxycarbonyl group, an acyloxy group, and an acylamino group are more preferable, and further, a phenyl group, a halogen atom, an alkoxy group, an aryloxy group, and an alkoxycarbonyl group are most preferable.

Preferred examples of the polymerizable group to be substituted at $R_1$ to $R_4$ are shown in the following general formulae from P-1 to P-3:

P-1
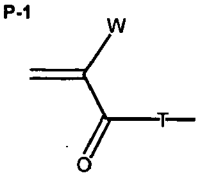
P-2
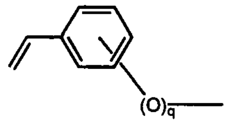
P-3
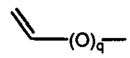

Wherein in the general formulae from P-1 to P-3, W represents a hydrogen atom or a methyl group, T represents -O- or $-NR_8-$, $R_8$ represents a hydrogen atom or an alkyl group, and q represents an integer of 0 or 1.

An alkyl group represented by $R_8$ preferably has 1-5 carbon atoms, more preferably 1-2 carbon atoms, and most preferably 1 carbon atom. Examples of such an alkyl group include a methyl group, and an ethyl group. These groups may further have a substituent.

Preferred examples of this substituent include an alkyl group, a phenyl group, a halogen atom, an alkoxy group, an aryloxy group, an alkoxycarbonyl group, an acyloxy group, an acylamino group, a carbamoyl group, a cyano group, a carboxylic acid group, a sulfonic acid group, a sulfamoyl group, a sulfurylamide group, an oxycarbonyl group, and a heterocyclic group. Of these groups, an alkoxy group, an acyloxy group, and an acylamino group are more preferable, and an acyloxy group and an acylamino group are most preferable.

In the above general formulae from P-1 to P-3, polymerizable groups represented by P-1 and P-2 are more preferable, and a polymerizable group represented by P-1 is most preferable. Specifically, an acryloyloxy group, a methacryloyloxy group, an N-acryloylamino group, and an N-acryloyl-N-alkylamino group are preferable. If the above polymerizable group is a substituent represented by the general formula P-1, polymerization may be formed swiftly.

As a preferred example of the substituents represented by $R_1$ to $R_4$ in the general formula C-1, each of $R_1$, $R_3$, and $R_4$ is a hydrogen atom or an alkyl group, $R_2$ is an alkyl group having a polymerizable group as a substituent, and X is O or S. More preferably, $R_1$, $R_3$, and $R_4$ are hydrogen atoms, $R_2$ is an alkyl group having a polymerizable group as a substituent, and X is S.

As a preferred example of the substituents represented by $R_1$ to $R_2$ in the general formula C-2, $R_1$ is an alkyl group having a polymerizable group as a substituent, and $R_2$ is an alkyl group or an aryl group. More preferably, $R_1$ is an alkyl group having a polymerizable group as a substituent, and $R_2$ is an alkyl group.

As a preferred example of the substituents represented by $R_1$ to $R_4$ in the general formula C-3, each of $R_1$, $R_2$, and $R_3$ is an unsubstituted alkyl group or an alkyl group having a polymerizable group as a substituent, and Y is O or S. More preferably, each of $R_1$ and $R_2$ is an unsubstituted alkyl group, $R_3$ is an alkyl group having a polymerizable group as a substituent, and Y is O.

As a preferred example of the substituents represented by $R_1$ to $R_4$ in the general formula C-4, $R_1$ is a hydrogen atom or an alkyl group, one of $R_2$ and $R_3$ is an alkyl group having a polymerizable group as a substituent, $R_4$ is an alkyl group, X is S, O or $C(Me)_2$, and Y is S or O. More preferably, $R_1$ is a hydrogen atom, one of $R_2$ and $R_3$ is an alkyl group having a polymerizable group as a substituent, $R_4$ is an alkyl group, X is O or $C(Me)_2$, and Y is S or O. Most preferably, $R_1$ is a hydrogen atom, $R_2$ is an alkyl group having a polymerizable group as a substituent, each of $R_3$ and $R_4$ is an alkyl group, X is $C(Me)_2$, and Y is O.

As a preferred example of the substituents represented by $R_1$ to $R_3$ in the general formula C-5, $R_1$ is a hydrogen atom or an alkyl group, $R_2$ is an alkyl group having a polymerizable group as a substituent, X is S, O or $C(Me)_2$, and Y is O or S. More preferably, R1 is a hydrogen atom, $R_2$ is an alkyl group having a polymerizable group as a substituent, X is O or $C(Me)_2$, and Y is S.

As a preferred example of the substituents represented by $R_1$ to $R_4$ in the general formula C-6, each of $R_1$, $R_3$, and $R_4$ is a hydrogen atom or an alkyl group, $R_4$ is an alkyl group having a polymerizable group as a substituent, and X is O or S. More preferably, each of $R_1$, $R_3$, and $R_4$ is a hydrogen atom, $R_4$ is an alkyl group having a polymerizable group as a substituent, and X is S.

In the general formulae from C-1 to C-6, C-2, C-4, C-5, and C-6 are preferable. Further, C-4 and C-5 are more preferable, and C-4 is the most preferable.

Specific examples of the dye having a polymerizable group will be shown below. However, the present invention is not limited to these specific examples. It should be noted that one or more kinds of these monomers may be used in combination.

DM-1

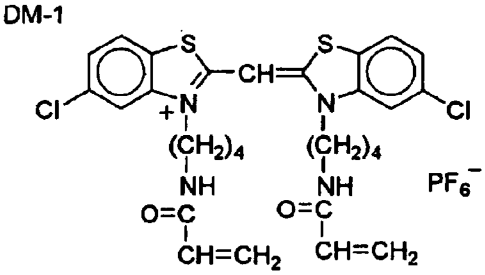

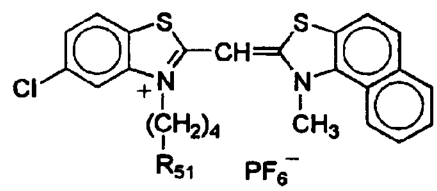

| | $R_{51}$ |
|---|---|
| DM-2 | $-NHCOCH=CH_2$ |
| DM-3 | 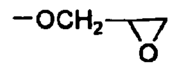 |
| DM-4 | $-OCH=CH_2$ |

DM-5

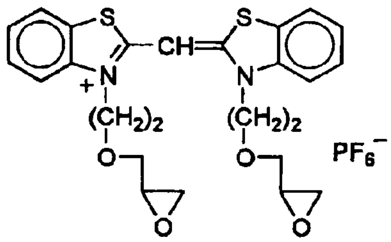

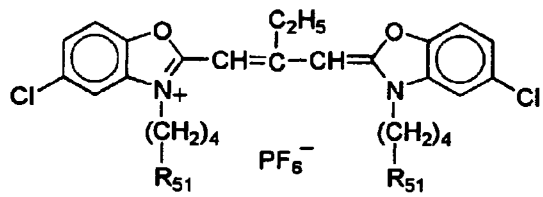

| | $R_{51}$ |
|---|---|
| DM-6 | 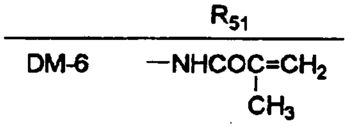 |
| DM-7 | 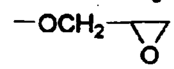 |

DM-8

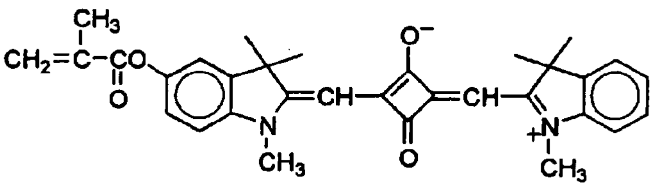

DM-9

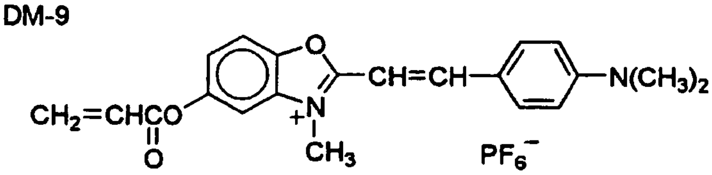

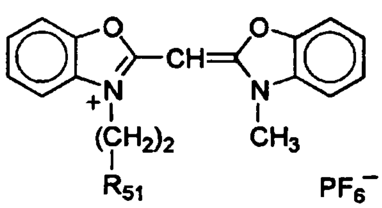

| | $R_{51}$ |
|---|---|
| DM-10 | 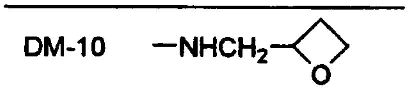 |
| DM-11 | 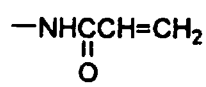 |

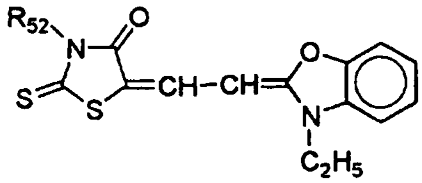

| | $R_{52}$ |
|---|---|
| DM-12 | $-CH=CH_2$ |
| DM-13 | 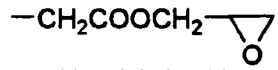 |
| DM-14 | 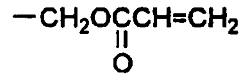 |

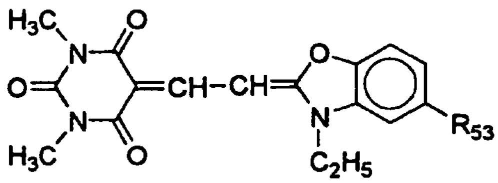

| | $R_{53}$ |
|---|---|
| DM-15 | 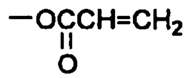 |
| DM-16 | 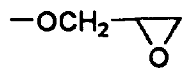 |
| DM-17 | 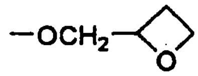 |

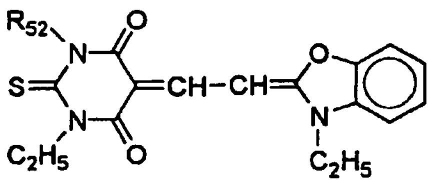

| | $R_{52}$ |
|---|---|
| DM-18 | $-CH=CH_2$ |
| DM-19 | 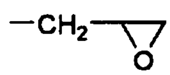 |

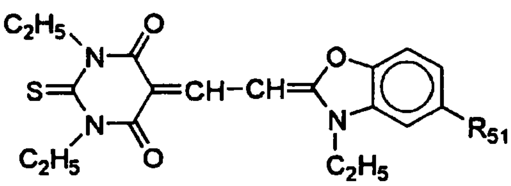

| | $R_{51}$ |
|---|---|
| DM-20 | 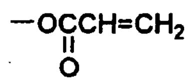 |
| DM-21 | 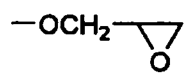 |

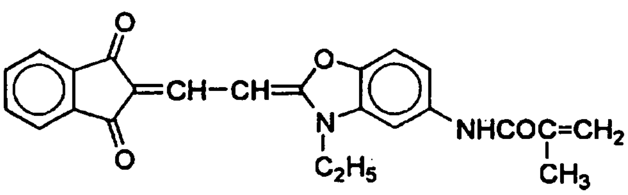

DM-22

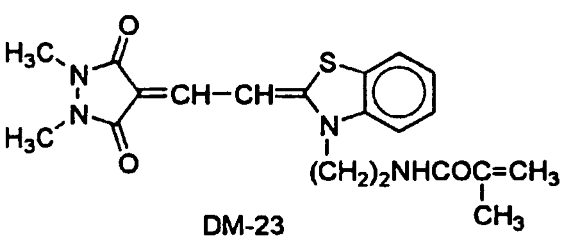

DM-23

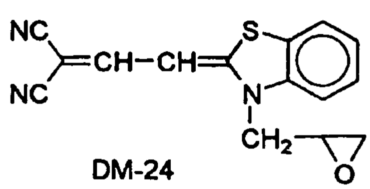

DM-24

DM-25

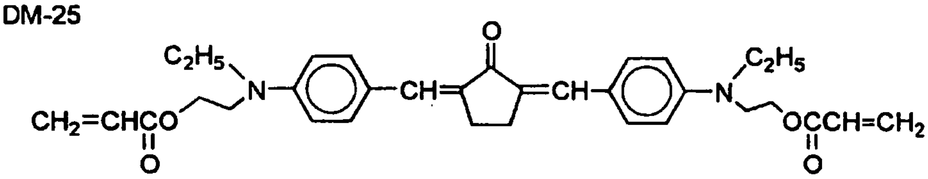

DM-26

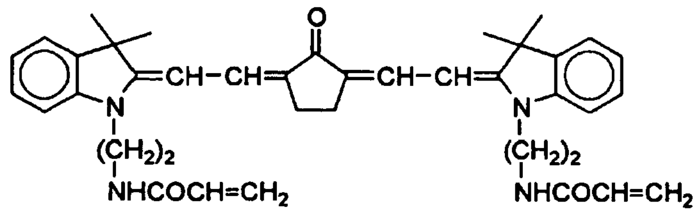

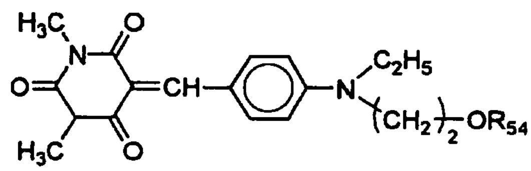

| | $R_{54}$ |
|---|---|
| DM-27 | 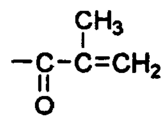 |
| DM-28 | 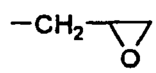 |
| DM-29 | 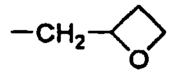 |

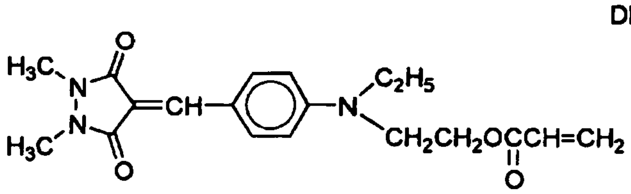

DM-30

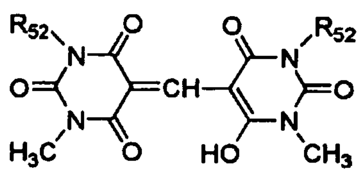

| | $R_{52}$ |
|---|---|
| DM-31 | $-CH=CH_2$ |
| DM-32 | 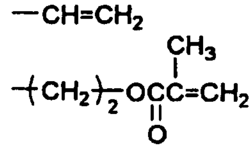 |
| DM-33 | 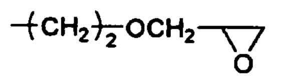 |
| DM-34 | 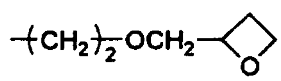 |

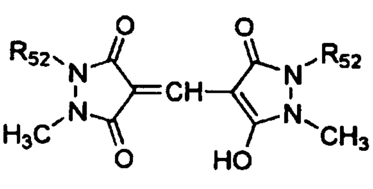

| | $R_{52}$ |
|---|---|
| DM-35 | $-CH=CH_2$ |
| DM-36 | 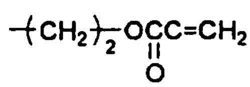 |
| DM-37 | 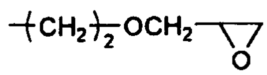 |

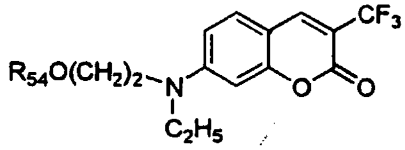

| | $R_{54}$ |
|---|---|
| DM-38 | 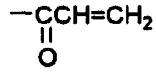 |
| DM-39 | 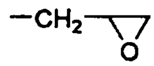 |
| DM-40 | $-CH=CH_2$ |

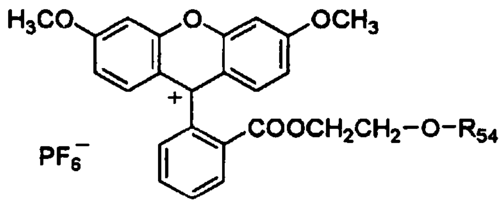

| | $R_{54}$ |
|---|---|
| DM-41 | 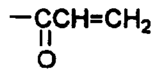 |
| DM-42 | 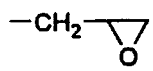 |

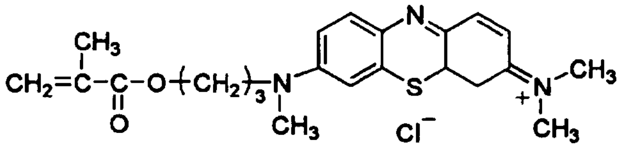

DM-43

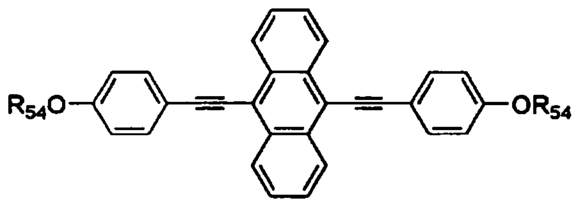

| | $R_{54}$ |
|---|---|
| DM-44 | 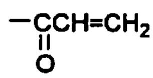 |
| DM-45 | 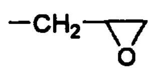 |

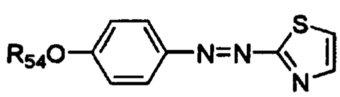

| | $R_{54}$ |
|---|---|
| DM-46 | 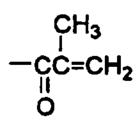 |
| DM-47 | 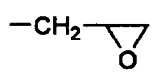 |
| DM-48 | $-CH=CH_2$ |

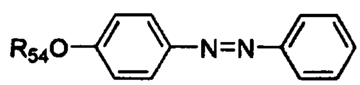

| | $R_{54}$ |
|---|---|
| DM-49 | 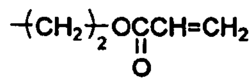 |
| DM-50 | 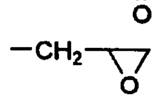 |

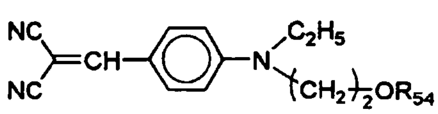

| | $R_{54}$ |
|---|---|
| DM-51 | 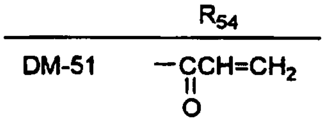 |
| DM-52 | 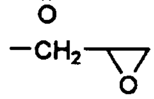 |

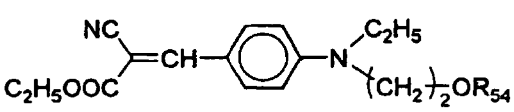

| | $R_{54}$ |
|---|---|
| DM-53 | 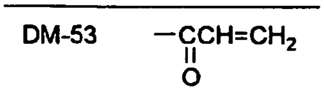 |
| DM-54 | 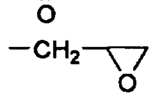 |

DM-55

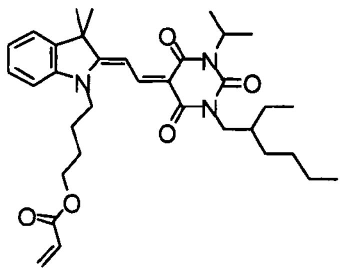

DM-56

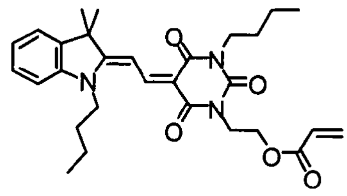

DM-57

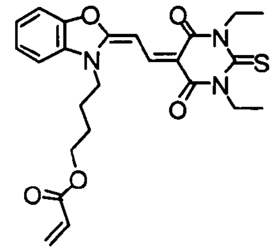

DM-58

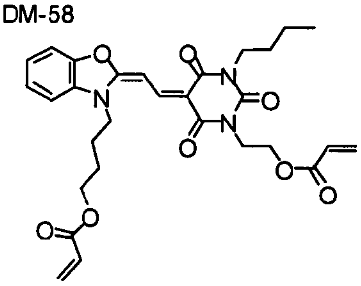

DM-59

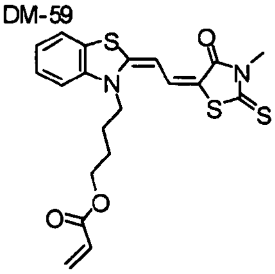

DM-60

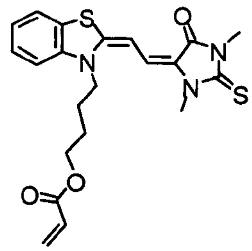

DM-61

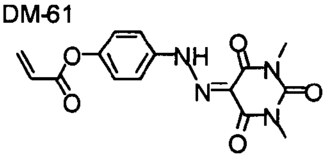

DM-62

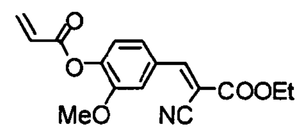

DM-63

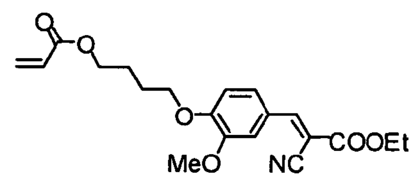

DM-64

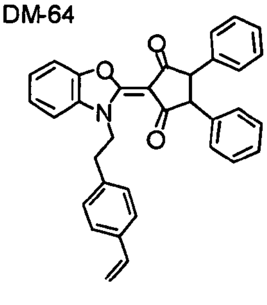

DM-65

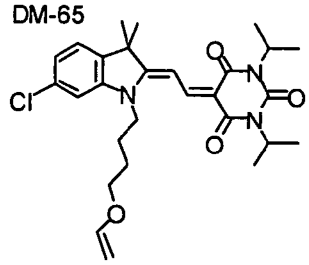

The content of the dye having a polymerizable group within the optical recording composition is preferably 1-40 mass %, and more preferably 3-30 mass %. If the content is less than 1 mass %, the sensitivity of the recording layer 12 may be lowered. On the contrary, if the content is more than 40 mass %, the multiple recording property will deteriorate.

<Other Polymerizable Monomers>

Other than the dye having a polymerizable group, the optical recording composition in the recording layer 12 may contain other polymerizable monomers where necessary. The polymerizable monomer may be properly selected depending on the application; for example, the polymerizable monomer may be radical polymerizable monomers having an unsaturated bond such as an acrylic group and a methacrylic group or cationic polymerizable monomers having an ether structure such as an epoxy ring and an oxetane ring. These monomers may be monofunctional or polyfunctional. Optical crosslinking reaction may also be utilized for the polymerization.

Examples of the radical polymerizable monomer include acryloyl morpholine, phenoxyethylacrylate, isobornylacrylate, 2-hydroxypropylacrylate, 2-ethylhexylacrylate, 1,6-hexanediol diacrylate, tripropyleneglycol diacrylate, neopentylglycol PO modified diacrylate, 1,9-nonandiol diacrylate, hydroxylpivalic acid neopentylglycoldiacrylate, EO modified bisphenol A diacrylate, polyethyleneglycol diacrylate, di(urethane-acrylate) oligomer, pentaerythritol triacrylate, pentaerythritol tetraacrylate, pentaerythritol hexaacrylate, EO modified glycerol triacrylate, trimethylolpropane triacrylate, EO modified trimethylolpropane triacrylate, 2-naphtho-1-oxyethylacrylate, 2-carbazoyl-9-ylethylacrylate, (trimethylsilyloxy)dimethylsilyl propylacrylate, vinyl-1-naphthoate, N-vinylcarbazol, 2,4,6-tribromophenylacrylate, pentabromophenylacrylate, phenylthioethylacrylate and tetrahydrofurfurylacrylate.

Examples of the cationic polymerizable monomer include bisphenol A epoxy resins, phenolnovolac epoxy resins, glycerol triglycidylether, 1,6-hexaneglycidylether, vinyltrimethoxysilane, 4-vinylphenyl trimethoxysilane, γ-methacryloxy propyltriethoxysilane and compounds expressed by formulae (M1) to (M6) in Japanese Laid-open Patent Publication No. 2007-119731, the disclosure of which is herein incorporated by reference in its entirety. It should be noted that one or more kinds of these monomers may be used in combination.

If other polymerizable monomers are used, the content of these polymerizable monomers within the optical recording composition is preferably 1-40 mass %, and more preferably 1-20 mass %, based on the solid content in the total polymerizable monomers. In this preferred embodiment, the radical polymerizable monomer is particularly preferable.

<Color Forming Compound or Discolorable Compound>

Preferably, the optical recording composition contains at least one kind of color forming compound or discolorable compound, which develops or loses color through the optical recording exposure or in the process of fixation. The color forming compound may be a compound which shows a reaction such that in the region of ultraviolet light, visible light, and infrared light having wavelengths of 200-2000 nm, either the absorption peak wavelength $\lambda_{max}$ becomes longer in the absorption spectrum or the molar absorptivity ε becomes larger in the absorption spectrum, and more preferably, both reactions occur in the compound. It is preferable that the color forming reaction occurs in the range of wavelengths from 200 to 900 nm, and more preferably in the range of wavelengths from 300 to 600 nm.

If a color forming reaction proceeds in the optical recording composition, it is preferable that the optical recording composition contains at least one kind of color forming compound, of which an absorption peak wavelength $\lambda_{max}$ increases or the molar absorptivity ε increases from the original state and which can turn out to be a colored material having no absorption in the wavelength of the hologram-reconstructing beam. The color forming reaction by the color forming compound proceeds in accordance with a thermal reaction or a photoreaction. In the case of the photoreaction, a color may be developed by a direct excitation which is induced by light irradiation of the color forming compound and/or the color may be developed using electron transfer or energy transfer from the excited state of the sensitizing dye that is created when the sensitizing dye is irradiated with light.

It is preferable that the optical recording composition has little or no absorption in the wavelength of the hologram-reconstructing beam during the readout from the recording medium.

Therefore, when the color forming compound turns out to be a colored material, it is preferable to be a colored material having no absorption in the wavelength of the hologram-reconstructing beam but having absorption in the wavelength range shorter than the wavelength of the hologram-reconstructing beam. To be more specific, it is preferable that it is a colored material having the absorption maximum in the range between the wavelength of the hologram-reconstructing beam and the wavelength 200 nm shorter than that of the hologram-reconstructing beam, and more preferably in the range between the wavelength of the hologram-reconstructing beam and the wavelength 150 nm shorter than that of the hologram-reconstructing beam. The sensitizing dye preferably decomposes during the optical recording or the subsequent fixing to lose its absorption and sensitizing capacity.

The sensitizing dye preferably absorbs any one of ultraviolet light, visible light and infrared light in the range of wavelengths from 200 to 2,000 nm, and more preferably ultraviolet light or visible light in the range of wavelengths from 300 to 700 nm, to produce the excited state.

Preferred examples of the sensitizing dye include cyanine dyes, squarilium cyanine dyes, styryl dyes, pyrilium dyes, melocyanine dyes, benzylidene dyes, oxonol dyes, azlenium dyes, coumarine dyes, ketocoumarine dyes, styrylcoumarine dyes, pyrane dyes, xanthene dyes, thioxanthene dyes, phenothiazine dyes, phenoxazine dyes, phenazine dyes, phthalocyanine dyes, azaporphyrine dyes, porphyrine dyes, condensed aromatic dyes, perylene dyes, azomethine dyes, anthraquinone dyes, metal complex dyes, and metalocene dyes. Of these sensitizing dyes, cyanine dyes, squarilium cyanine dyes, pyrilium dyes, melocyanine dyes, oxonol dyes, coumarine dyes, ketocoumarine dyes, styrylcoumarine dyes, pyrane dyes, xanthene dyes, thioxanthene dyes, condensed aromatic dyes, metal complex dyes, and metalocene dyes are more preferable, and cyanine dyes, melocyanine dyes, oxonol dyes, metal complex dyes, and metalocene dyes are most preferable. $R_u$ complex dyes are particularly preferable as the metal complex dyes, and ferrocene dyes are particularly preferable as the metalocene dyes.

In addition to these sensitizing dyes, dyes and dyestuffs disclosed in Sinya Ogawara, "Shikiso Handobukku (Handbook of Dyes)", Kodansha, 1986, Shinya Ogawara, "Kinosei Shikiso no Kagaku (Chemistry of Functional Dyes)",

CMC, 1981, and Tadasaburo Ikemori, "Tokushu Kino Zairyo (Specially Functional Materials)", CMC, 1986 may be used as sensitizing dye of the invention. The sensitizing dye to be used in the invention is not limited to these examples. Any dye or dyestuff may be used so far as it absorbs light in the visible range. These sensitizing dyes may be selected such that they are adapted for the wavelength of the laser beam from the light source depending on the purpose. Two or more sensitizing dyes may be used in combination depending on the purpose.

In the case where the optical recording composition is used as the hologram recording material, since the hologram recording material needs to be used in the form of a sufficiently thick film and the film has to transmit most of the recording beam, the molar absorptivity of the sensitizing dye at the wavelength of the holographic exposure is preferably reduced to maximize the added amount of the sensitizing dye for the purpose of enhancing sensitivity. The molar absorptivity of the sensitizing dye at the wavelength of the holographic exposure is preferably in the range not smaller than 1 and not greater than 10,000, more preferably not smaller than 1 and not greater than 5,000, even more preferably not smaller than 5 and not greater than 2,500, and most preferably not smaller than 10 and not greater than 1,000.

The transmissivity of the hologram-recording beam with respect to the hologram recording material is preferably from 10 to 99%, more preferably from 20 to 95%, even more preferably from 30 to 90%, and most preferably from 40 to 85%, in view of diffraction efficiency, sensitivity and recording density (multiplicity of recording). To this end, the molar absorptivity of the sensitizing dye at the recording wavelength and the molarity of the sensitizing dye to be added are preferably adjusted in accordance with the film thickness of the hologram recording material. The absorption peak wavelength $\lambda_{max}$ of the sensitizing dye is preferably shorter than the wavelength of the recording beam or the fixing beam, and more preferably in the range between the wavelength of the recording beam and the wavelength 100 nm shorter than that of the recording beam (or in the range between the wavelength of the fixing beam and the wavelength 100 nm shorter than that of the fixing beam).

Specific examples of the sensitizing dye will be described below. However, the present invention is not limited to these dyes.

< Cyanine dyes >

S-1

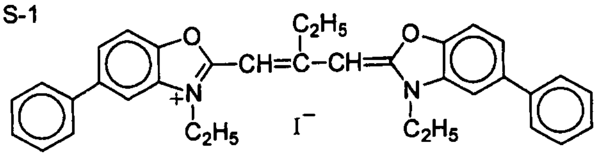

S-2

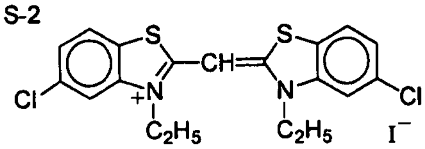

S-3

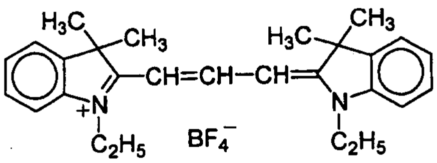

S-4

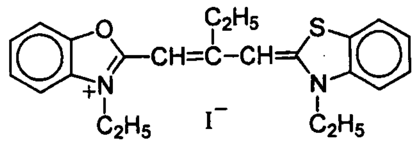

S-5

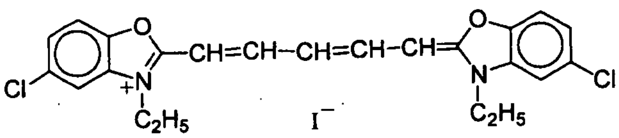

S-6

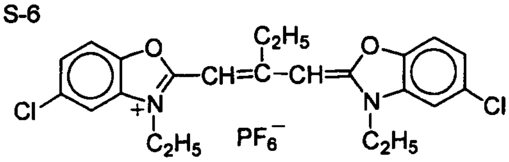

S-7

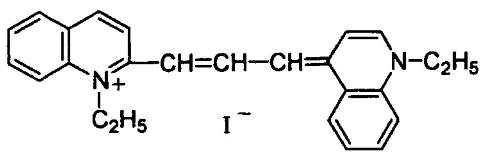

S-8

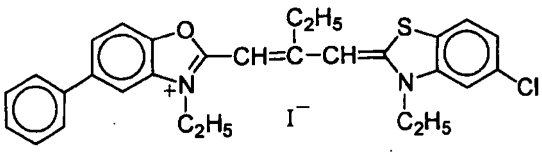

S-9

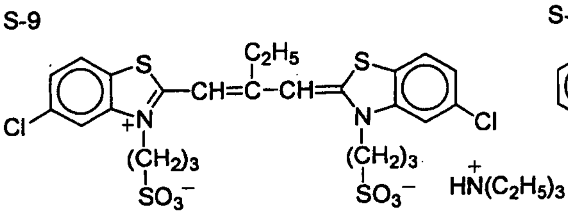

S-10

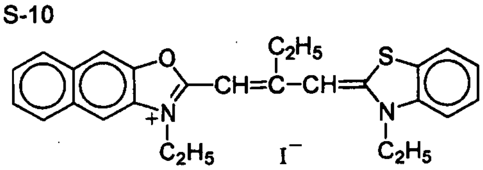

S-11

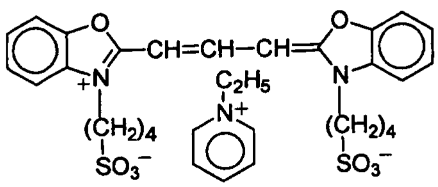

< Squarilium cyanine dyes >

S-12

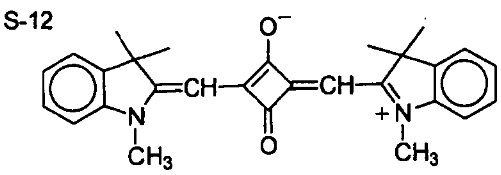

S-13

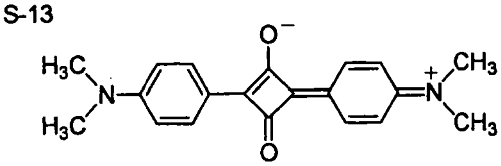

< Styryl dyes >

S-14

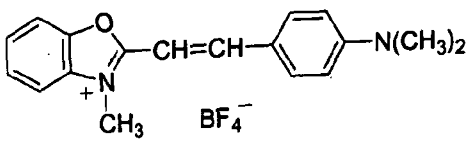

S-15

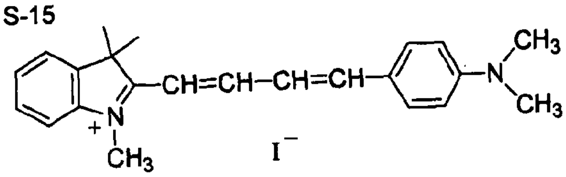

< Pyrilium dyes >

S-16

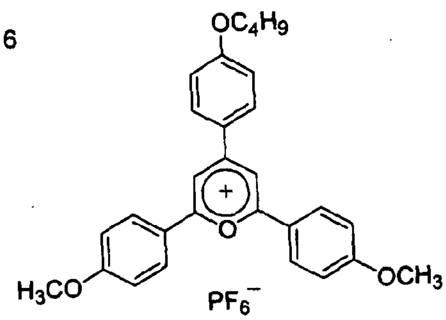

S-17

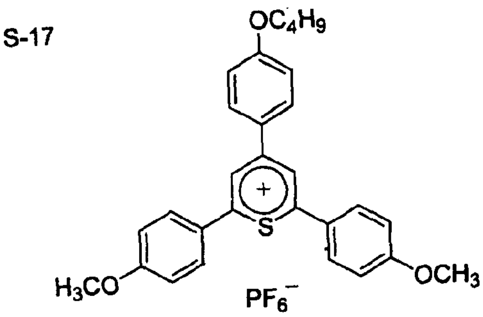

< Melocyanine dyes >

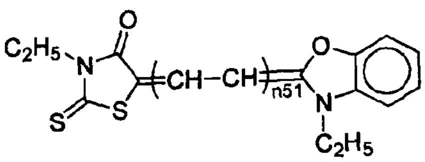

| | n51 |
|---|---|
| S-18 | 0 |
| S-19 | 1 |
| S-20 | 2 |

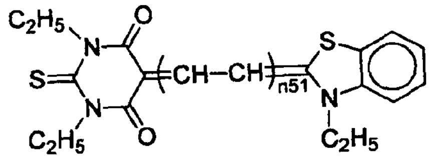

| | n51 |
|---|---|
| S-23 | 1 |
| S-24 | 2 |

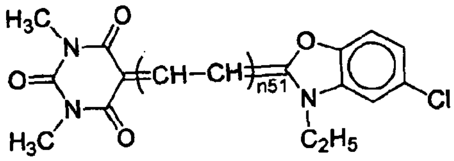

| | n51 |
|---|---|
| S-21 | 1 |
| S-22 | 2 |

$Q_{51}$=CH−CH=$Q_{52}$

| | $Q_{51}$ | $Q_{52}$ | | $Q_{51}$ | $Q_{52}$ |
|---|---|---|---|---|---|
| S-25 | 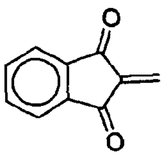 | 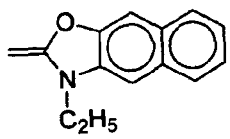 | S-26 | 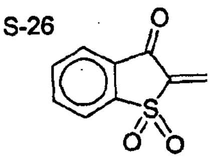 | 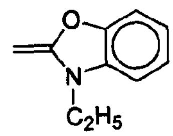 |
| S-27 | 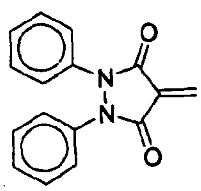 | 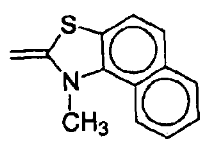 | S-28 | 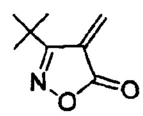 | 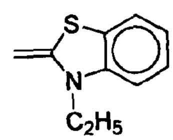 |
| S-29 | 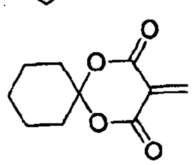 | 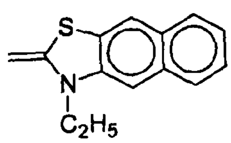 | | | |

< Cont. from Melocyanine dyes >

S-30

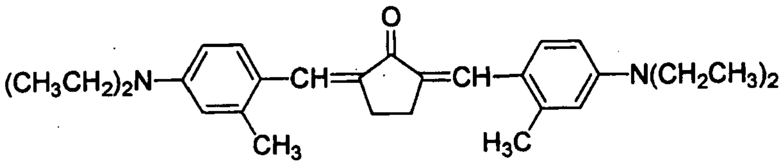

S-31

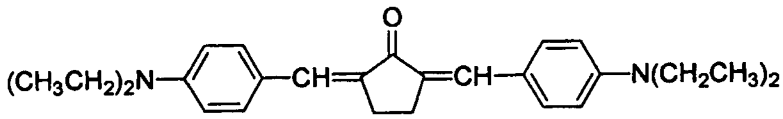

S-32

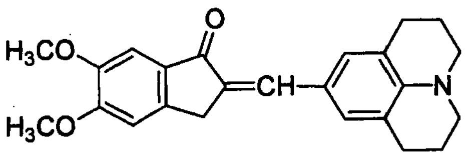

S-33

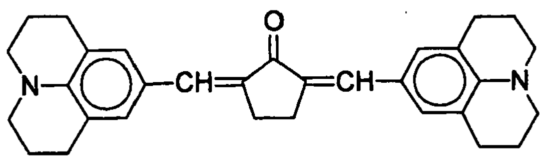

S-34

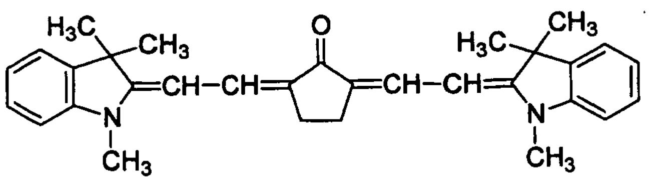

S-35

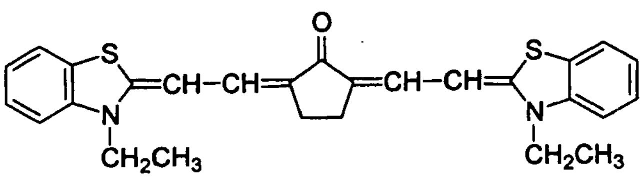

S-36

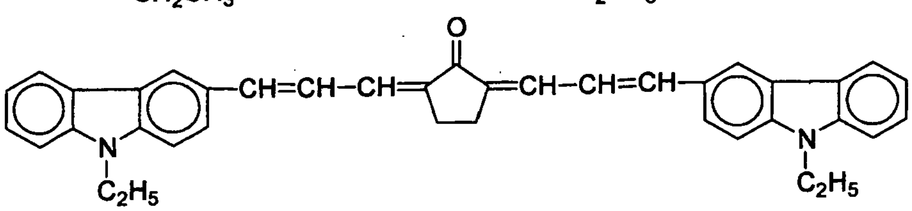

< Arylidene dyes >

S-37 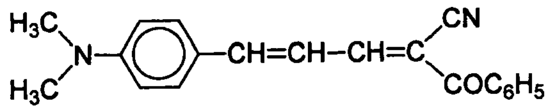

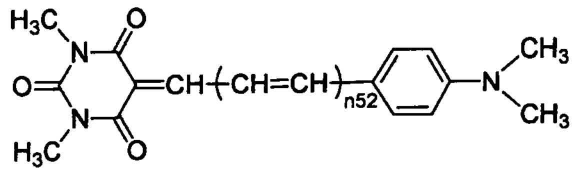

| | n52 |
|---|---|
| S-38 | 0 |
| S-39 | 1 |

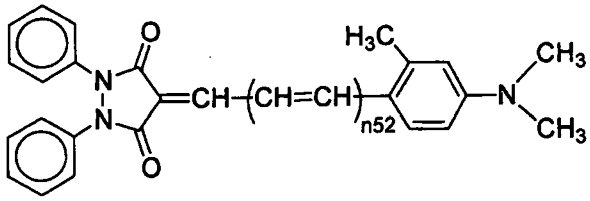

| | n52 |
|---|---|
| S-40 | 0 |
| S-41 | 1 |

< Oxonol dyes >

$Q_{52}=CH-(CH=CH)_{n53}-Q_{53}$   Cl

| | $Q_{52}$ | $Q_{53}$ | $n_{53}$ | Cl |
|---|---|---|---|---|
| S-42 | 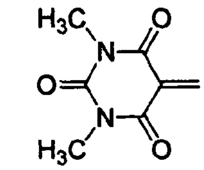 | 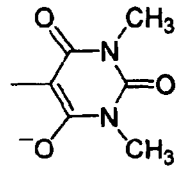 | 2 | $H^+$ |
| S-43 | 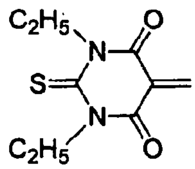 | 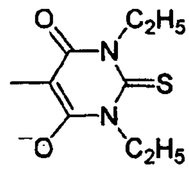 | 1 | 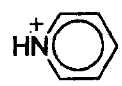 |
| S-44 | 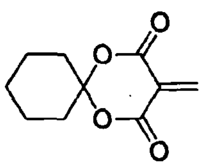 | 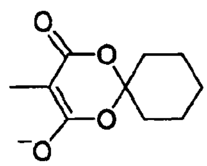 | 2 | $H^+$ |
| S-45 | 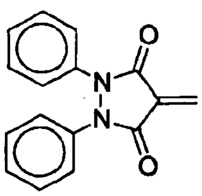 | 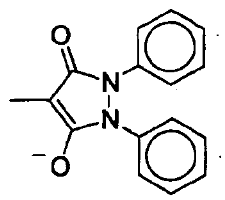 | 1 | $H^+$ |
| S-46 | 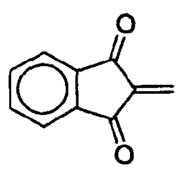 | 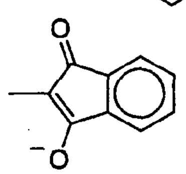 | 1 | $H\overset{+}{N}(C_2H_5)_3$ |

< Azlenium dyes >

S-47

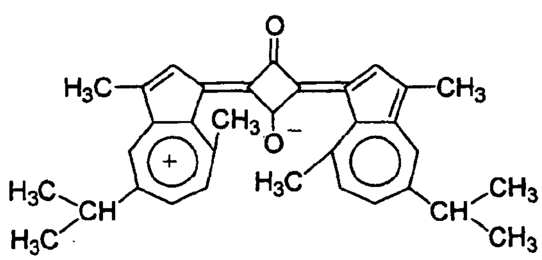

< Coumarine dyes >

S-48

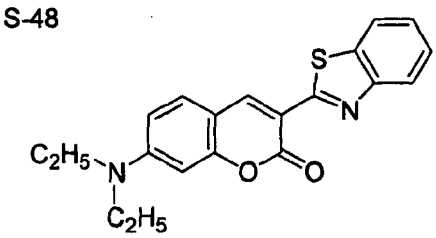

S-49

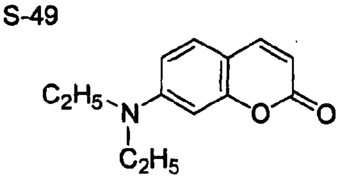

< Ketocoumarine dyes >

S-50

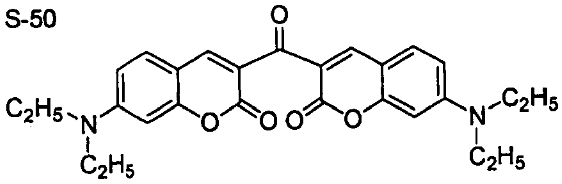

S-51

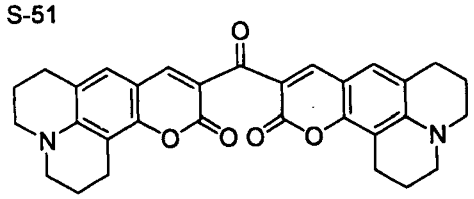

< Styrylcoumarine dyes >

S-52

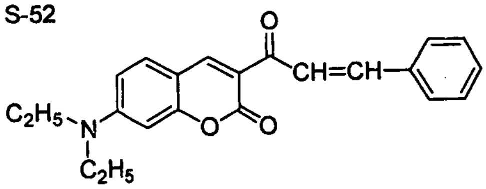

S-53

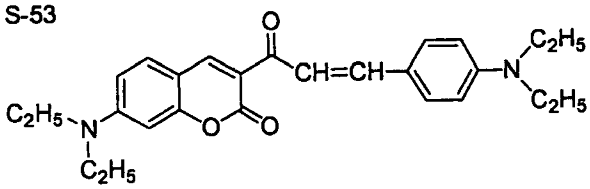

< Pyrane dyes >

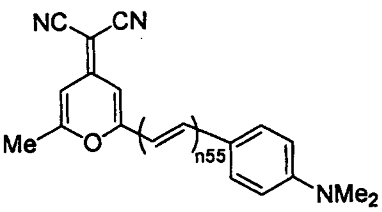

| | n55 |
|---|---|
| S-54 | 1 |
| S-55 | 2 |
| S-56 | 3 |

< Xanthene dyes >

S-57

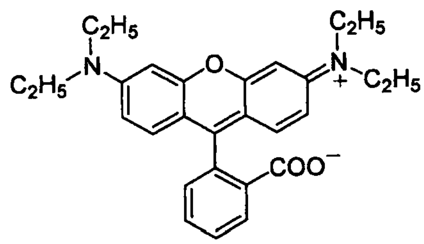

S-58

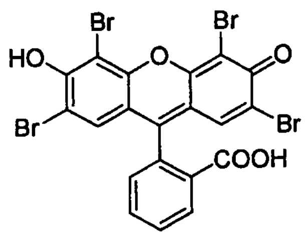

< Thioxanthene dyes >

S-59

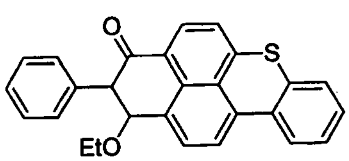

< Phenothiazine dyes >

S-60

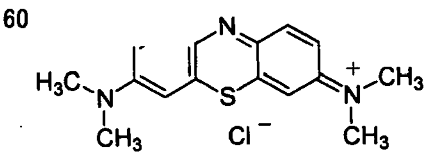

< Phenoxazine dyes >

S-61

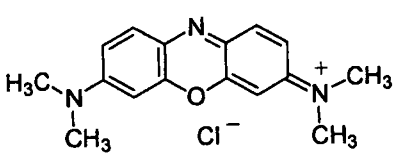

< Phenazine dyes >

S-62

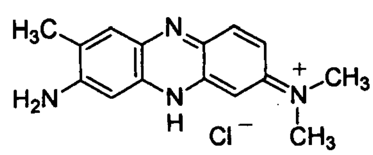

< Phthalocyanine dyes >

S-63

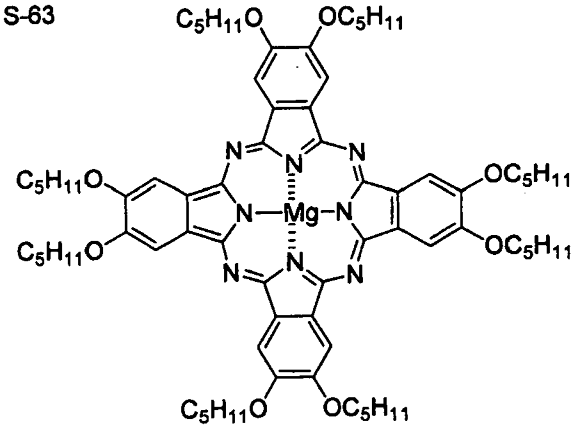

< Azaporphyrine dyes >

S-64

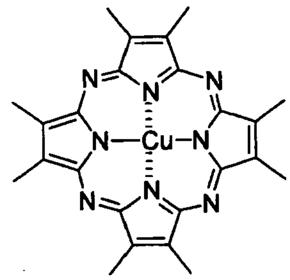

< Porphyrine dyes >

S-65

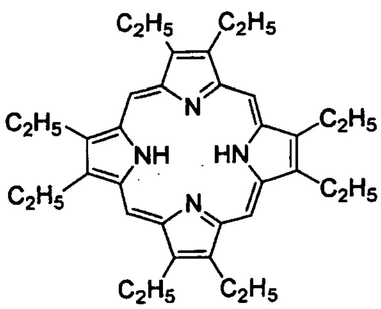

< Condensed aromatic dyes >

S-66

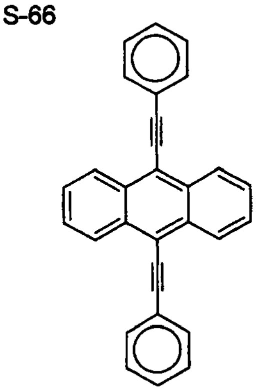

S-67

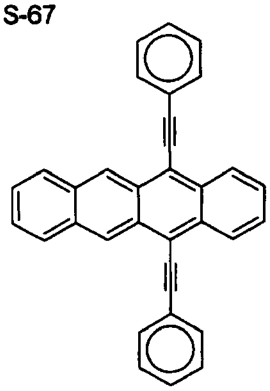

< Perylene dyes >

S-68

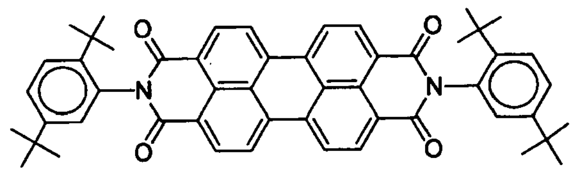

< Azomethine dyes >

S-69

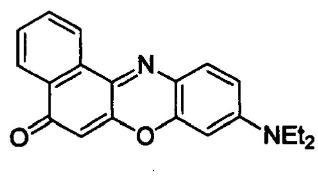

< Anthraquinone dyes >

S-70

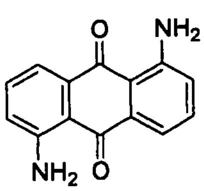

< Metal complex dyes >

S-71

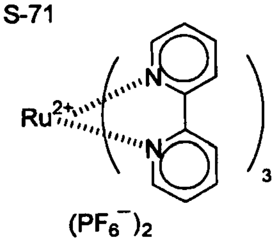

S-72

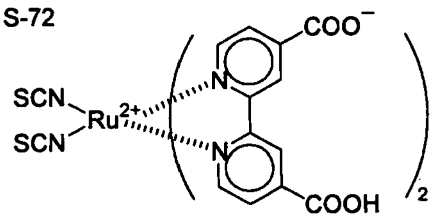

S-73

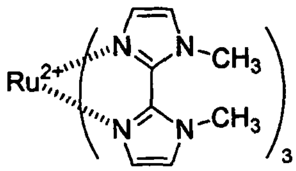

$(PF_6^-)_2$

S-74

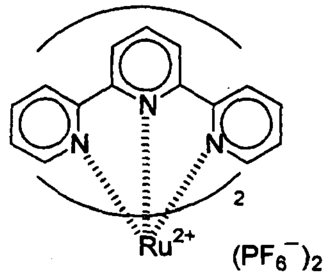

$(PF_6^-)_2$

S-75

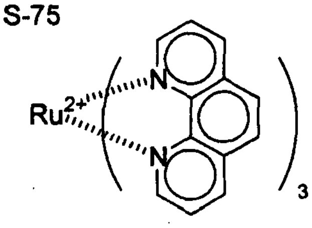

$(PF_6^-)_2$

S-76

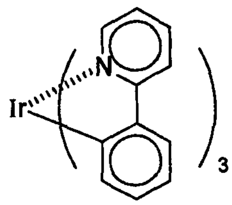

S-77

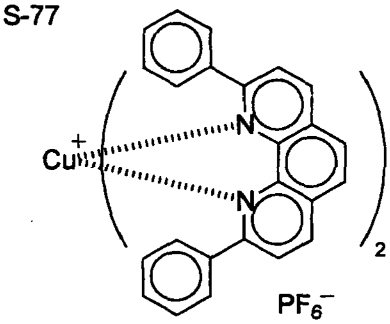

$PF_6^-$

S-78

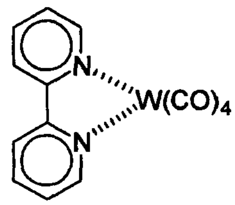

S-79

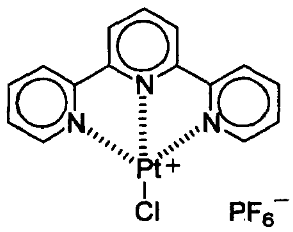

$PF_6^-$

S-80

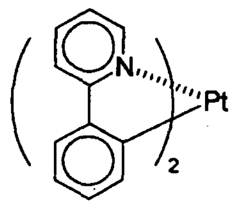

< Metalocene dyes >

S-81

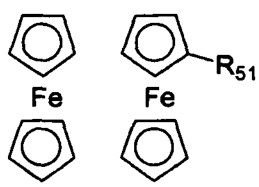

| | $R_{51}$ |
|---|---|
| S-82 | $-CHO$ |
| S-83 | $-CH_2CH_2COOH$ |
| S-84 | $-CH_2CH_2COOCH_3$ |
| S-85 | 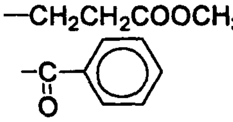 |
| S-86 | $-CH_2OH$ |
| S-87 | $-COOCH_3$ |

S-88

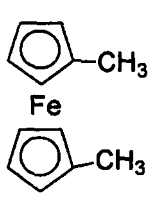

S-89

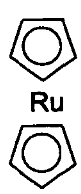

S-90

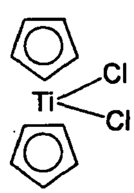

< Cont. from Cyanine dyes >

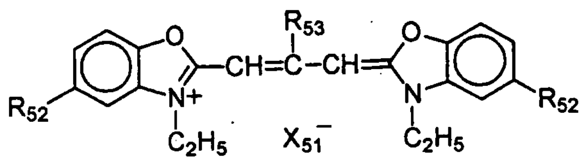

| | $R_{52}$ | $R_{53}$ | $X_{51}^-$ |
|---|---|---|---|
| S-91 | —Cl | —H | $I^-$ |
| S-92 | —H | $—C_2H_5$ | 〃 |
| S-93 | 〃 | —H | 〃 |
| S-94 | 〃 | 〃 | $PF_6^-$ |
| S-95 | —Br | 〃 | $BF_4^-$ |
| S-96 | $—CH_3$ | 〃 | $I^-$ |
| S-97 | $—OCH_3$ | $—C_2H_5$ | $PF_6^-$ |

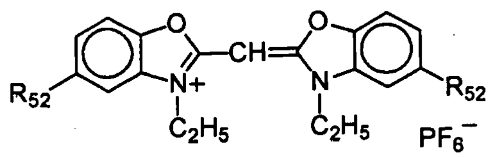

| | $R_{52}$ |
|---|---|
| S-98 | —H |
| S-99 | —Cl |
| S-100 | —Ph |
| S-101 | $—CH_3$ |
| S-102 | $—OCH_3$ |

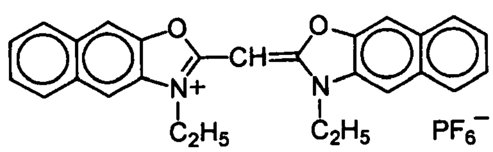

S-103

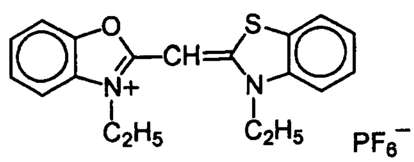

S-104

In the case where the hologram recording is effected using a frequency-doubled YAG laser beam of which an optical recording wavelength is 532 nm, particularly preferable examples of the sensitizing dye include trimethinecyanine dyes having a benzoxazole ring, melocyanine dyes having a barbiturate-like nucleus, benzylidene dyes having a pyrazolidinedioate-like nucleus, Ru complex dyes, and ferrocenes. In the case where the hologram recording is effected using a laser beam, such as GaN and InGaN, of which an optical recording wavelength is in the range from 400 to 415 nm, particularly preferable examples of the sensitizing dye include monomethinecyanine dyes having a benzoxazole ring, melocyanine dyes, Ru complex dyes, and ferrocenes.

Other preferable examples of the sensitizing dye are disclosed in Japanese Laid-open Patent Publication No. 2005-99751, the disclosure of which is also herein incorporated by reference in its entirety. The sensitizing dye may be commercially available or synthetically prepared by known methods.

Preferably, the following combinations are given as a color forming component. Specific examples of the color forming component are disclosed in Japanese Laid-open Patent Publication No. 2005-99751.

(I) Combination of at least an acid-induced color-forming compound and an acid generating agent, and optionally an acid proliferator;

Preferable examples of the acid generating agent include diaryl iodonium salts, sulfonium salts, diazonium salts, metal arene complex, trihalomethyl-substituted triazine, sulfonic acid ester, and imidosulfonate. Of these, diaryl iodonium salts and sulfonium salts are more preferable. Preferable examples of the acid generating agent are disclosed in Japanese Laid-open Patent Publication No. 2005-99753, the disclosure of which is also herein incorporated by

reference in its entirety.

Specific examples of the acid generating agent will be shown below. However, the present invention is not limited to these specific examples.

I-3

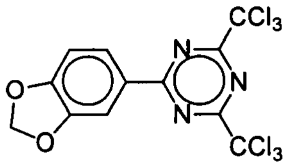

I-4

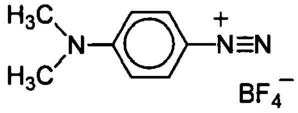

I-5

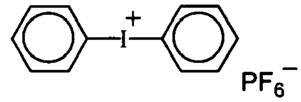

I-6

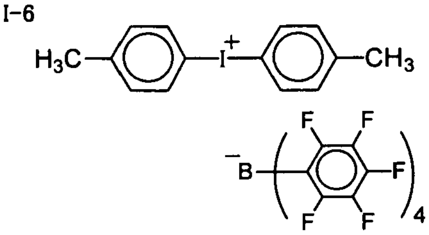

I-7

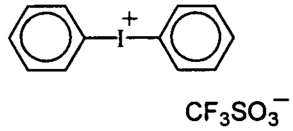

I-8

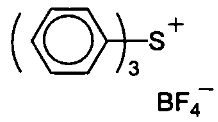

I-9

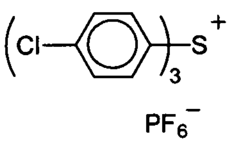

I-10

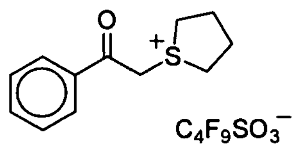

I-21

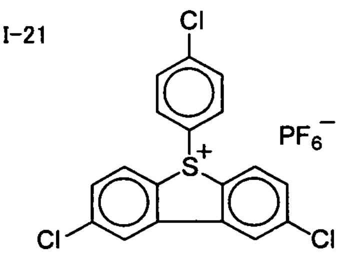

I-22

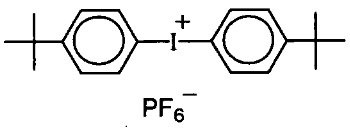

I-23

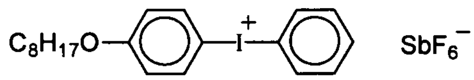

I-24

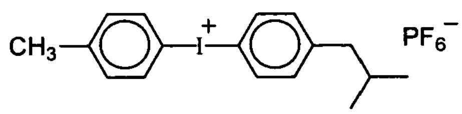

I-25

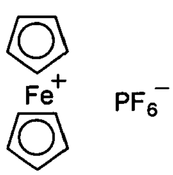

I-26

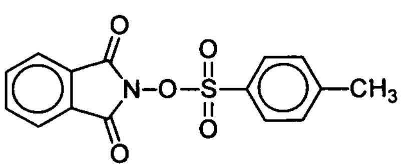

I-27

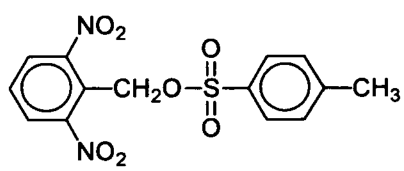

I-28

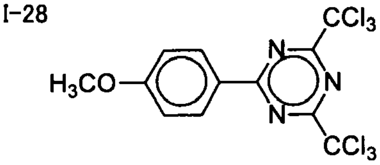

I-29

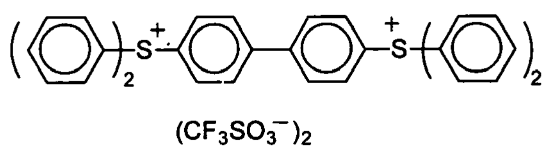

I-30

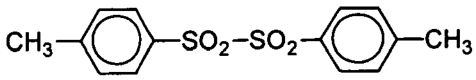

As a colored material generated from the acid-induced color-forming compound, xanthenes dyes, fluorane dyes, and triphenylmethane dyes are preferable. Specific examples of the acid-induced color-forming compound will be shown below. However, the present invention is not limited to these specific examples.

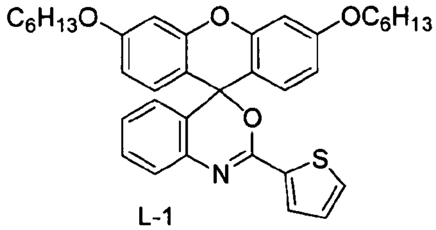

L-1

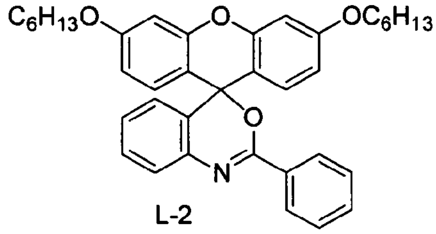

L-2

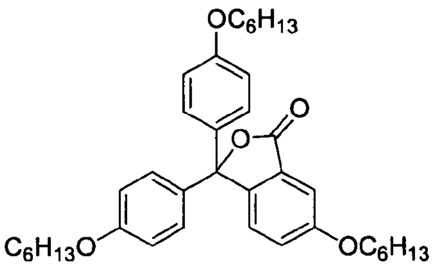

L-3

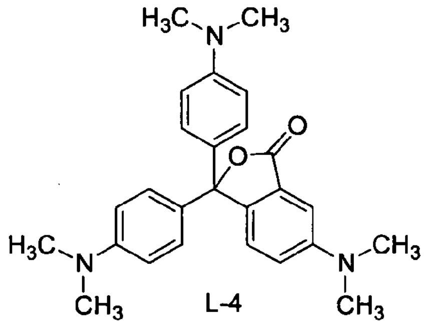

L-4

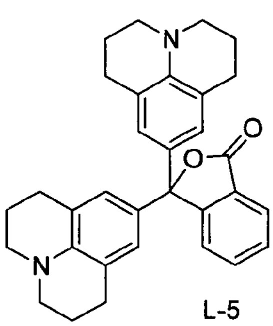

L-5

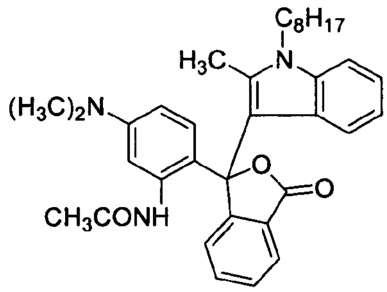

L-6

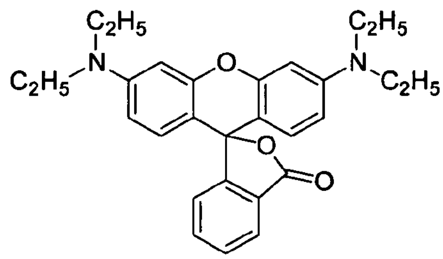

L-7

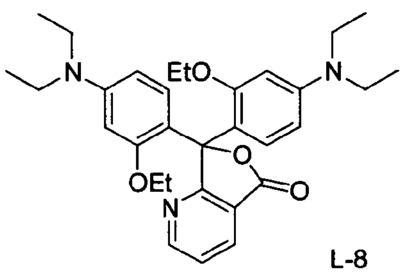

L-8

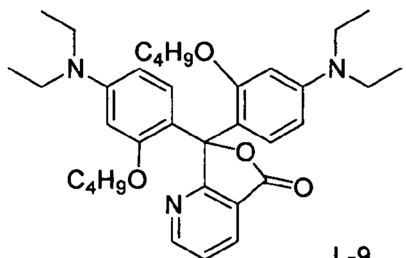

L-9

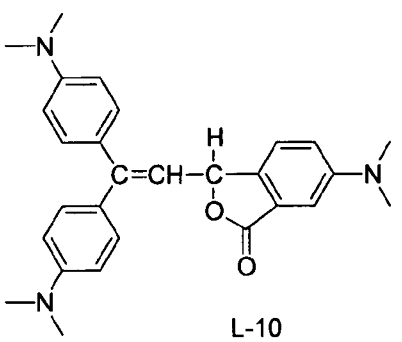

L-10

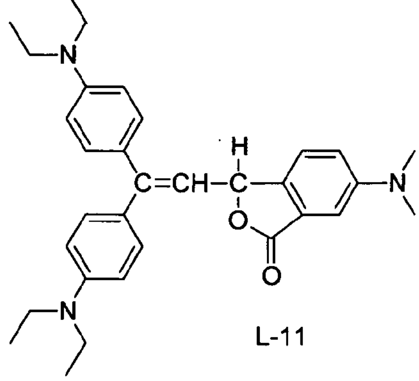

L-11

As a preferable example of the acid-induced color-forming compound, a cyanine base (leuco cyanine dyes) which forms a color by the addition of an acid (proton) may also be used.

Specific examples of the cyanine base will be shown below. However, the present invention is not limited to

these specific examples.

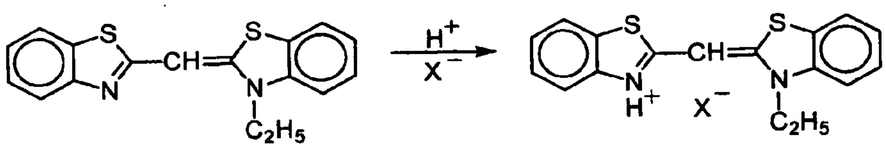

Cyanine base (Leuco cyanine dyes), Colorless

Cyanine dyes, Colorless

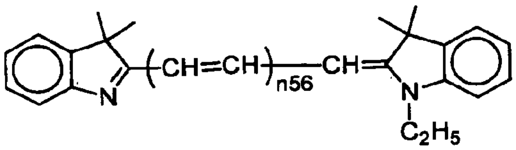

| | $n_{56}$ |
|---|---|
| LC-1 | 0 |
| LC-2 | 1 |
| LC-3 | 2 |

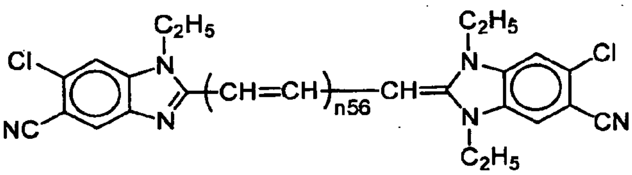

| | $n_{56}$ |
|---|---|
| LC-4 | 0 |
| LC-5 | 1 |
| LC-6 | 2 |

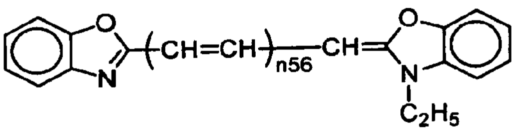

| | $n_{56}$ |
|---|---|
| LC-7 | 0 |
| LC-8 | 1 |

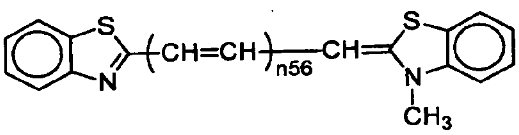

| | $n_{56}$ |
|---|---|
| LC-9 | 0 |
| LC-10 | 1 |

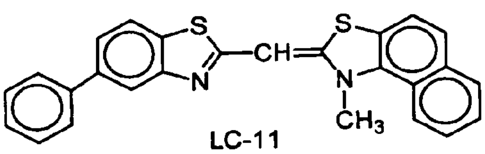

LC-11

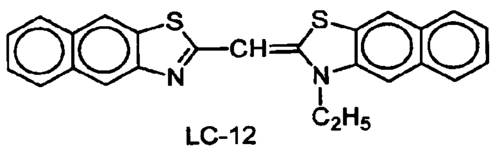

LC-12

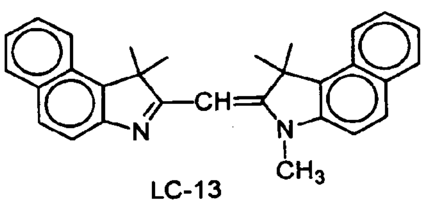

LC-13

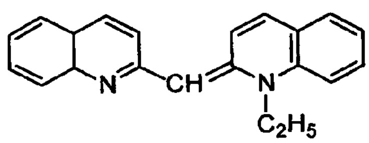

LC-14

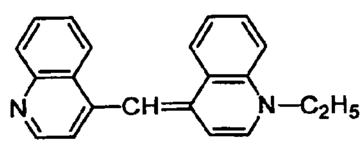

LC-15

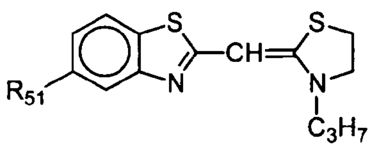

| | $R_{51}$ |
|---|---|
| LC-16 | $-H$ |
| LC-17 | $-Cl$ |

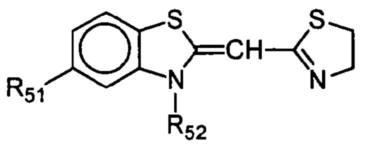

| | $R_{51}$ | $R_{52}$ |
|---|---|---|
| LC-18 | $-H$ | $-C_3H_7$ |
| LC-19 | $-Cl$ | $-C_3H_7$ |
| LC-20 | $-Cl$ | $-C_8H_{17}$ |
| LC-21 | $-CN$ | $-C_3H_7$ |
| LC-22 | 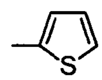 | $-C_8H_{17}$ |

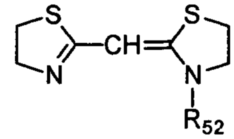

| | $R_{52}$ |
|---|---|
| LC-23 | $-C_8H_{17}$ |
| LC-24 | $-(CH_2)_2-O-(CH_2)_2-O-(CH_2)_2-OCH_3$ |

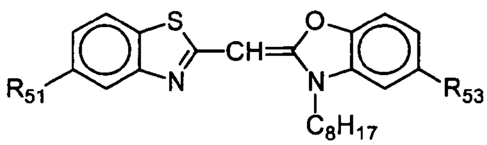

| | $R_{51}$ | $R_{53}$ |
|---|---|---|
| LC-25 | $-H$ | $-H$ |
| LC-26 | $-Cl$ | $-H$ |
| LC-27 | $-Cl$ | $-Cl$ |

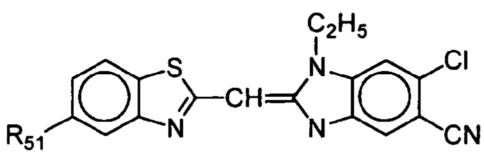

| | $R_{51}$ |
|---|---|
| LC-28 | $-H$ |
| LC-29 | $-Cl$ |

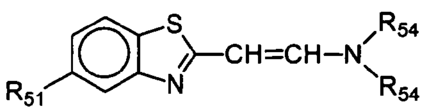

| | $R_{51}$ | $R_{54}$ |
|---|---|---|
| LC-30 | $-H$ | $-C_{12}H_{25}$ |
| LC-31 | $-H$ | $-CH_2COOC_2H_5$ |
| LC-32 | $-H$ | $-CH_2COOC_8H_{17}$ |
| LC-33 | $-CN$ | $-CH_2COOC_2H_5$ |

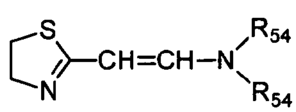

| | $R_{54}$ |
|---|---|
| LC-34 | $-C_6H_{13}$ |
| LC-35 | $-CH_2COOC_2H_5$ |
| LC-36 | $-CH_2COOC_6H_{13}$ |

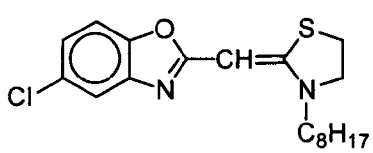

LC-37

Preferable examples of the acid proliferator are disclosed in Japanese Laid-open Patent Publication No. 2005-17730, the disclosure of which is also herein incorporated by reference in its entirety.

(II) Combination of at least a base-induced color-forming compound and a base generating agent, and optionally a base proliferator;

Preferable examples of the base generating agent and the base proliferator are disclosed in Japanese Laid-open Patent Publication No. 2005-17354, the disclosure of which is also herein incorporate by reference in its entirety. The base-induced color-forming compound may be a non-dissociation product of dissociative azo dyes, dissociative azomethine dyes, dissociative oxonol dyes, dissociative xanthene dyes, dissociative fluorane dyes, and dissociative triphenylmethane dyes.
Specific examples of the base-induced color-forming compound will be shown below. However, the present invention is not limited to these specific examples.

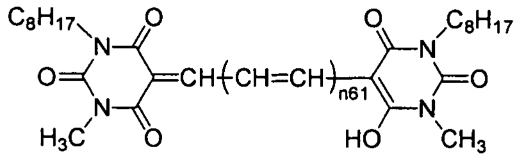

| | n61 |
|---|---|
| DD-1 | 1 |
| DD-2 | 2 |
| DD-3 | 3 |

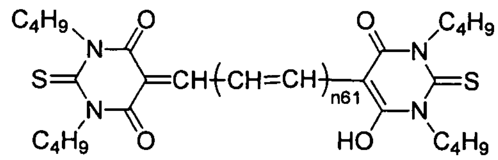

| | n61 |
|---|---|
| DD-4 | 0 |
| DD-5 | 1 |
| DD-6 | 2 |

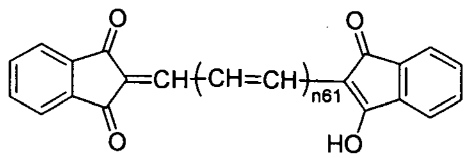

| | n61 |
|---|---|
| DD-7 | 0 |
| DD-8 | 1 |
| DD-9 | 2 |

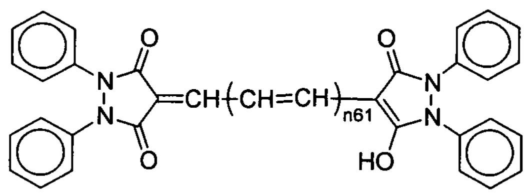

| | n61 |
|---|---|
| DD-10 | 0 |
| DD-11 | 2 |
| DD-12 | 3 |

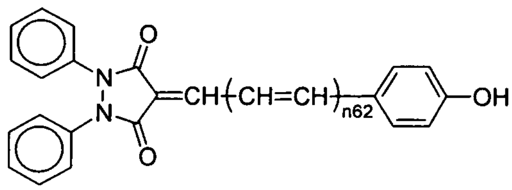

| | n62 |
|---|---|
| DD-13 | 0 |
| DD-14 | 1 |

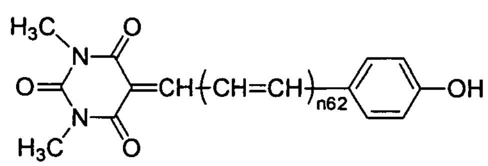

| | n62 |
|---|---|
| DD-15 | 0 |
| DD-16 | 1 |

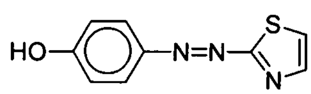

DD-17

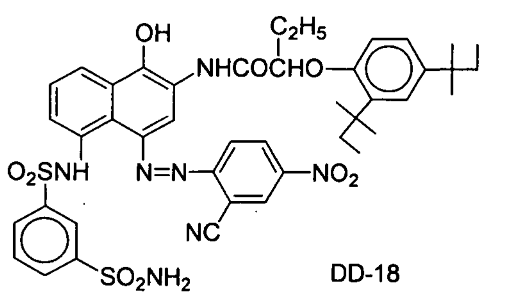

DD-18

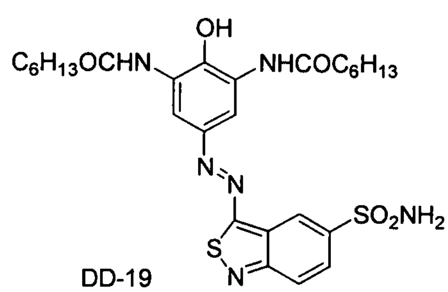

DD-19

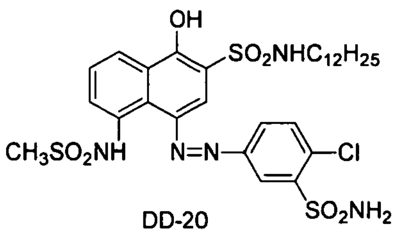

DD-20

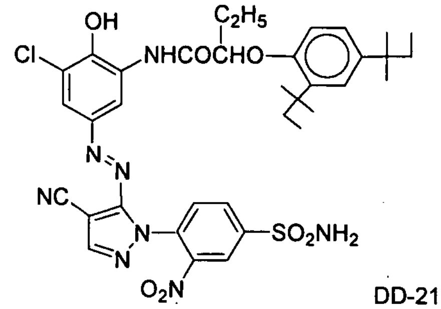

DD-21

DD-22

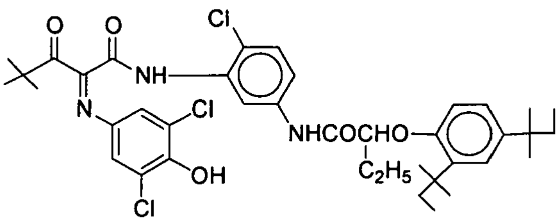

DD-23

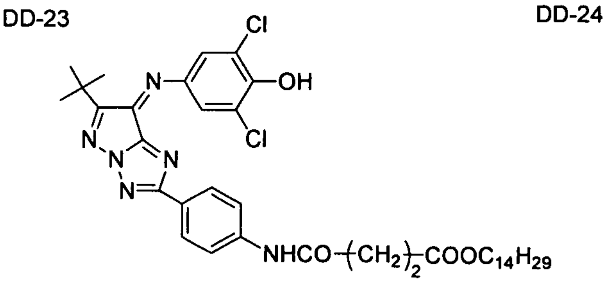

DD-24

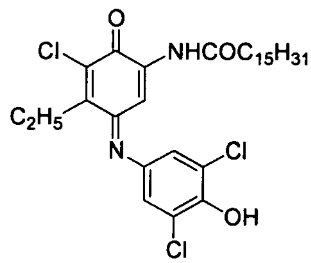

DD-25

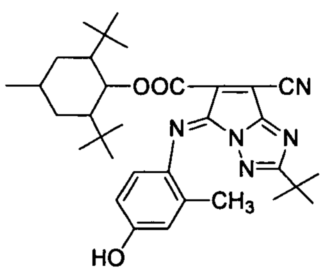

DD-26

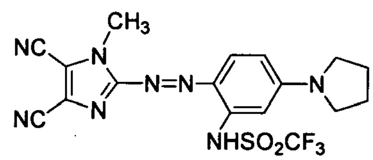

DD-27

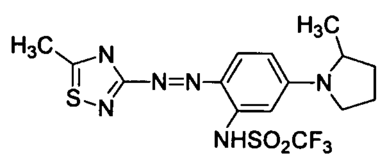

DD-28

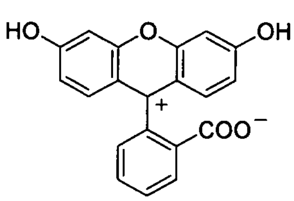

DD-29

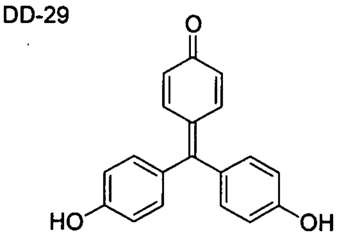

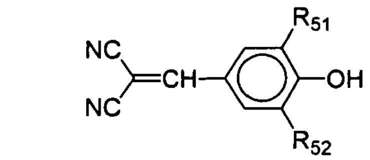

| | $R_{51}$ | $R_{52}$ |
|---|---|---|
| DD-30 | —H | —H |
| DD-31 | —Cl | —H |
| DD-32 | —Cl | —Cl |

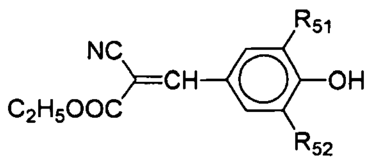

| | $R_{51}$ | $R_{52}$ |
|---|---|---|
| DD-33 | —H | —H |
| DD-34 | —Cl | —H |
| DD-35 | —Cl | —Cl |
| DD-36 | —H | $-OCH_3$ |
| DD-37 | $-CH_3$ | $-CH_3$ |
| DD-38 | $-C_3H_7$-i | $-C_3H_7$-i |

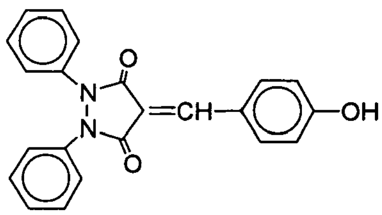

DD-39

(III) Presence of a compound, in which a covalent bond is formed between an organic compound moiety capable of severing the covalent bonding when an electron or energy moves from or moves to the excited state of the sensitizing dye and an organic compound moiety capable of being a colored material when the covalent bonding is severed, and optionally a base;

Particularly preferable examples will be shown below. However, the present invention is not limited to these specific examples. Arrows in the general formulae indicate positions at which a covalent bond is formed.

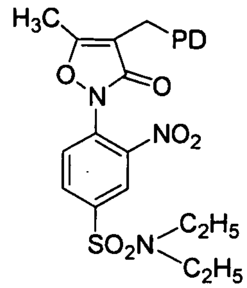

| | PD | | PD | | PD |
|---|---|---|---|---|---|
| E-1 | PD-1 | E-6 | PD-10 | E-11 | PD-31 |
| E-2 | PD-2 | E-7 | PD-12 | E-12 | PD-33 |
| E-3 | PD-22 | E-8 | PD-13 | E-13 | PD-34 |
| E-4 | PD-27 | E-9 | PD-16 | E-14 | PD-35 |
| E-5 | PD-8 | E-10 | PD-18 | E-15 | PD-36 |

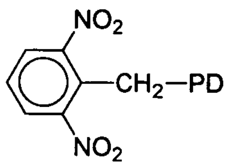

| | PD | | PD | | PD |
|---|---|---|---|---|---|
| E-16 | PD-22 | E-21 | PD-11 | E-26 | PD-31 |
| E-17 | PD-2 | E-22 | PD-14 | E-27 | PD-34 |
| E-18 | PD-27 | E-23 | PD-15 | E-28 | PD-35 |
| E-19 | PD-7 | E-24 | PD-17 | E-29 | PD-38 |
| E-20 | PD-8 | E-25 | PD-18 | E-30 | PD-41 |

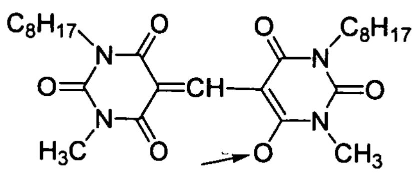

PD-1

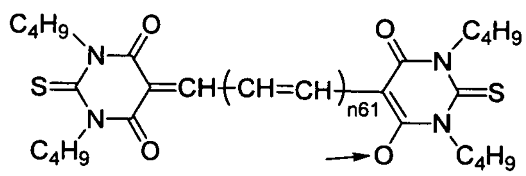

| | n61 |
|---|---|
| PD-2 | 0 |
| PD-3 | 1 |
| PD-4 | 2 |

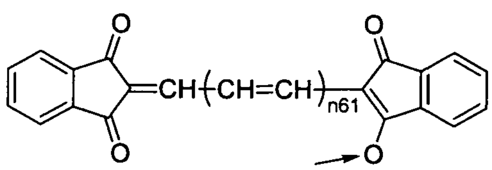

| | n61 |
|---|---|
| PD-5 | 0 |
| PD-6 | 2 |

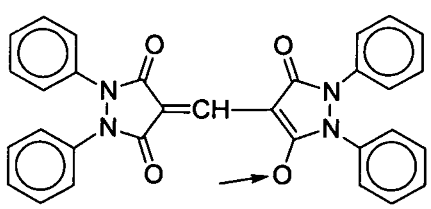

PD-7

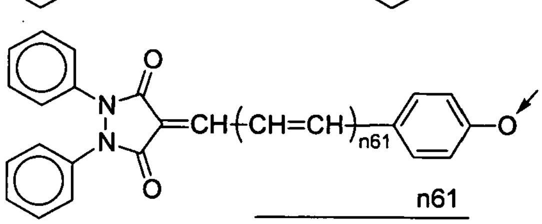

| | n61 |
|---|---|
| PD-8 | 0 |
| PD-9 | 1 |

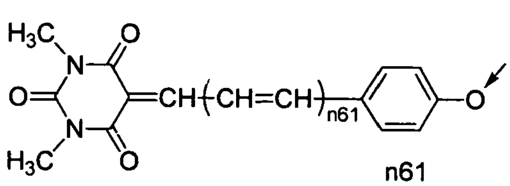

| | n61 |
|---|---|
| PD-10 | 0 |
| PD-11 | 1 |

PD-12

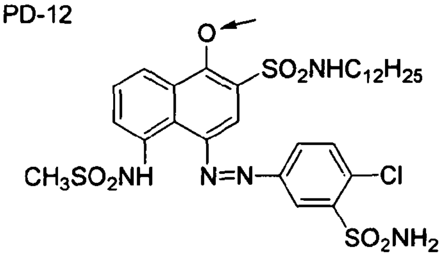

PD-13

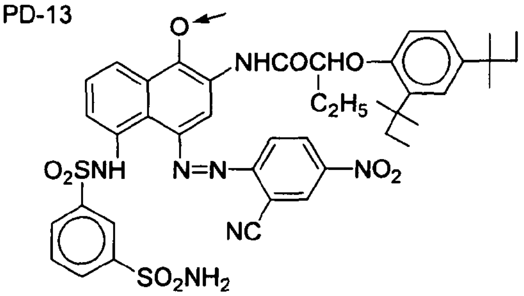

PD-14

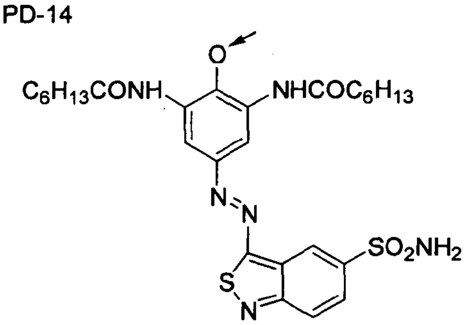

PD-15

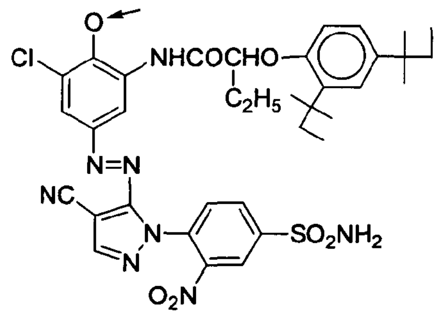

PD-16

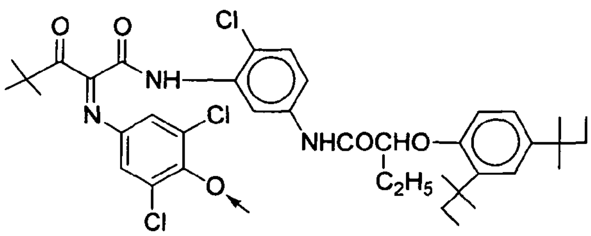

PD-17

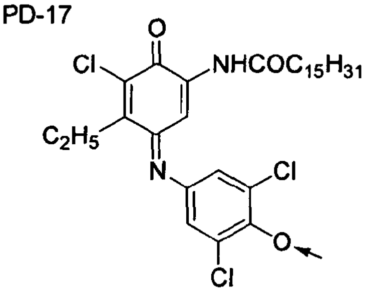

PD-18

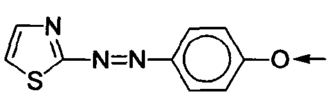

PD-19

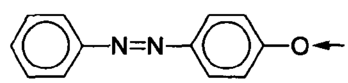

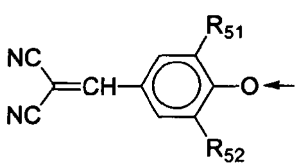

| | $R_{51}$ | $R_{52}$ |
|---|---|---|
| PD-20 | —H | —H |
| PD-21 | —Cl | —H |
| PD-22 | —Cl | —Cl |
| PD-23 | —Cl | $—COOC_2H_5$ |
| PD-24 | —Cl | —CN |

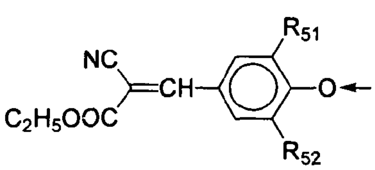

| | $R_{51}$ | $R_{52}$ |
|---|---|---|
| PD-25 | —H | —H |
| PD-26 | —Cl | —H |
| PD-27 | —Cl | —Cl |
| PD-28 | $—OCH_3$ | —H |
| PD-29 | $—CH_3$ | $—CH_3$ |
| PD-30 | $—C_3H_7$-i | $—C_3H_7$-i |

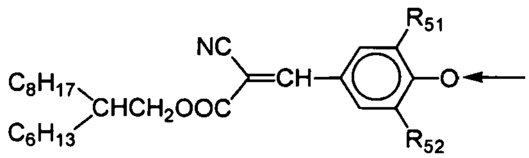

| | $R_{51}$ | $R_{52}$ |
|---|---|---|
| PD-31 | —Cl | —Cl |
| PD-32 | —Br | —Br |
| PD-33 | —I | —I |
| PD-34 | —Cl | —CN |

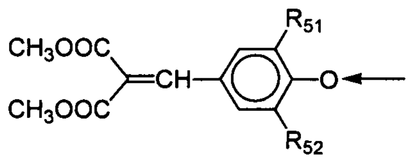

| | $R_{51}$ | $R_{52}$ |
|---|---|---|
| PD-35 | —Cl | —Cl |
| PD-36 | —I | —I |
| PD-37 | —Cl | —CN |

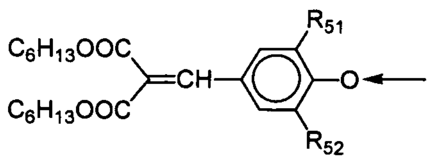

| | $R_{51}$ | $R_{52}$ |
|---|---|---|
| PD-38 | —Cl | —Cl |
| PD-39 | —Br | —Br |
| PD-40 | —I | —I |
| PD-41 | —Cl | —CN |

Preferred examples of the base may include tributylamine, trihexylamine, trioctylamine, N,N-dimethyldodecylamine, tribenzylamine, tetrabenzylethylenediamine, and 4-(dimethylamino)pyridine.

(IV) Presence of a compound capable of reacting and changing its absorption form when an electron moves from or moves to the excited state of the sensitizing dye;

Preferably, a so-called electrochromic compound is used. Preferred examples of the electrochromic compound that may be used in the present invention include polypyrrols (e.g., preferably polypyrrol, poly(N-methylpyrrol), poly(N-methylindole), and polypyrrolopyrrol), polythiophenes (e.g., preferably polythiophene, poly(3-hexylthiophene), polyisothianaphthene, polydithienothiophene, poly(3-hexylthiophene), polyisothioanaphthene, polydithienothiophene, and poly (3,4-ethylenedioxy)thiophene), polyaniline (e.g., preferably polyaniline, poly(N-naphthylaniline), poly(o-phenylenediamine), poly(aniline-m-sulfonic acid), poly(2-methoxyaniline), poly(o-aminophenol), and poly(diallylamine)), poly(N-vinylcarbazole), Co-pyridinoporphyrazine complex, Ni-phenanthroline complex, Fe-basophenanthroline complex, viologens, polyviologens, lanthanoid diphthalocyanines, styryl dyes, TNFs, TCNQ/TTF complexes, and Ru-trisbipyridyl complexes.

Description will be given of a discolorable compound. The discolorable compound used in the present invention may be a compound which shows a reaction such that in the region of ultraviolet light, visible light, and infrared light in the range of wavelengths from 200 to 2,000 nm, either the absorption peak wavelength $\lambda_{max}$ becomes shorter in the absorption spectrum or the molar absorptivity ε becomes smaller in the absorption spectrum, and more preferably, both reactions occur in the compound. It is preferable that the discoloration reaction occurs in the range of wavelengths from 300 to 600 nm.

If a discoloration reaction proceeds in the optical recording composition, it is preferable that the optical recording composition contains at least one kind of discolorable compound, of which an absorption peak wavelength $\lambda_{max}$ decreases and/or the molar absorptivity ε decreases from the original state and which can turn out to be a discolored material having no absorption in the wavelength of the hologram-reconstructing beam. The discoloration reaction by the discolorable compound proceeds in accordance with a thermal reaction or photoreaction. In the case of the photoreaction, discoloration may occur by a direct excitation which is induced by light irradiation of the discolorable compound or the discoloration may occur from a discolorable component using electron transfer or energy transfer from the excited state of the sensitizing dye that is created when the sensitizing dye is irradiated with a beam.

Preferred combinations of the discoloration reaction are as follows.

(A) The discolorable compound is a dye having absorption either in the optical recording wavelength or in the wavelength of the fixing beam. The discolorable compound absorbs light when it undergoes the optical recording

exposure or the irradiation with the fixing beam, and loses its color.

(B) The optical recording composition contains at least a sensitizing dye having absorption in the optical recording wavelength or in the wavelength of the fixing beam and the discolorable compound of which a molar absorptivity ε at the wavelength of the hologram-reconstructing beam is not more than 1,000, and preferably not more than 100. The sensitizing dye absorbs light when it undergoes the optical recording exposure or the irradiation with the fixing beam, so that the discolorable compound loses its color due to electron transfer or energy transfer using the excitation energy.

(C) Photoreaction or thermal reaction causes a discolorable agent precursor to generate a discolorable agent, which can discolor or lose the color of the discolorable compound. The discolorable agent occurs from the discolorable agent precursor, for example, due to thermal decomposition of the discolorable agent precursor, photolysis by the light-irradiation of the discolorable agent precursor, or electron transfer or energy transfer from the excited state of the sensitizing dye to the discolorable agent precursor. Preferably, the discolorable agent is any one of a radical, an acid, a base, a nucleophilic agent, an electrophilic agent, and singlet oxygen. Therefore, it is preferable that the discolorable agent precursor is any one of a radical generator, an acid generator, a base generator, a nucleophilic agent generator, an electrophilic agent generator, and triplet oxygen, and more preferably the discolorable agent precursor is a radical generator, an acid generator or a base generator.

If the discoloration reaction proceeds due to the optical recording exposure in the above combination type (A), preferred examples of the discolorable compound include those described above with respect to the sensitizing dye. In this instance, the absorption peak wavelength $\lambda_{max}$ of the discolorable compound is preferably in the range between the wavelength of the recording beam and the wavelength 100 nm shorter than that of the recording beam.

Meanwhile, a discolorable compound having a smaller absorption in the wavelength of the recording beam is used in the case where the discoloration reaction proceeds due to irradiation with the fixing beam in the above combination type (A), and also in the cases of the above combination types (B) and (C). In this instance, the molar absorptivity ε of the discolorable compound at the wavelength of the recording beam is not more than 1,000, preferably not more than 100, and most preferably 0. The absorption peak wavelength $\lambda_{max}$ of the discolorable compound is preferably in the range between the wavelength of the recording beam and the wavelength 200 nm shorter than that of the recording beam.

In the case of the type (A) where the fixing beam causes discoloration, and in the cases of the types (B) and (C), preferred examples of the discolorable compound include cyanine dyes, squarilium cyanine dyes, styryl dyes, pyrilium dyes, melocyanine dyes, benzylidene dyes, oxonol dyes, coumarine dyes, pyrane dyes, xanthene dyes, thioxanthene dyes, phenothiazine dyes, phenoxazine dyes, phenazine dyes, phthalocyanine dyes, azaporphyrine dyes, porphyrine dyes, condensed aromatic dyes, perylene dyes, azomethine dyes, azo dyes, anthraquinone dyes, and metal complex dyes. Of these dyes, cyanine dyes, styryl dyes, melocyanine dyes, benzylidene dyes, oxonol dyes, coumarine dyes, xanthene dyes, azomethine dyes, azo dyes, and metal complex dyes are more preferable.

In particular, if the discolorable agent is an acid in the above type (C), it is preferable that the discolorable compound is a dissociation product of dissociative benzylidene dyes, dissociative oxonol dyes, dissociative xanthene dyes or dissociative azo dyes. More preferably, the discolorable compound is a dissociation product of dissociative benzylidene dyes, dissociative oxonol dyes or dissociative azo dyes. The term "dissociative dye(s)" as used herein generically indicates a dye having an active hydrogen with pKa from about 2 to 14, such as -OH group, -SH group, -COOH group, $-NHSO_2R$ group, and $-CONHSO_2R$ group, so that deprotonation causes the absorption peak wavelength $\lambda_{max}$ to be longer in the absorption spectrum or the molar absorptivity ε to be larger in the absorption spectrum. Accordingly, the dissociative dye can be previously treated with a base to provide a dissociated dye. This makes it possible to previously prepare a dye having absorption at longer wavelengths or a dye having a higher molar absorptivity ε, so that a discoloration (to have a shorter wavelength or a lower molar absorptivity ε) can occur when the photoacid generation causes a change to a non-dissociation product.

In the case where the discolorable agent is a base, use of an acid-colorable dye as the discolorable compound makes it possible to lose the color (to have a shorter wavelength or a lower molar absorptivity ε) when the photobase generation causes a change to an unprotonated adduct. For example, the acid-colorable dye may be triphenylmethane dyes, xanthene dyes or fluorane dyes, which have been previously treated with an acid to prepare a colored material.

Specific examples of the discolorable compound used in the present invention will be shown below. However, the present invention is not limited to these specific examples.

G-1

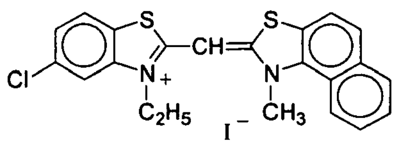

G-2

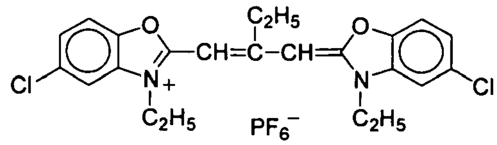

G-3

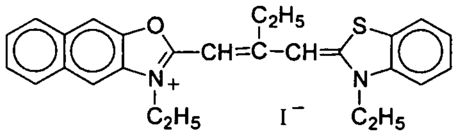

G-4

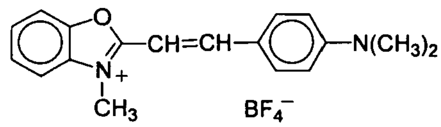

G-5

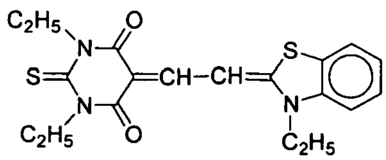

G-6

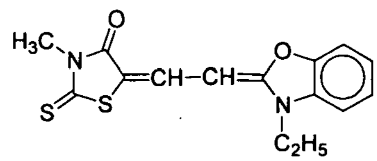

G-7

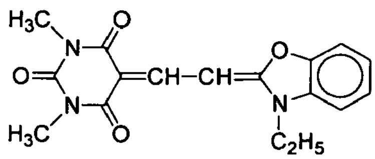

G-8

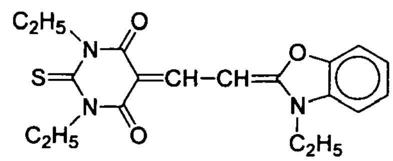

G-9

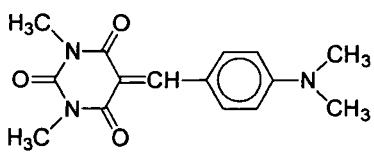

G-10

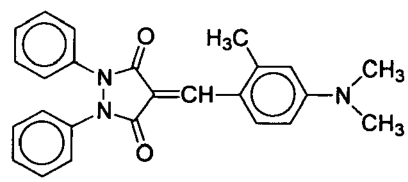

G-11

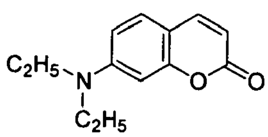

G-12

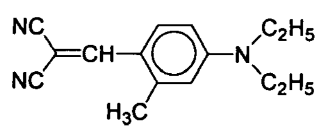

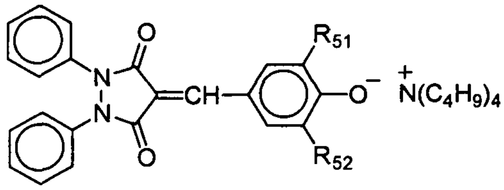

| | $R_{51}$ | $R_{52}$ |
|---|---|---|
| G-13 | —H | —H |
| G-14 | —Cl | —H |
| G-15 | —Cl | —Cl |

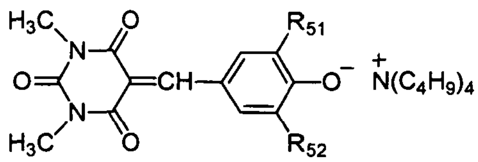

| | $R_{51}$ | $R_{52}$ |
|---|---|---|
| G-16 | —H | —H |
| G-17 | —Cl | —H |
| G-18 | —Cl | —Cl |

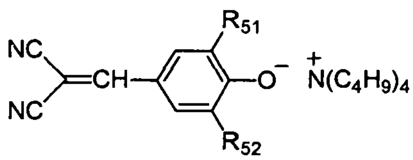

| | $R_{51}$ | $R_{52}$ |
|---|---|---|
| G-19 | —H | —H |
| G-20 | —Cl | —H |
| G-21 | —Cl | —Cl |

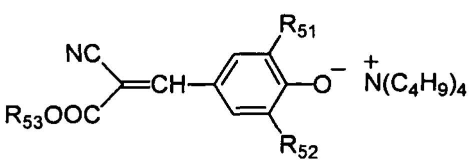

| | $R_{51}$ | $R_{52}$ | $R_{53}$ |
|---|---|---|---|
| G-22 | —H | —H | $-C_2H_5$ |
| G-23 | —Cl | —Cl | 〃 |
| G-24 | —H | —H | $-CH_2CH(CH_3)_2$ |
| G-25 | —H | —Cl | 〃 |
| G-26 | —Cl | —Cl | 〃 |
| G-27 | —Br | —Br | 〃 |
| G-28 | —I | —I | 〃 |
| G-29 | —Cl | —CN | 〃 |
| G-30 | —H | —H | $-CH_2CH(C_6H_{13})(C_8H_{17})$ |
| G-31 | —H | —Cl | 〃 |
| G-32 | —Cl | —Cl | 〃 |
| G-33 | $-CH_3$ | $-CH_3$ | $-CH_2CH(CH_3)_2$ |
| G-34 | $-C_3H_7$-i | $-C_3H_7$-i | 〃 |

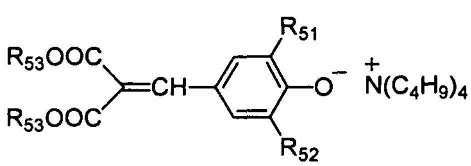

| | $R_{51}$ | $R_{52}$ | $R_{53}$ |
|---|---|---|---|
| G-35 | —Cl | —Cl | $-CH_3$ |
| G-36 | —H | —Cl | $-C_6H_{13}$ |
| G-37 | —Cl | —Cl | 〃 |
| G-38 | —Br | —Br | 〃 |
| G-39 | —I | —I | 〃 |
| G-40 | —Cl | —Cl | $-CH_2CH(C_6H_{13})(C_8H_{17})$ |

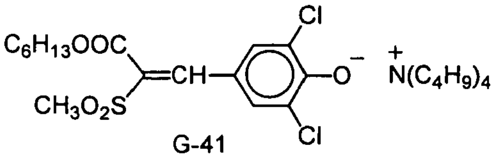
G-41

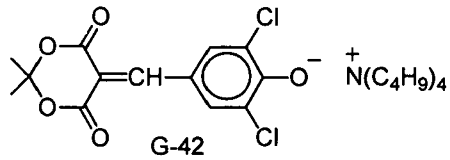
G-42

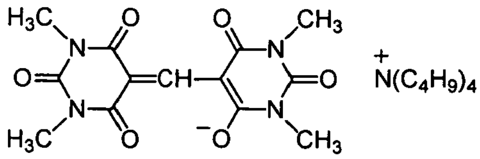
G-43

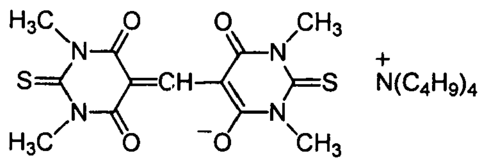
G-44

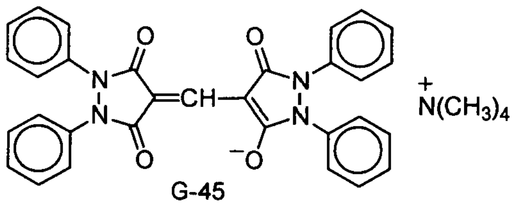
G-45

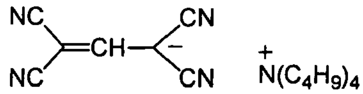
G-46

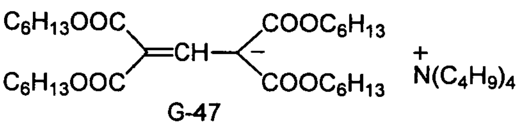
G-47

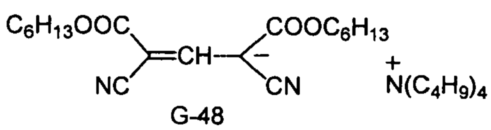
G-48

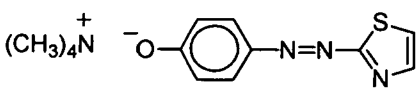
G-49

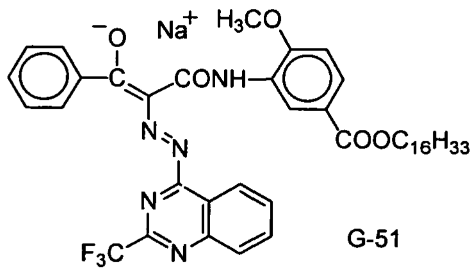
G-51

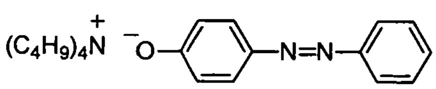
G-50

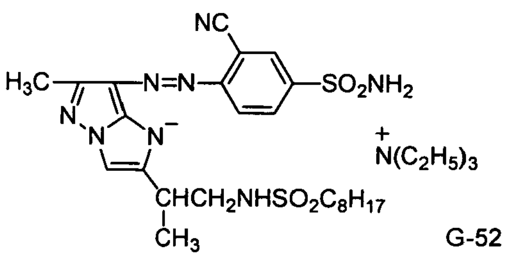
G-52

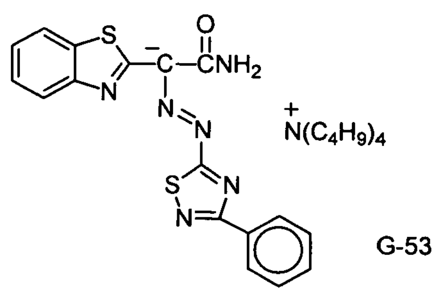
G-53

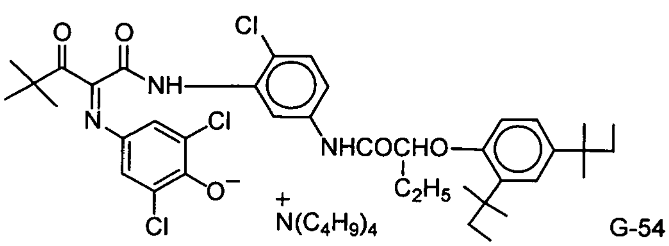
G-54

< Acid-colorable dye; Mainly Base discoloration >

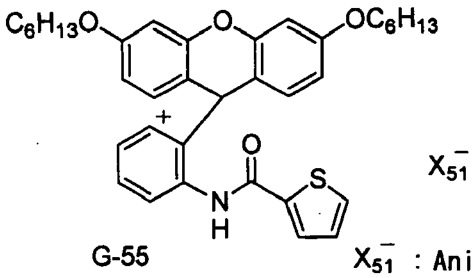

G-55

$X_{51}^{-}$ : Anion

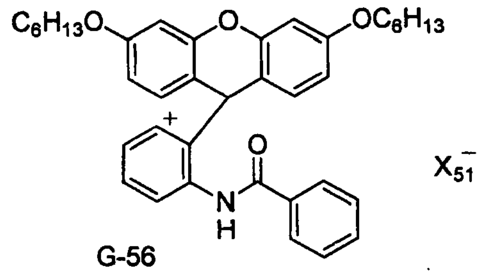

G-56

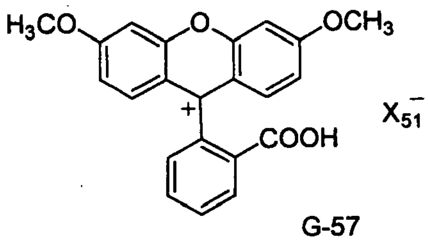

G-57

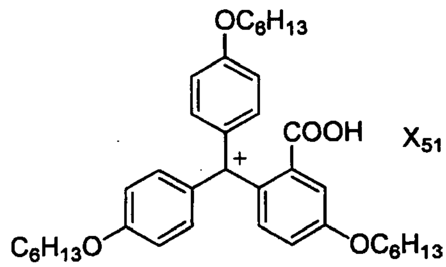

G-58

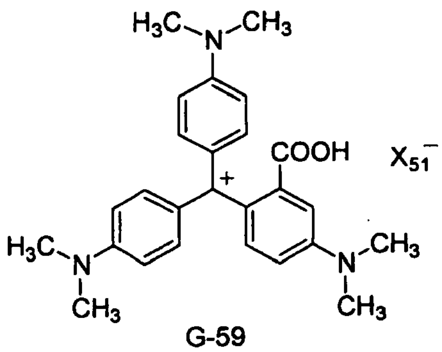

G-59

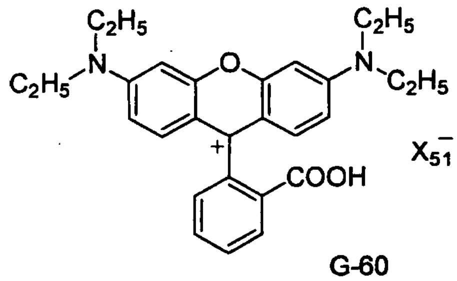

G-60

< Cyanine based acid-colorable dye; Mainly base discoloration >

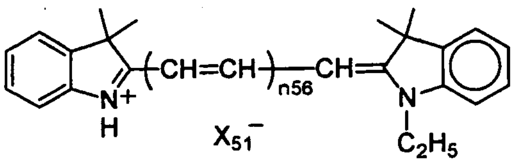

| | $n_{56}$ |
|---|---|
| G-61 | 0 |
| G-62 | 1 |
| G-63 | 2 |

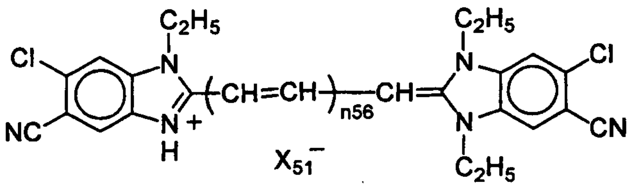

| | $n_{56}$ |
|---|---|
| G-64 | 0 |
| G-65 | 1 |

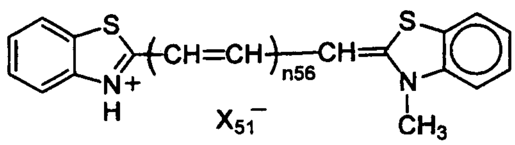

| | $n_{56}$ |
|---|---|
| G-66 | 0 |
| G-67 | 1 |

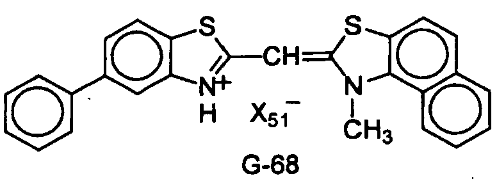

G-68

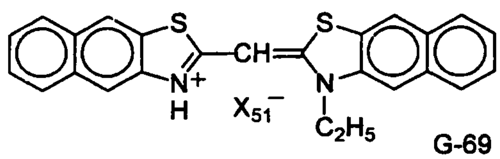

G-69

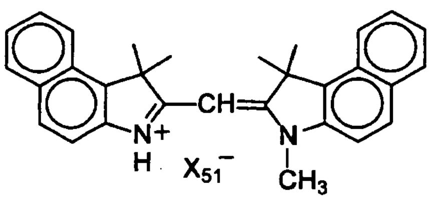

G-70

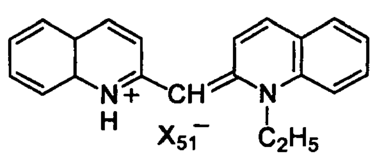

G-71

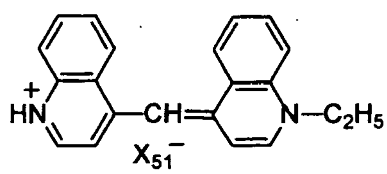

G-72

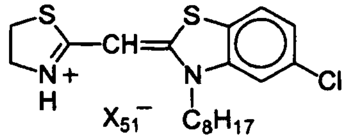

G-73

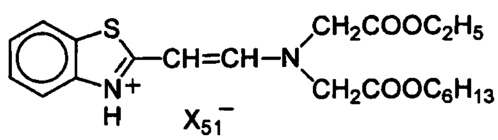

G-74

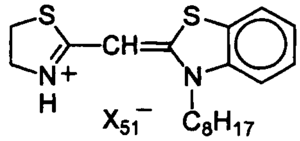

G-75

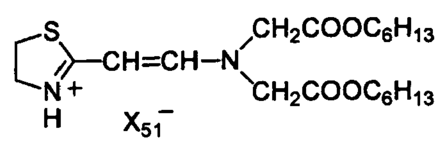

G-76

Preferred examples of the discolorable compound may be the following compounds, which are subject to optical recording exposure or irradiation with a fixing beam to generate the excited state of the sensitizing dye from which an electron moves to sever the bond, resulting in the discoloration of the discolorable compound.

These discolorable compounds are originally cyanine dyes. However, when the bond is severed by the electron transfer, the discolorable compound is changed to a cyanine base (leucocyanine dye), thereby causing the absorption to be eliminated or shifted to a lower wavelength.

< Discoloration due to severance of bond by electron transfer >

$X_{51}^-$ : Anion

| $R_{51}$ | 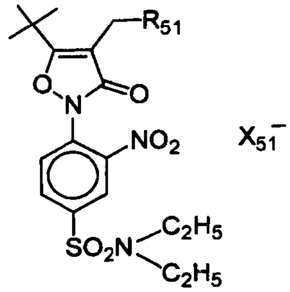 | 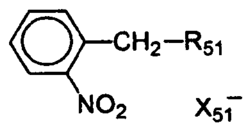 |
|---|---|---|
| GD-1 | G-77 | G-84 |
| GD-2 | G-78 | G-85 |
| GD-3 | G-79 | G-86 |
| GD-4 | G-80 | G-87 |
| GD-5 | G-81 | G-88 |
| GD-6 | G-82 | G-89 |
| GD-7 | G-83 | G-90 |

*: Substituted at this position

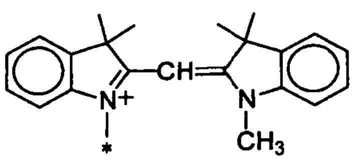

GD-1

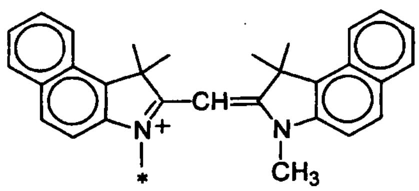

GD-2

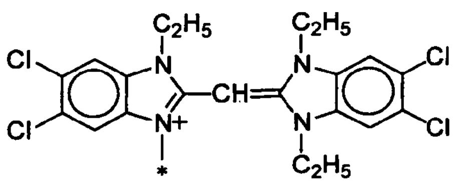

GD-3

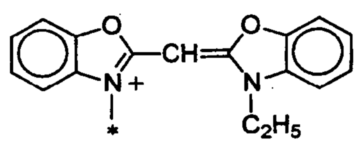

GD-4

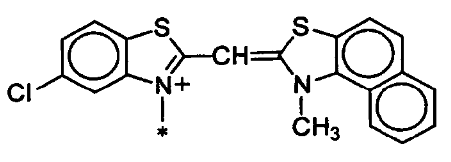

GD-5

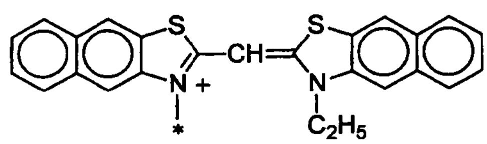

GD-6

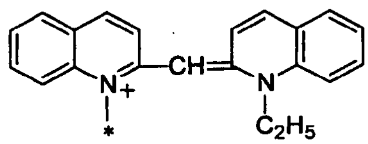

GD-7

In the case where the discolorable agent precursor is an acid-colorable dye, preferred examples are those

described above with respect to the acid generating agent. If the discolorable agent precursor is a radical generator, preferred specific examples are those disclosed in Japanese Laid-open Patent Publication No. 2005-115361, the disclosure of which is also herein incorporated by reference in its entirety. If the discolorable agent precursor is a base generator, an anion polymerization initiator is preferable, specific examples of which are disclosed in Japanese Laid-open Patent Publication No. 2005-17354.

Preferred specific examples of the discoloration reaction are those disclosed in Japanese Laid-open Patent Publication No. 2005-309359, the disclosure of which is also herein incorporated by reference in its entirety.

<Photopolymerization initiator>

The optical recording composition preferably contains a photopolymerization initiator. The photopolymerization initiator may be selected from those sensitive to the recording beam without limitation. For example, a photoradical polymerization initiator and a cation polymerization initiator may be used as the photopolymerization initiator. The photoradical polymerization initiator is preferable in terms of efficiency in polymerization reaction.

Preferred examples of the photoradical polymerization initiator may include, for example, 2,2'-bis(o-chlorophenyl)-4,4',5,5'-tetraphenyl-1,1'-biimidazole, 2,4,6-tris(trichloromethyl)-1,3,5-triazine, 2,4-bis(trichloromethyl)-6-(p-methoxyphenylvinyl)-1,3,5-triazine, diphenyliodoniumtetrafluoroborate, diphenyliodoniumhexafluorophosphate, 4,4'-di-t-butyldiphenyliodoniumtetrafluoroborate, 4-diethylaminophenylbenzenediazoniumhexafluorophosphate, benzoin, 2-hydroxy-2-methyl-1-phenylpropane-2-one, benzophenone, thioxanthone, 2,4,6-trimethylbenzoyldiphenylacyl phosphineoxide, triphenylbutylborate tetraethylammonium, and bis(η5-2,4-cyclopentadiene-1-yl)-bis[2,6-difluoro-3-(1H-pyrrole-1-yl)phenyl titanium]. These may be used alone or in combination of two or more. Further, a sensitizing dye to be described later may be used together taking into consideration the wavelength of the irradiation beam.

Further, preferred examples of the cation polymerization initiator may include, for example, 2,4,6-tris(trichloromethyl)-1,3,5-triazine, 2,4-bis(trichloromethyl)-6-(p-methoxyphenylvinyl)-1,3,5-triazine, diphenyliodoniumtetrafluoroborate, diphenyliodoniumhexafluorophosphate, 4,4'-di-t-butyldiphenyliodoniumtetrafluoroborate, 4-diethylaminophenylbenzenediazoniumhexafluorophosphate, triphenylbutylborate tetraethylammonium, and diphenyl-4-phenylthiophenylsulfoniumhexafluorophosphate.

The content of the photopolymerization initiator within the optical recording composition is preferably in the range of 0.01-5 percent by mass, and more preferably in the range of 1-3 percent by mass.

<Matrix formation component>

The recording layer of the optical recording medium contains a monomer responsible for recording or storage of data, and a polymer for retaining the photopolymerization initiator, which are generally referred to as a matrix. The matrix is employed for the purposes of enhancing coating property, film strength, and hologram recording property. The optical recording composition according to the present invention may contain a curable compound which is a matrix formation component. Examples of the curable compound include a thermosetting compound, and a photo-curable compound which employs a catalyst and is cured by light-irradiation. Of these compounds, the thermosetting compound is more preferable.

The thermosetting matrix contained in the recording layer is not limited to specific compounds, and depending on the purpose an appropriate compound may be selected, for example, from urethane resin formed from an isocyanate compound and an alcohol compound, an epoxy compound formed from an oxirane compound, a melamine compound, a formalin compound, and a polymer obtained by polymerizing an unsaturated acid ester compound such as (meth) acrylic acid and itaconic acid, and an amido compound. Of these compounds, a polyurethane matrix formed from an isocyanate compound and an alcohol compound is preferable, and a three-dimensional polyurethane matrix formed from a polyfunctional isocyanate and a polyfunctional alcohol is most preferable in terms of the recording storage stability.

Specific examples of the polyfunctional isocyanate and the polyfunctional alcohol, which can form the polyurethane matrix, will be shown below.

Specific examples of the polyfunctional isocyanate may include biscyclohexyl methanediisocyanate, hexamethylene diisocyanate, phenylene-1,3-diisocyanate, phenylene-1,4-diisocyanate, 1-methoxyphenylene-2,4-diisocyanate, 1-methylphenylene-2,4-diisocyanate, 2,4-thrylenediisocyanate, 2,6-thrylenediisocyanate, 1,3-xylylenediisocyanate, 1,4-xylylenediisocyanate, biphenylene-4,4'-diisocyanate, 3,3'-dimethoxybiphenylene-4,4'-diisocyanate, 3,3'-dimethylbiphenylene-4,4'-diisocyanate, diphenylmethane-2,4'-diisocyanate, diphenylmethane-4,4'-diisocyanate, 3,3'-dimethoxydiphenylmethane-4,4'-diisocyanate, 3,3'-dimethyldiphenylmethane-4,4'-diisocyanate, naphthylene-1,5-diisocyanate, cyclobutylene-1,3-diisocyanate, cyclopentylene-1,3-diisocyanate, cyclohexylene-1,3-diisocyanate, cyclohexylene-1,4-diisocyanate, 1-methylcyclohexylene-2,4-diisocyanate, 1-methylcyclohexylene-2,6-diisocyanate, 1-isocyanate-3,3,5-trimethyl-5-isocyanatemethylcyclohexane, cyclohexane-1,3-bis(methylisocyanate), cyclohexane-1,4-bis (methylisocyanate), isophoronediisocyanate, dicyclohexylmethane-2,4'-diisocyanate, dicyclohexylmethane-4,4'-diisocyanate, ethylenediisocyanate, tetramethylene-1,4-diisocyanate, hexamethylene-1,6-diisocyanate, dodecamethylene-1,12-diisocyanate, phenyl-1,3,5-triisocyanate, diphenylmethane-2,4,4'-triisocyanate, diphenylmethane-2,5,4'-triisocyanate, triphenylmethane-2,4',4"-triisocyanate, triphenylmethane-4,4',4"-triisocyanate, diphenylmethane-2,4,2',4'-tetraisocyanate, diphenylmethane-2,5,2',5'-tetraisocyanate, cyclohexane-1,3,5-triisocyanate, cyclohexane-1,3,5-tris(methylisocyanate), 3,5-dimethylcyclohexane-1,3,5-tris(methylisocyanate), 1,3,5-trimethylcyclohexane-1,3,5-tris(methylisocyanate), dicyclohexylmethane-2,4,2'-triisocyanate, and dicyclohexylmethane-2,4,4'-triisocyanatelysine diisocyanatemethylester, and also a prepolymer having isocyanates at both ends that can be prepared by a reaction between these organic isocyanate compounds of over stoichiometric quantities and polyfunctional compounds containing an active hydrogen. Of these, biscyclohexyl methanediisocyanate and hexamethylene diisocyanate are most preferable. These may be used alone or in combination of two or more.

The polyfunctional alcohol may be used alone or in combination with other polyfunctional alcohols. Examples of the polyfunctional alcohol may include glycols such as ethylene glycol, triethylene glycol, diethylene glycol, polyethylene glycol, propylene glycol, polypropylene glycol, and neopentyl glycol; diols such as butanediol, pentanediol, hexanediol, heptanediol, and tetramethylene glycol; bisphenols and compounds having these polyfunctional alcohols modified with polyethyleneoxy chains or polypropyleneoxy chains; glycerin, trimethylol propane, triols such as butanetriol, pentanetriol, hexanetriol, and decanetriol, and compounds having these polyfunctional alcohols modified with polyethyleneoxy chains or polypropyleneoxy chains.

The content of the matrix formation component within the optical recording composition is preferably in the range of 10-95 percent by mass, and more preferably in the range of 35-90 percent by mass. If the content is 10 percent by mass or higher, the optical recording composition will yield stable interference images, and if the content is 95 percent by mass or lower, desirable properties will be obtained in terms of diffraction efficiencies.

<Other components>

The optical recording composition may further contain a polymerization inhibitor or an antioxidant where necessary for the purpose of improving the preservation stability of the optical recording composition.

Examples of the polymerization inhibitor or the antioxidant may include hydroquinone, p-benzoquinone, hydroquinone monomethylether, 2,6-di-tert-butyl-p-cresol, 2,2'-methylenebis(4-methyl-6-tert-butylphenol), triphenylphosphite, trisnonyl phenylphosphite, phenothiazine, and N-isopropyl-N'-phenyl-p-phenylene diamine.

The additive amount of the polymerization inhibitor or the antioxidant is preferably not more than 3 percent by mass for the total mass of the recording monomers. If the additive amount exceeds 3 percent by mass, the polymerization speed delays or in some cases polymerization may not occur.

The optical recording composition may contain sensitizing dyes as required. The sensitizing dyes may be conventional compounds described in "Research Disclosure, vol. 200, December 1980, Item 20036" or "Sensitizer, pp. 160-163, Kodansha Ltd., ed. Katsumi Tokumaru and Shin Ohgawara, 1987."

Specific examples of the sensitizing dyes include 3-ketocoumarin compounds described in Japanese Laid-open Patent Publication No. S58-15603; thiopyrylium salts described in Japanese Laid-open Patent Publication No. S58-40302; naphthothiazole merocyanine compounds described in Japanese Patent Publication Nos. S59-28328 and S60-53300; and merocyanine compounds described in Japanese Patent Publication Nos. S61-9621 and S62-3842, and Japanese Laid-open Patent Publication Nos. S59-89303 and S60-60104.

Further, other sensitizing dyes may be used, which are described in "Functional Dye Chemistry, 1981, CMC Publishing Co., pp. 393-416" or "Color Material, 60 (4), 212-224 (1987)". Specific examples of these sensitizing dyes are cationic methine dyes, cationic carbonium dyes, cationic quinonimine dyes, cationic indoline dyes, and cationic styryl dyes.

Furthermore, the sensitizing dyes may include keto dyes such as coumarin dyes (including ketocoumarin and sulfocoumarin), merostyryl dyes, oxonol dyes, and hemioxonol dyes; non-keto dyes such as non-keto polymethine dyes, triarylmethane dyes, xanthen dyes, anthracene dyes, rhodamine dyes, acridine dyes, aniline dyes, and azo dyes; non-keto polymethine dyes such as azomethine dyes, cyanine dyes, carbocyanine dyes, dicarbocyanine dyes, tricarbocyanine dyes, hemicyanine dyes, and styryl dyes; and quinonimine dyes such as azine dyes, oxazin dyes, thiazin dyes, quinoline dyes, and thiazole dyes. The sensitizing dyes may be used alone or in combination of two or more.

The optical recording composition may contain a photothermal conversion material for the purpose of enhancing the sensitivity of the recording layer formed from the optical recording composition.

The photothermal conversion material may be properly selected without limitation depending on the intended performance or capability. For example, organic dyes are preferable considering the properties that they are conveniently added to the recording layer together with the photopolymers and that no incident light scatters. Infrared light absorbing dyes are also preferable considering the property that they do not absorb and scatter the recording beam from the light source.

The infrared light absorbing dyes may be properly selected without limitation depending on the application,

and preferable examples thereof include cationic dyes, complex-salt forming dyes, and quinone neutral dyes. The absorption peak wavelength of the infrared light absorbing dyes is preferably in the range of 600-1,000 nm, and most preferably in the range of 700-900 nm.

The content of the infrared light absorbing dye may be determined depending on the absorbance of light having the wavelength in the infrared region at which the maximum absorbance is shown. The absorbance is preferably in the range of 0.1-2.5, and more preferably in the range of 0.2-2.0.

The optical recording composition may further contain a component that can diffuse into the direction opposite to that of the condensation of the polymerizable component or a compound having an acid cleavage structure, where necessary, in order to reduce the volume change upon polymerization.

The aforementioned optical recording composition is applicable to various holographic recording compositions capable of recording information by means of irradiation with light that includes the information. In particular, the optical recording composition is suitable as a composition for volume holographic recording.

If the optical recording composition has sufficiently low viscosities, the recording layer may be formed by casting. On the other hand, if the viscosity of the optical recording composition is too high to perform casting, the recording layer material is mounted on the lower substrate using a dispenser, followed by pressing and spreading the recording layer entirely with the upper substrate to form a recording medium.

Although the present invention has been described in detail with reference to the above preferred embodiments, it is to be understood that the present invention is not limited to these specific embodiments and various changes and modifications may be made without departing from the scope of the appended claims.

For example, the optical system is not limited to one disclosed in the above embodiment. The optical system may be partly modified or other devices may be added where necessary. Further, as an example of the information input device, the DMD chip 24 may be replaced with a spatial light modulator (SLM). The spatial light modulator includes a plurality of elements arranged in a matrix manner, and is capable of changing the light transmissivity. The spatial light modulator displays digital data to be input as a two-dimensional grid pattern so that On-Off information, for example, consisting of grid points indicating "1" which allow transmission of light and grid points indicating "0" which do not allow transmission of light can be arranged in the grid pattern.

In the above preferred embodiment, the ring-shaped area of the reference beam RB has a random dot pattern. However, as shown in FIGS. 8A and 8B, the reference beam RB may have a check pattern, which is formed by alternately changing On and Off of the two-dimensionally arranged elements.

Further, in the above preferred embodiment, the multiple recording is carried out using a shift multiplexing method, in which the recording position is gradually shifted in the holographic recording medium 10. However, other known methods such as an angle multiplexing method may be used, in which a plural times of recording are performed on the same area within the recording position of the holographic recording medium 10 by slightly changing the recording angle of the interference pattern S.

## EXAMPLES

Examples will be shown below for proving the effects of the present invention.

In these examples, (1) two different recording materials were prepared for the recording layer, and (2) the ring-shaped area of the reference beam at the time of recording information or the ring-shaped area of the readout beam at the time of reading out the information was changed to provide two rings with different widths. While recording and reading out the information, a bit error rate (BER) measurement was carried out at the time of reading out the information.

### (1) Materials used for Recording layer

Two different materials, such as Optical recording material 1 and Optical recording material 2 as described below, were prepared as optical recording materials used for recording information. Optical recording material 1 is a material of which the average refractive index does not lower through irradiation with light. Optical recording material 2 is a material of which the average refractive index lowers through irradiation with light.

### [Optical recording material 1]

Optical recording material 1 was prepared by mixing the following materials:

| | |
|---|---|
| Ogsol ™ EA-0200 (manufactured by Osaka Gas Chemicals Co., Ltd.) | 0.67 g |
| IRGACURE ™ 784 (manufactured by Ciba Specialty Chemicals) | 0.096 g |
| Takenate ™ 700 (manufactured by Mitsui Chemicals Polyurethanes, Inc.) | 2.29 g |

(continued)

| | |
|---|---|
| Actcall ™ MN-300 (manufactured by Mitsui Chemicals Polyurethanes, Inc.) | 1.89 g |
| Polyethylene glycol 400 (Manufactured by Tokyo Chemical Industry Co., Ltd.) | 1.67 g |
| U-CAT ™ 102 (manufactured by San-Apro Limited.) | 0.07 g |

[Optical recording material 2]

Optical recording material 1 was prepared by mixing the following materials:

| | |
|---|---|
| Monomer shown by the following general formula | 1.09 g |

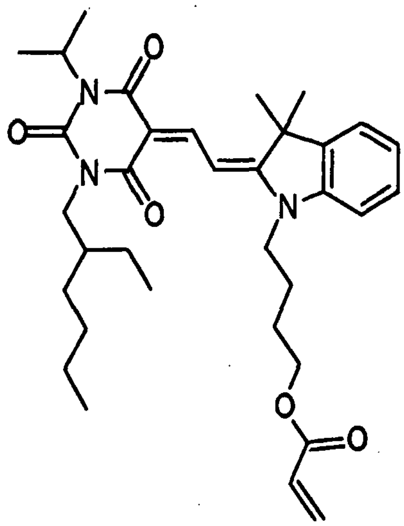

| | |
|---|---|
| IRGACURE ™ 784 (manufactured by Ciba Specialty Chemicals) | 0.15 g |
| Takenate ™ 700 (manufactured by Mitsui Chemicals Polyurethanes, Inc.) | 3.57 g |
| Actcall ™ MN-300 (manufactured by Mitsui Chemicals Polyurethanes, Inc.) | 2.95 g |
| Polyethylene glycol 400 (Manufactured by Tokyo Chemical Industry Co., Ltd.) | 2.61 g |
| U-CAT ™ 102 (manufactured by San-Apro Limited.) | 1.09 g |

(2) Ring width of Reference beam or Readout beam

As a reference beam at the time of recording or a readout beam at the time reading, two different ring-shaped beams were prepared as W8 and W10 shown in TABLE 1. The size of each ring (inner diameter and outer diameter) is shown when the maximum diameter of the signal beam is assumed to be 1.

TABLE 1

| SHAPE OF RING | INNER DIAMETER | OUTER DIAMETER |
|---|---|---|
| W8 | 1.097 | 1.415 |
| W10 | 1.076 | 1.460 |

In the following examples and comparative examples, a BER measurement was carried out by changing conditions for (1) Materials for the recording layer and (2) Ring width of the reference beam or the readout beam. The measurement results were shown in TABLE 2. Measurement conditions other than the following conditions were common between each of the examples and comparative examples. These conditions were:

The recording position was seven-by-seven matrix-shaped area as shown in FIG. 9, and a multiple recording was carried out by gradually shifting the recording position in a spiral manner. Of the plurality of recording positions for the multiple recording, BER was measured at the first recording position where recording of the information was carried out at the first time.

| | |
|---|---|
| Recording and reading apparatus: | Pulstec SHOT1000 |
| Energy of Laser beam at the time of recording: | 4 mJ/cm$^2$ |
| Energy of Laser beam at the time of reading: | Adjusted to have the lowest BER |

TABLE 2

| | Material for Recording layer | Shape of Reference beam | Shape of Readout beam | BER |
|---|---|---|---|---|
| Comp. Example 1-1 | Optical recording material 1 | W8 | W8 | $3\times10^{-1}$ |
| Comp. Example 1-2 | Optical recording material 1 | W10 | W10 | $3\times10^{-1}$ |
| Example 1 | Optical recording material 1 | W8 | W10 | $2\times10^{-1}$ |
| Comp. Example 2-1 | Optical recording material 2 | W8 | W8 | $3\times10^{-2}$ |
| Comp. Example 2-2 | Optical recording material 2 | W10 | W10 | $7\times10^{-2}$ |
| Example 2 | Optical recording material 2 | W8 | W10 | $2\times10^{-2}$ |

In TABLE 2, the measurement results were put together for the materials used for the recording layer. As seen in TABLE 2, Optical recording material 1, that is, a material of which the average refractive index does not lower through irradiation with light was used in Example 1. In this example, the ring-shaped area of the readout beam was enlarged in directions both inward of its inner diameter and outward of its outer diameter when compared with the reference beam. It was proved that BER measured in Example 1 was two-thirds (2/3) of those measured in Comparative Examples 1-1 and 1-2.

As to Example 2 and Comparative Examples 2-1 and 2-2 in which Optical recording material 2, that is, a material of which the average refractive index lowers was used, BERs were decreased as a whole when compared with the cases such as Example 1 and Comparative Examples 1-1 and 1-2 in which Optical recording material 1 were used. Particularly, in Example 2 in which the ring-shaped area of the readout beam was enlarged in directions both inward of its inner diameter and outward of its outer diameter when compared with the reference beam, BER measured was two-thirds (2/3) of that measured in Comparative Example 2-1, and two-seventh (2/7) of that measured in Comparative Example 2-2, respectively.

As described above, BER was decreased by enlarging the ring-shaped area of the readout beam in directions both inward of its inner diameter and outward of its outer diameter when compared with the ring-shaped area of the reference beam. In other words, it was proved that the signal-to-noise ratio of the reconstructed signal beam can be improved in a favorable manner.

## Claims

**1.** A method of holographically recording and reading information comprising:

recording information in a holographic recording medium by irradiating the holographic recording medium with a laser beam, wherein a transverse sectional area of the laser beam is divided into a central area for a signal beam and a ring-shaped area for a reference beam, the ring-shaped area surrounding the central area with a predetermined gap; and

reading out the information from the holographic recording medium by irradiating the holographic recording medium with a ring-shaped readout beam having an area greater than that of the reference beam in at least one of directions inward of an inner diameter thereof and outward of an outer diameter thereof.

2. The method according to claim 1, wherein a width of the gap is equal to or greater than 2% of the maximum diameter of the signal beam.

3. The method according to claim 1 or claim 2, wherein a material used for a recording layer of the holographic recording medium has a property such that an average refractive index lowers as irradiation with the signal beam and the reference beam continues.

4. The method according to any one of claims 1-3, wherein the readout beam has a random dot pattern or a check pattern in its transverse section.

5. The method according to any one of claims 1-4, wherein a plural number of recordings are performed in a superposed manner at an area of the holographic recording medium to record information in the holographic recording medium, and wherein energy of the signal beam is gradually increased at this superposed position as the number of recordings increases, and the energy of the signal beam used at a last-time recording is more than one to ten times greater than that used at a first time recording.

6. A holographic recording and reading apparatus, which records information in a recording layer of a holographic recording medium by irradiating the holographic recording medium with a signal beam and a reference beam, and reads out the information from the holographic recording medium by irradiating the holographic recording medium with a readout beam, the apparatus comprising:

a laser device configured to emit a laser beam;
an optical system configured to condense the laser beam in the recording layer;
an information input device configured to form a pattern of light as information in a section of the laser beam; and
a controller configured to control the laser device and the information input device,
wherein at a time of recording information in the holographic recording medium, the controller causes the information input device to form a pattern of light in a transverse sectional area of the laser beam such that the pattern of light is divided into a central area for a signal beam and a ring-shaped area for a reference beam, the ring-shaped area surrounding the central area with a predetermined gap, and
wherein at a time of reading out the information from the holographic recording medium, the controller causes the information input device to form a pattern of light in a transverse sectional area of the laser beam such that the pattern of light consists of a ring-shaped readout beam having an area greater than that of the reference beam in at least one of directions inward of an inner diameter thereof and outward of an outer diameter thereof.

7. The holographic recording and reading apparatus according to claim 6, wherein a width of the gap is equal to or greater than 2% of the maximum diameter of the signal beam.

8. The holographic recording and reading apparatus according to claim 6 or claim 7, wherein the controller causes the information input device to form the pattern of light for the readout beam as a random dot pattern or a check pattern.

9. The holographic recording and reading apparatus according to any one of claims 6-8, wherein the controller controls the laser device such that a plural number of recordings are performed in a superposed manner at an area of the holographic recording medium to record information in the holographic recording medium, that energy of the signal beam is gradually increased at this superposed position as the number of recordings increases, and that the energy of the signal beam used at a last-time recording is more than one to ten times greater than that used at a first time recording.

FIG. 1

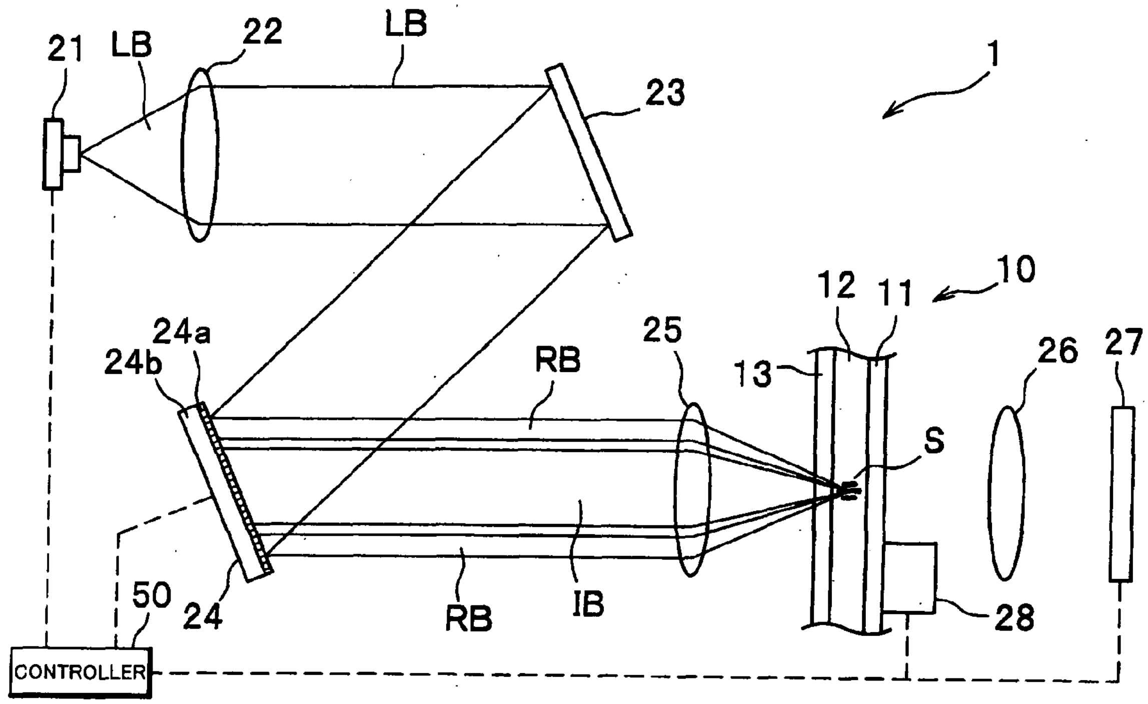
21
LB
22
LB
23
1
10
12
11
24a
24b
25
RB
13
26
27
S
50
24
RB
IB
28
CONTROLLER

FIG. 2

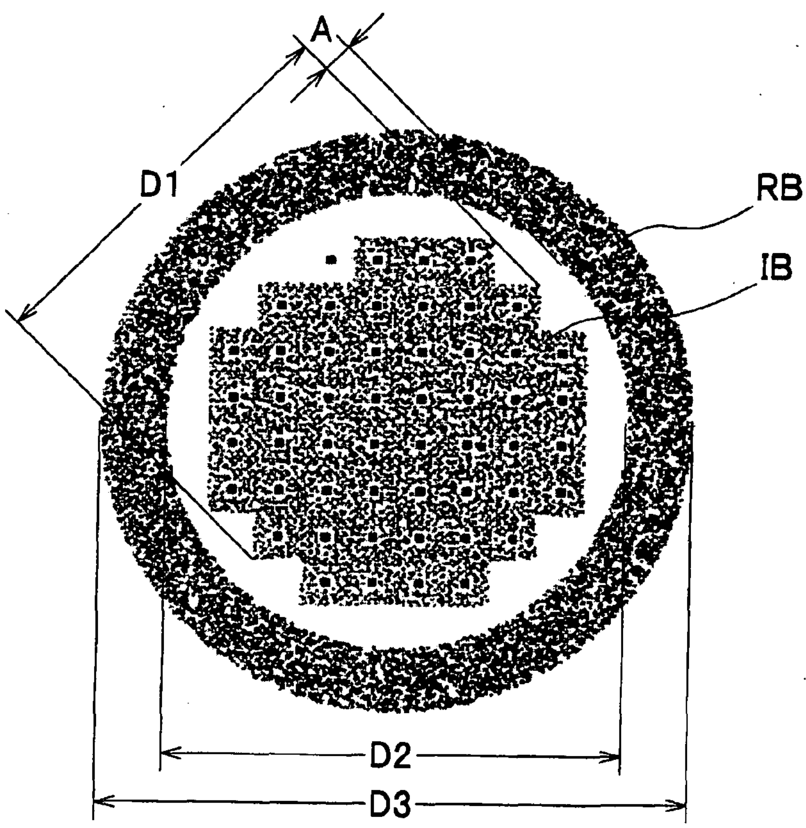
A
D1
RB
IB
D2
D3

FIG. 3

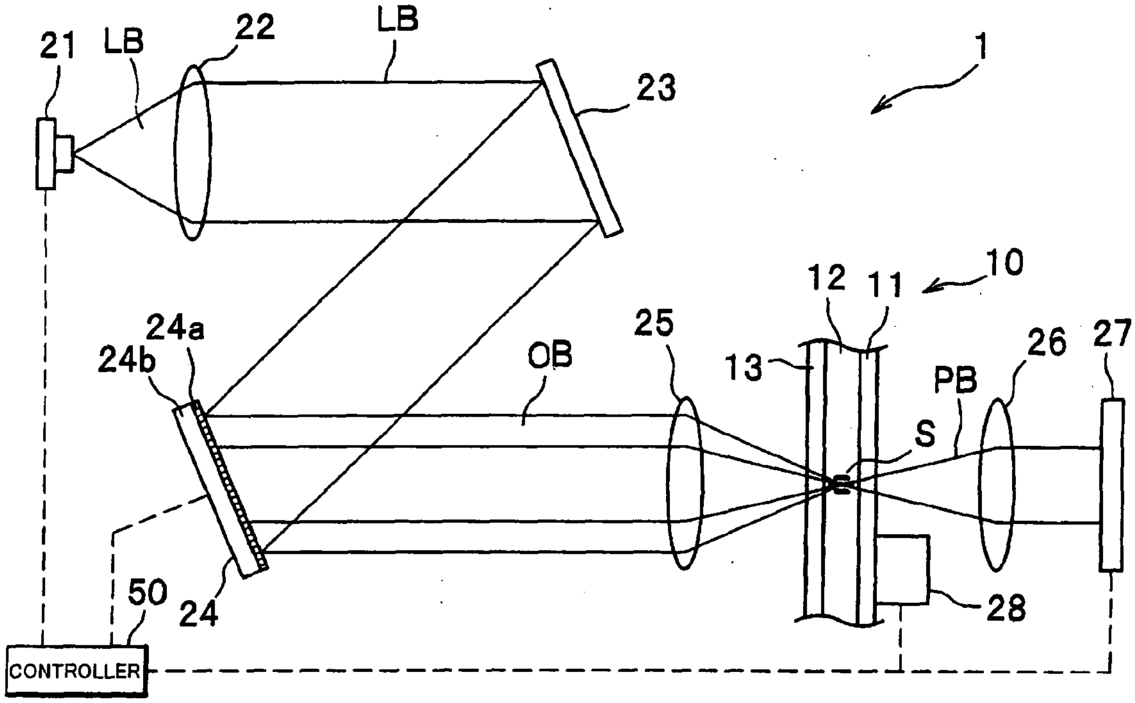
21
LB
22
LB
23
1
10
12
11
24a
24b
25
OB
13
26
27
PB
S
50
24
28
CONTROLLER

FIG. 4

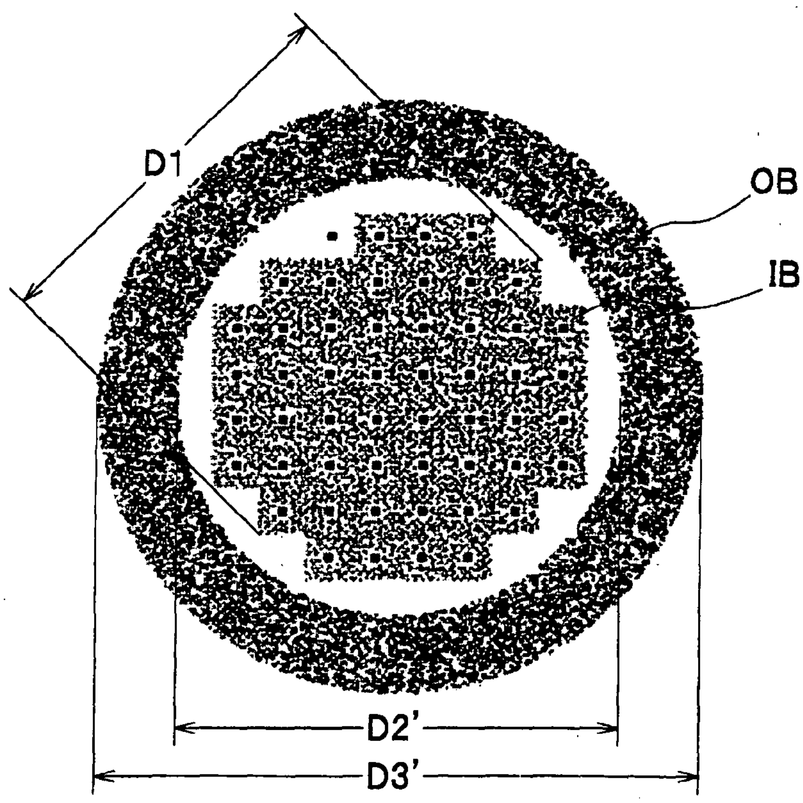
D1
OB
IB
D2'
D3'

FIG. 5

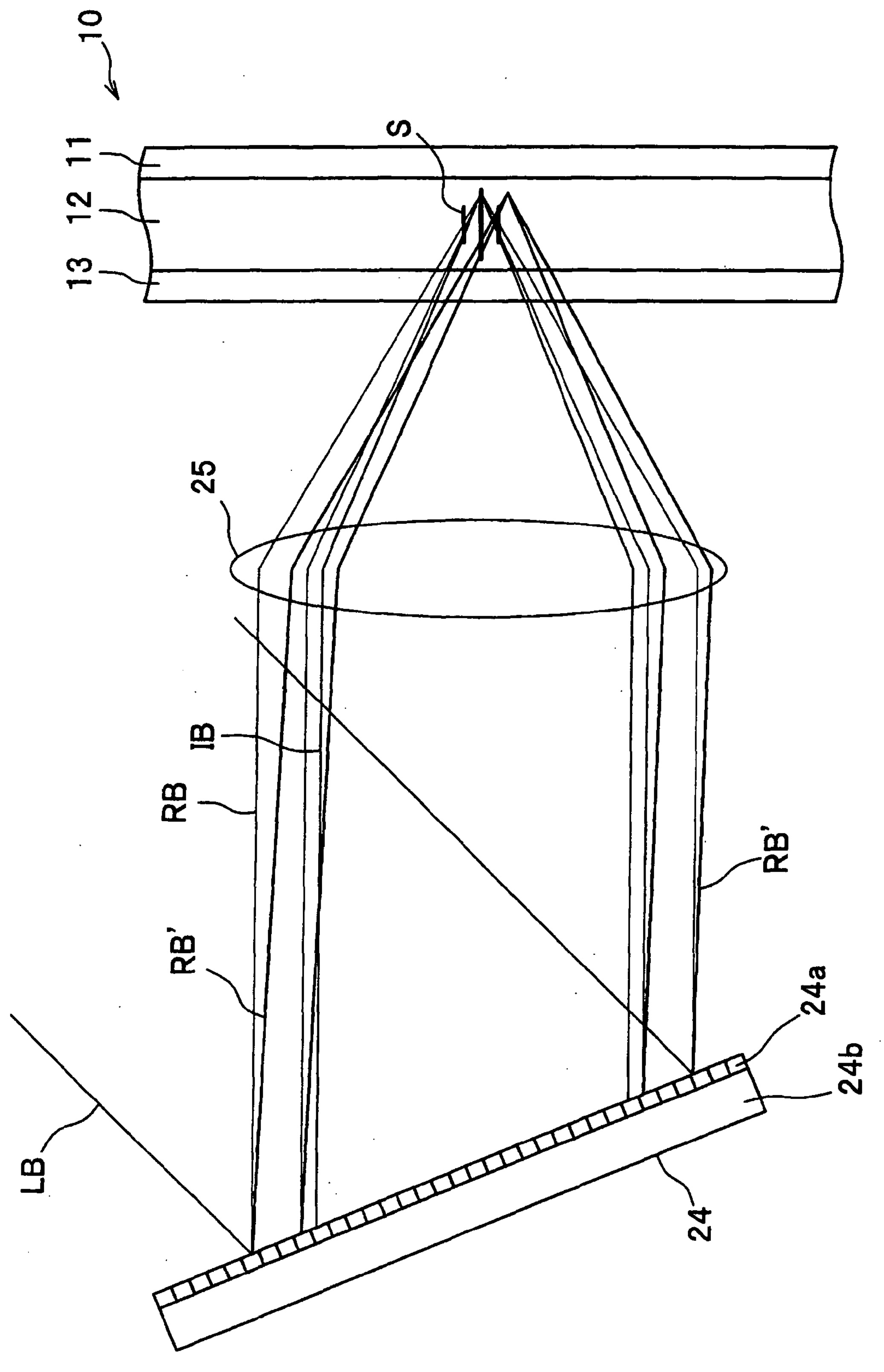

FIG. 6A

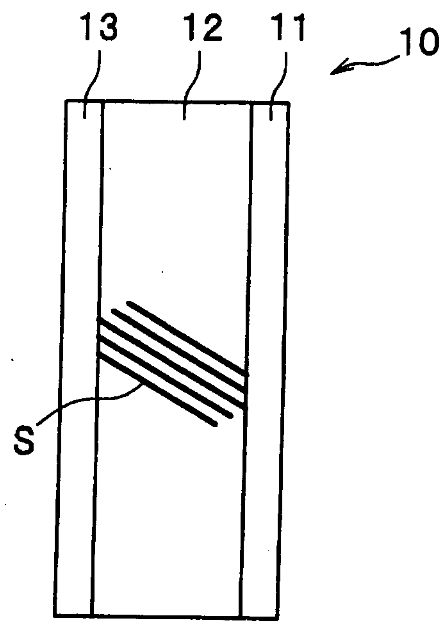


FIG. 6B

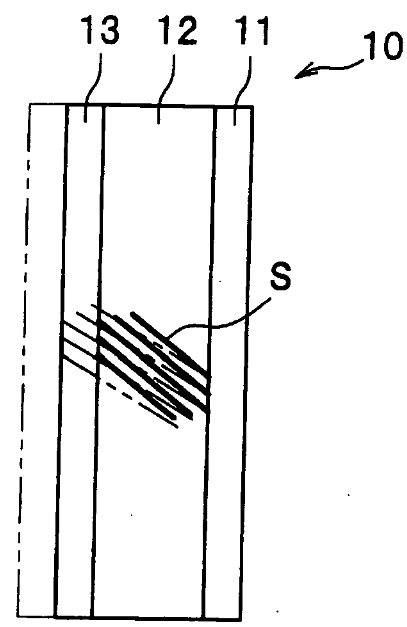

FIG. 7

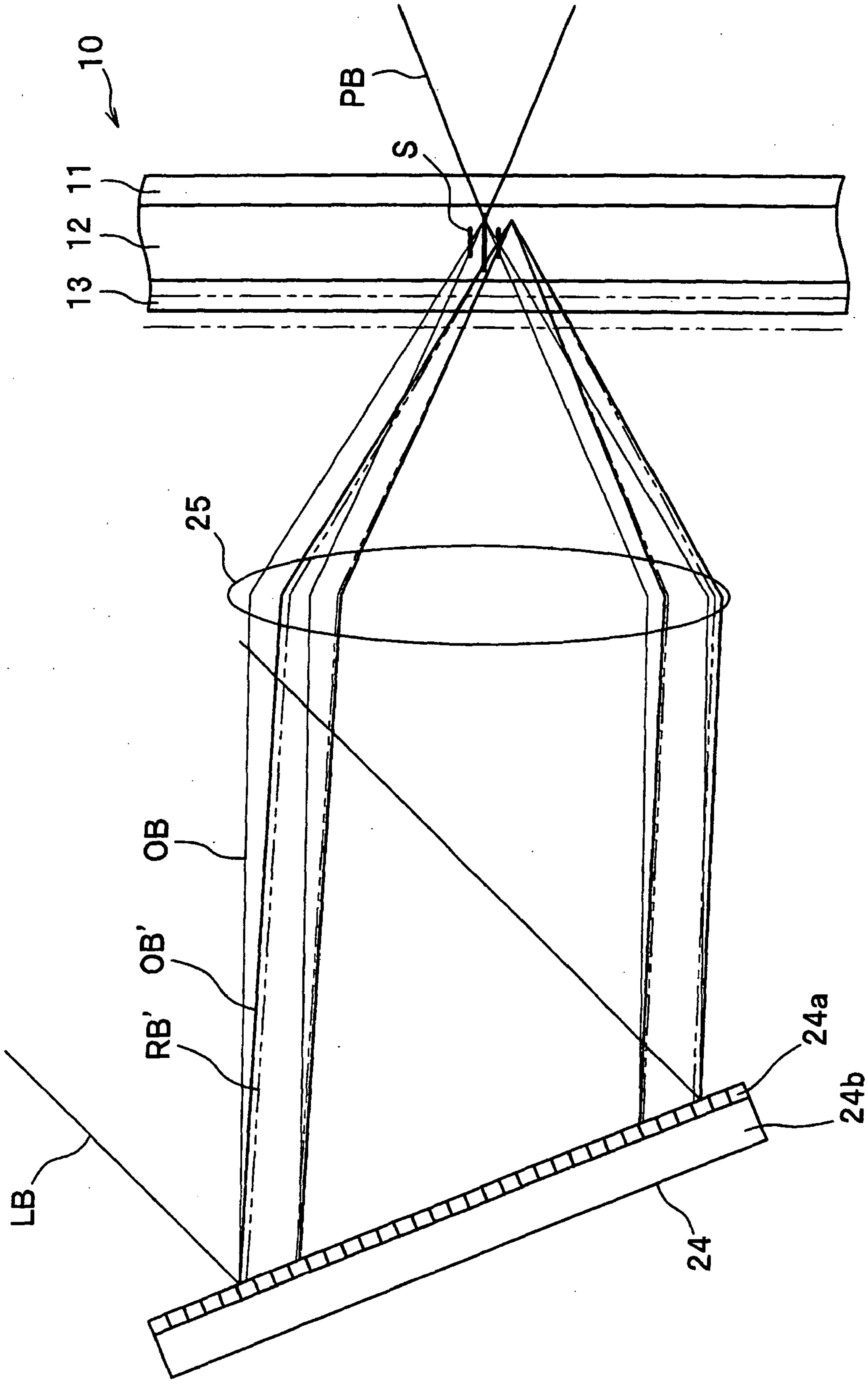

FIG. 8A

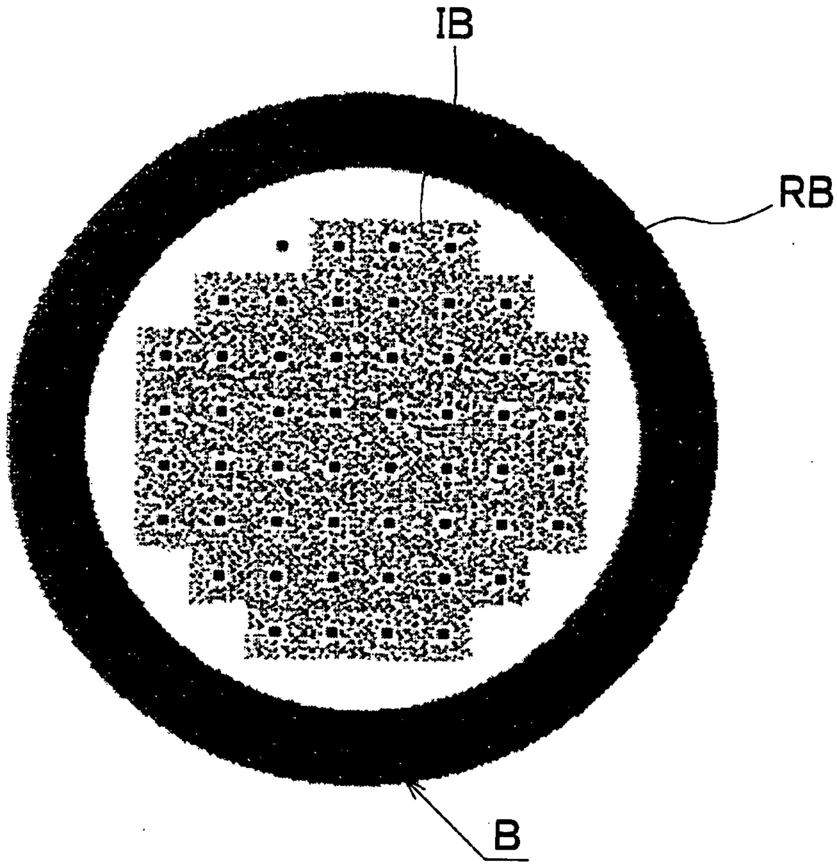


FIG. 8B

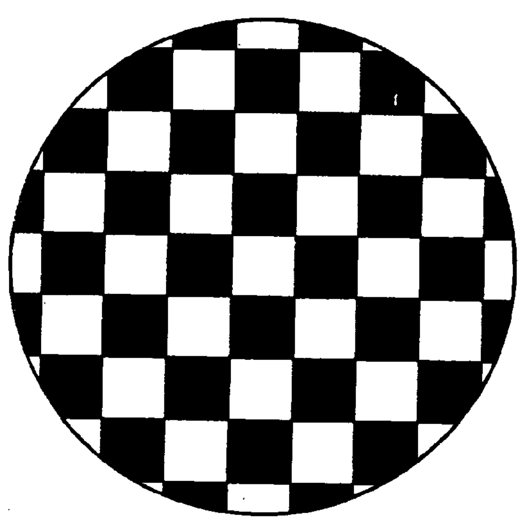

FIG. 9

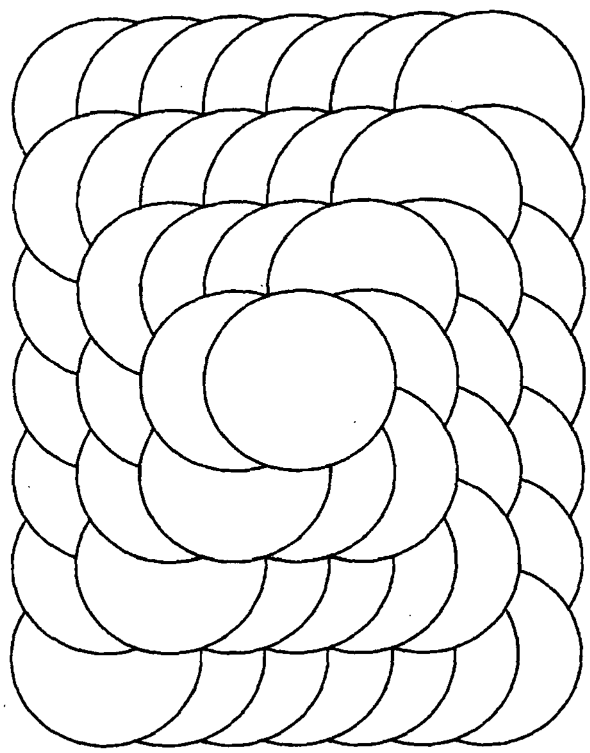

Europäisches Patentamt
European Patent Office
Office européen des brevets

# PARTIAL EUROPEAN SEARCH REPORT

which under Rule 63 of the European Patent Convention shall be considered, for the purposes of subsequent proceedings, as the European search report

Application Number
EP 08 01 8183

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| X | HORIMAI H ET AL: "COLLINEAR TECHNOLOGY FOR A HOLOGRAPHIC VERSATILE DISK" APPLIED OPTICS, OSA, OPTICAL SOCIETY OF AMERICA, WASHINGTON, DC, vol. 45, no. 5, 10 February 2006 (2006-02-10), pages 910-914, XP001239183 ISSN: 0003-6935 | 1,2,4, 6-8 | INV. G11B7/125 G11B7/135 G11B7/007 ADD. G11B7/08 |
| Y | * Section 2 * * Last paragraph of section 3 * * figure 2 * ----- | 5,9 | |
| A | SHIMURA T ET AL: "ANALYSIS OF A COLLINEAR HOLOGRAPHIC STORAGE SYSTEM: INTRODUCTION OF PIXEL SPREAD FUNCTION" OPTICS LETTERS, OSA, OPTICAL SOCIETY OF AMERICA, WASHINGTON, DC, US, vol. 31, no. 9, 1 May 2006 (2006-05-01), pages 1208-1210, XP001242612 ISSN: 0146-9592 * figures 2,3 * * page 1210, paragraphs 2,3 * ----- | 4,8 | |
| | -/-- | | |

TECHNICAL FIELDS SEARCHED (IPC)

G11B

## INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

3

| Place of search | Date of completion of the search | Examiner |
| --- | --- | --- |
| The Hague | 18 February 2009 | Tanguy Michotte |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04E07)

Europäisches Patentamt
European Patent Office
Office européen des brevets

# PARTIAL EUROPEAN SEARCH REPORT

Application Number
EP 08 01 8183

| DOCUMENTS CONSIDERED TO BE RELEVANT | | | CLASSIFICATION OF THE APPLICATION (IPC) |
|---|---|---|---|
| Category | Citation of document with indication, where appropriate, of relevant passages | Relevant to claim | |
| Y | US 2007/183009 A1 (TSUKAGOSHI TAKUYA [JP] ET AL) 9 August 2007 (2007-08-09)<br>* paragraphs [0011], [0039] - [0042] *<br>* paragraphs [0052], [0053] *<br>----- | 5,9 | |
| A | SHIGEYUKI BABA ET AL: "Inter-frame Image Processing Method for Recovering Holographic Images"<br>JAPANESE JOURNAL OF APPLIED PHYSICS, JAPAN SOCIETY OF APPLIED PHYSICS, TOKYO,JP,<br>vol. 45, no. 2b,<br>1 January 2006 (2006-01-01), pages 1258-1265, XP007907141<br>ISSN: 0021-4922<br>* Sections 1, 4 and 7 *<br>----- | 1,2,4, 6-8 | TECHNICAL FIELDS SEARCHED (IPC) |
| A | GALLO AND C M VERBER J T: "Model for the effects of material shrinkage on volume holograms"<br>APPLIED OPTICS, OSA, OPTICAL SOCIETY OF AMERICA, WASHINGTON, DC,<br>vol. 33, no. 29,<br>10 October 1994 (1994-10-10), pages 6797-6804, XP007907142<br>ISSN: 0003-6935<br>* the whole document *<br>----- | 1,2,4, 6-8 | |
| A | VILKOMERSON AND D BOSTWICK D H R: "Some Effects of Emulsion Shrinkage on a Hologram's Image Space"<br>APPLIED OPTICS, OSA, OPTICAL SOCIETY OF AMERICA, WASHINGTON, DC,<br>vol. 6, no. 7, 1 July 1967 (1967-07-01), pages 1270-1273, XP007907143<br>ISSN: 0003-6935<br>* the whole document *<br>-----<br>-/-- | 1,2,4, 6-8 | |

3

EPO FORM 1503 03.82 (P04C10)

Europäisches Patentamt
European Patent Office
Office européen des brevets

# PARTIAL EUROPEAN SEARCH REPORT

Application Number
EP 08 01 8183

| DOCUMENTS CONSIDERED TO BE RELEVANT | | | CLASSIFICATION OF THE APPLICATION (IPC) |
|---|---|---|---|
| Category | Citation of document with indication, where appropriate, of relevant passages | Relevant to claim | |
| A | ORLOV S S ET AL: "High-transfer-rate high-capacity holographic disk dat-storage system" APPLIED OPTICS, OSA, OPTICAL SOCIETY OF AMERICA, WASHINGTON, DC, vol. 43, no. 25, 1 September 2004 (2004-09-01), pages 4902-4914, XP002339635 ISSN: 0003-6935 * Sections 2B, 2D * * Figures 11, 12, 14 and comments * ----- | 5,9 | |
| P,A | ORTUNO ET AL: "Hologram multiplexing in acrylamide hydrophilic photopolymers" OPTICS COMMUNICATIONS, NORTH-HOLLAND PUBLISHING CO. AMSTERDAM, NL, vol. 281, no. 6, 26 November 2007 (2007-11-26), pages 1354-1357, XP022442861 ISSN: 0030-4018 * the whole document * ----- | 5,9 | TECHNICAL FIELDS SEARCHED (IPC) |

3

EPO FORM 1503 03.82 (P04C10)

Europäisches Patentamt
European Patent Office
Office européen des brevets

**INCOMPLETE SEARCH SHEET C**

Application Number
EP 08 01 8183

Claim(s) searched completely:
1,2, 4-9

Claim(s) not searched:
3

Reason for the limitation of the search:

The addtional features of claim 3 relate to a recording medium suitable for applying the recording method of claim 1, and not to method features, which renders the category of claim 3 unclear.

A priori, a new medium claim including the features of claim 3 could be introduced when entering the examination phase. However, such a medium would solve a well known problem, namely the reduction of the effects of the shrinkage of the recording medium, by using a solution that does not share any special technical feature with the method and the apparatus of claims 1, 2 and 4-9. Such a medium claim would therefore be non-unitary with the method and apparatus claimed in the aforementionned claims, which is not allowed.

Hence, with regards to the future prosecution of the application, it would not be meaningfull to search the subject-matter of claim 3, which has therefore be excluded of the present search.

It has been noted that the applicant has claimed the corresponding subject-matter in another european patent application.

## ANNEX TO THE EUROPEAN SEARCH REPORT ON EUROPEAN PATENT APPLICATION NO. EP 08 01 8183

This annex lists the patent family members relating to the patent documents cited in the above-mentioned European search report.
The members are as contained in the European Patent Office EDP file on
The European Patent Office is in no way liable for these particulars which are merely given for the purpose of information.

18-02-2009

| Patent document cited in search report | Publication date | Patent family member(s) | Publication date |
|---|---|---|---|
| US 2007183009 A1 | 09-08-2007 | JP 2005189748 A | 14-07-2005 |
| | | WO 2005066724 A1 | 21-07-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007119731 A
- JP 2005099751 A
- JP 2005099753 A
- JP 2005017730 A
- JP 2005017354 A
- JP 2005115361 A
- JP 2005309359 A
- JP S5815603 B
- JP S5840302 B
- JP S5928328 B
- JP S6053300 B
- JP S619621 B
- JP S623842 B
- JP S5989303 B
- JP S6060104 B


### Non-patent literature cited in the description


- Collinear recording technology. *Nikkei Electronics - Nikkei BP,* 17 January 2005
- **SINYA OGAWARA.** Shikiso Handobukku. Kodansha, 1986
- **SHINYA OGAWARA.** Kinosei Shikiso no Kagaku. CMC, 1981
- **TADASABURO IKEMORI.** Tokushu Kino Zairyo. CMC, 1986
- *Research Disclosure,* December 1980, vol. 200
- Sensitizer. Kodansha Ltd, 1987, 160-163
- Functional Dye Chemistry. CMC Publishing Co, 1981, 393-416
- *Color Material,* 1987, vol. 60 (4), 212-224